# EUROPEAN PATENT SPECIFICATION

(11) **EP 0 904 620 B1**
(45) Date of publication and mention of the grant of the patent: **26.02.2003**
(21) Application number: 97930049.8
(22) Date of filing: 13.06.1997
(51) Int. Cl.: H02J 3/14, G06F 17/60

(54) **REAL-TIME PRICING CONTROL SYSTEM AND METHODS REGARDING SAME**
ECHTZEIT ENERGIEPREIS-STEUERSYSTEM UND DARAUF ABGESTIMMTE VERFAHREN
SYSTEME DE CONTROLE DE TARIFICATION EN TEMPS REEL ET PROCEDE RELATIF AUDIT SYSTEME

(30) Priority: 13.06.1996 US 663559
(43) Date of publication of application: 31.03.1999
(73) Proprietor: Honeywell Inc., Minneapolis Minnesota 55440-0524 (US)
(72) Inventor: NOMURA, John, M., Minneapolis, MN 55409 (US); CORDES, Eva, R., Minneapolis, MN 55409 (US); DAMANIA, Bhavesh, S., Brooklyn Park, MN 55444 (US); WHITE, Samuel, P., Minneapolis, MN 55409 (US); HILL, Byron, K., Brooklyn Park, MN 55443 (US); RICHARDSON, Rose, Mae, M., Roseville, MN 55113 (US); SOKEN, Nelson, H., Shoreview, MN 55126 (US)
(74) Representative: Powell, Timothy John
(86) International application number: US9710433
(87) International publication number: WO97048161

(56) References cited:
- US-A- 5 237 507
- US-A- 5 289 362
- US-A- 5 598 349

## Description

### Field of the Invention

The present invention relates to real-time pricing control systems. More particularly, the present invention relates to real-time pricing control systems, interfaces for use therewith, and methods for use in achieving energy savings.

### Background of the Invention

Various building management systems are currently available. Such building management systems allow for automated or operator-controlled operation of the many and various points in the building management system. For example, such points may consist of devices for control of lighting, ventilation, and temperature precisely when and where the user wants. Such numerous and various points may be located at multiple sites all controlled by the building management system.

Also, as are known, real-time pricing systems utilized with such building management systems are capable of reducing the energy demand requirements for the many and various points controlled by that building management system during times of high utility prices. Such real-time pricing systems, used in conjunction with building management systems, are capable of receiving daily utility pricing from utility suppliers and utilizing these real-time rates in performing an analysis of cost avoiding strategies that are defined in order to effectively and efficiently control the environment served by the building management system.

Such real-time pricing control systems are presently capable of performing various functions. For example, if real-time rates do not arrive from the utility supplier in time for their use, default rates are used. Further, such real-time pricing control systems operate automatically in performing analysis in determining control strategies for the various points controlled by the building management system and send the necessary commands to controllers for execution thereby.

As an illustration, real-time pricing software running with a building management system will at a predetermined frequency, for example, every fifteen minutes, thirty minutes, or each hour, determine which pieces of equipment or devices are sent on and off commands. Each piece of equipment may have a set of conditions that should be satisfied before that point can be commanded by the real-time pricing control software as opposed to being controlled in some other fashion, such as operator override. Such conditions for each piece of controlled equipment can consist of real-time pricing utility rate limits, occupancy schedules, other related point conditions (such as whether a point is on/off). Depending upon whether the list of criteria is satisfied, an appropriate point would be commanded and a controller having control of the particular point would be addressed.

In such conventional real-time pricing control systems, variable or analog devices which are being controlled by the building management system, are further controlled by the real-time pricing control system using strategies that involve two controlled states, for example, normal and setback. In control of such analog points, the control algorithm compares the current real-time pricing control rate to a previously-defined ceiling rate. If the price is below the ceiling, the analog point is commanded to run at a speed which is determined in the normal fashion. On the other hand, if the utility price is at or above the ceiling, the analog point is commanded to run its speed, which is reduced or setback, by an arbitrary amount In such examples, the system is actually sending on and off commands to the controllers that control such analog points, and the controllers then perform the actual normal or setback control of the analog point itself.

Although real-time pricing control systems are currently available, such systems do not address various requirements for such systems adequately. For example, the use of default rates in such real-time pricing systems is also not adequately addressed. Further, for example, such systems do not address the fact that an alternative building management system may be swapped for a previously-used building management system, or that other portions of the system may wish to be interchanged with other alternate components for the system. Further, such currently available systems do not address the fact that various points controlled by the building management system may, or are capable of being, controlled in a vary similar manner. Likewise, such systems do not adequately address control of multistage digital and analog devices with energy savings determinations being available for such devices. In addition, although such real-time pricing control systems have the capability of generating various reports, such reports do not provide sufficiently appropriate information to monitor the operation of the real-time pricing control system and provide information to the user in order to accomplish optimum energy savings.

US-A-5,289,632 relates to a control system for controlling a HVAC climate control utilising real time price tier data to achieve economical temperature regulation as specified in the precharacterising portion of claim 26.

### Summary of Invention

The present invention provides real time pricing control method as defined in Claim 1 hereinafter.

Preferably, the method includes the features of any one or more of dependent Claims 2 to 25.

The present invention provides a real time pricing control system as defined in Claim 26.

The system may include the features of any one or more of dependent Claims 27 to 54.

The present invention addresses such aspects for real-time pricing control systems providing improved energy savings. In addition, the present invention overcomes other inadequacies of conventional real-time pricing systems and methods as will be readily apparent to one skilled in the art from the description of the present invention below.

A real time pricing control method for use in controlling one or more points at one or more sites in accordance with the present invention includes receiving real time utility rate data and defining at least one point component. The at least one point component includes one or more points. A control strategy is specified for each point component based on at least two utility rate ranges and a command for each point of the at least one point component is generated as a function of the control strategy specified and the real time utility rate data.

In other embodiments of the method, the defining step includes grouping more than one point to form the point component (i.e., points of similar type), and/or the points of the at least one point component include one of digital points, multistage digital points, and analog points.

In another embodiment, the method may include monitoring one or more points.

Further, in additional embodiments, the specifying step includes defining a plurality of utility rate ranges for the control strategy and specifying a point command for each of the defined plurality of utility rate ranges. In addition, the specifying step may include the step of defining additional criteria for the control strategy.

A real time pricing control system for controlling one or more points for one or more sites as a function of real time utility rate data from a utility service provider in accordance with the present invention includes a utility rate storage component. The system further includes control means for generating commands for controlling the one or more points as a function of the real time utility rate data. The control means includes means for requesting utility rate data from the utility rate storage component. A utility rate interface receives real time utility rate data from the utility service provider. The utility rate interface includes means for depositing such utility rate data in the utility rates storage component and means for providing utility rate data to the control means upon request thereby.

In another embodiment of the system, the control means includes means for importing the one or more points for the one or more sites from an associated management system. The system further includes a communications interface for communicating with the associated management system.

Another real time pricing control system for controlling one or more points for one or more sites as a function of real time utility rate data from a utility service provider includes control means for generating commands for controlling the one or more points as a function of real time utility rate data. The control means includes means for importing the one or more points for the one or more sites from an associated management system. The system further includes a communications interface for communicating with the associated management system. The communications interface includes means for receiving a plurality of service requests from the control means for sending to or requesting information from the associated management system, means for executing each of the service requests, and means for providing results from the execution of each service request to the control means.

In another real time pricing control method for use in controlling one or more points at one or more sites, the method includes receiving real time utility rate data. At least one point component including one or more points is defined. The one or more points of the point component include one of digital, multistage digital, or analog points. A control strategy is specified for the at least one point component based on at least two utility rate ranges and a command for each point of the at least one point component is generated as a function of the control strategy specified.

In one embodiment of the method, the specifying step includes defining an energy savings level for the point component. The energy savings is calculated for each point of the point component each time the control strategy for each point is utilized to generate a point command.

In another real time pricing control system for controlling one or more points at one or more sites in accordance with the present invention, the system includes control means for generating commands for one or more points of at least one point component as a function of a specified control strategy for each of the at least one point component and current real time utility rate data. The system also includes user interface means for allowing a user to define the control strategy. The user interface includes means for allowing the user to define a plurality of utility rate ranges for the control strategy and means for allowing the user to define a point command corresponding to each of the utility rate ranges. The control means includes means for comparing the current real time utility rate data to the plurality of utility rate ranges of the control strategy for the point component and for selecting a point command for each point of the point component as a function of such comparison.

In other embodiments of the system, the user interface includes means for allowing the user to group more than one point to form the point component, means for defining control strategies for at least one point component that includes one of digital points, multi-state digital points, and analog points, and/or means for allowing the user to define an energy savings for each point of the point component. Further, the user interface may include means for allowing the user to select one or more points to monitor and/or to define default rates.

A reporting system in accordance with the present invention includes a database for storing information with respect to a real time pricing control system. The control system includes control means for generating commands for controlling one or more points as a function of real time utility rate data. The control means further includes means for depositing historical data regarding the operation of the real time pricing control system in the database including at least energy usage data, energy savings data, and utility rate data. The reporting system also includes means for generating a plurality of reports containing summarized comparative data regarding the generated commands utilizing an instance of the historical data and means for displaying one or more of the plurality of reports.

### Brief Description of the Drawings

Figure 1 is a block diagram illustrating a real-time pricing control system in use with a building management system for controlling the environment of numerous points at various sites.
Figure 2 is a block diagram illustrating various components of the real-time pricing control system utilized in connection with the building management system and which receives utility rates from a utility provider.
Figure 3 is a process flow diagram with regard to rates database interface of Figure 2 for communicating with the utility provider and real-time pricing control software.
Figure 4 is a process flow diagram for the building management system server of Figure 2 for facilitating communication between the real-time pricing control software and building management system.
Figure 5 is a block diagram showing various components of the real-time pricing control software of Figure 2 focused with respect to the execution manager.
Figure 6 is an object-orientated diagram representative of the point monitor software shown in Figure 5.
Figure 7 is a further object-orientated diagram regarding the point monitor software of Figure 5.
Figure 8 is an object-orientated diagram with regard to the control strategy software of Figure 5.
Figure 9 is an object-orientated diagram with regard to the control strategy and command software as shown in Figure 5.
Figure 10 is an object-orientated diagram further with regard to the point command/control strategy software of Figure 5.
Figures 11a-11b is a process flow diagram with respect to the execution manager software of Figure 5 for both monitoring point components and commanding point components for various sites.
Figure 12 is a process flow diagram of the General Table function of the report writer of Figure 2 for use in generating reports with regard to historical information in the real-time pricing control database of Figure 2.
Figure 13 is an interface illustration showing a main application window with the pull down view menu and various icons thereof shown for use in the real-time pricing control system of Figure 2.
Figure 14 shows an interface illustration of the main application window of Figure 13 with the Setup menu pulled down.
Figure 15 is an interface illustration of the Navigator window of Figure 13 maximized with the Controllable Points Tab selected.
Figure 16 is a dialog resulting from the selection of the Select function shown in Figure 15.
Figure 17 is an interface illustration of the Monitored Points Tab of the Navigator shown in Figure 15.
Figure 18 is an interface illustration of the dialog shown upon selection of the Add/Remove Points button of Figure 17.
Figure 19 is an interface illustration of a Control Schedule window for an analog point accessible by way the Control Schedule button of the Controllable Points tab of the Navigator of Figure 15.
Figure 20 is an interface illustration of a Control Schedule window for a digital point accessible via the Control Schedule button of the Controllable Points Tab of the Navigator shown in Figure 15.
Figure 21 is an interface illustration of a Group Definition window for defining controllable point groups accessible via the pull down setup menu of Figure 14.
Figure 22 is an interface illustration of an Import Points dialog allowing selected points to be imported from the building management system; and accessible from the pull down Setup menu of Figure 14.
Figure 23 is a Search dialog interface illustration utilized to import points in conjunction with the interface shown in Figure 22.
Figure 24 is an interface illustration of a Control Strategy window for defining the control strategy of a digital point accessible via the Control Schedule button of Controllable Points Tab of the Navigator shown in Figure 15.
Figure 25 is an interface illustration of a Control Strategy window without criteria being defined for a group of digital points accessible via the Control Schedule button of the Controllable Points Tab of the Navigator shown in Figure 15.
Figure 26 is an interface illustration for allowing definition of a control strategy with criteria for an analog point; accessible via the Control Strategy button of the Controllable Points Tab of the Navigator shown in Figure 15.
Figure 27 is an interface illustration of a Criteria window utilized in defining a control strategy using the interface as shown in Figure 32; the Criteria window being accessible via the Control Strategy windows for defining points.
Figure 28 is an interface illustration of the Select Point dialog for the Criteria window which is utilized in defining criteria and is accessible for the select point dialog boxes of Figure 27.
Figure 29 is an interface illustration for defining energy savings for a digital point; the interface accessible via the Define Energy Saving button of the Control Strategy window shown in Figure 24.
Figure 30 is an interface illustration showing a window for defining energy savings for an analog point; the window being accessible via the Define Energy Saving button of the Control Strategy window such as the window of Figure 26.
Figure 31 is an interface illustration of a Default Rates dialog accessible via the pull down Setup menu shown in Figure 14.
Figure 32 is an interface illustration of an edit default rate dialog accessible via the Edit button of the Default Rates interface shown in Figure 31.
Figure 33 is an interface illustration of a Configure dialog for Controllable Points tab accessible via the Setup pull down menu as shown in Figure 14.
Figure 34 is an interface illustration of the Navigator for the report writer minimized.
Figure 35 is a graphical report generated using the report writer of Figure 2 showing energy usage, energy savings, and utility rates.
Figure 36 is a graphical report generated using the report writer of Figure 2 showing two charts comparing energy savings, usage, and utility rates with real-time pricing control command information.
Figure 37 is a graphical report generated using the report writer of Figure 2 showing two charts comparing energy savings, usage, and utility rates with building management system command information.
Figure 38 is a graphical report generated via the report writer of Figure 2 showing two charts comparing energy savings, usage and utility rates with percentage of time point commands are saving energy.

### Detailed Description of the Embodiments

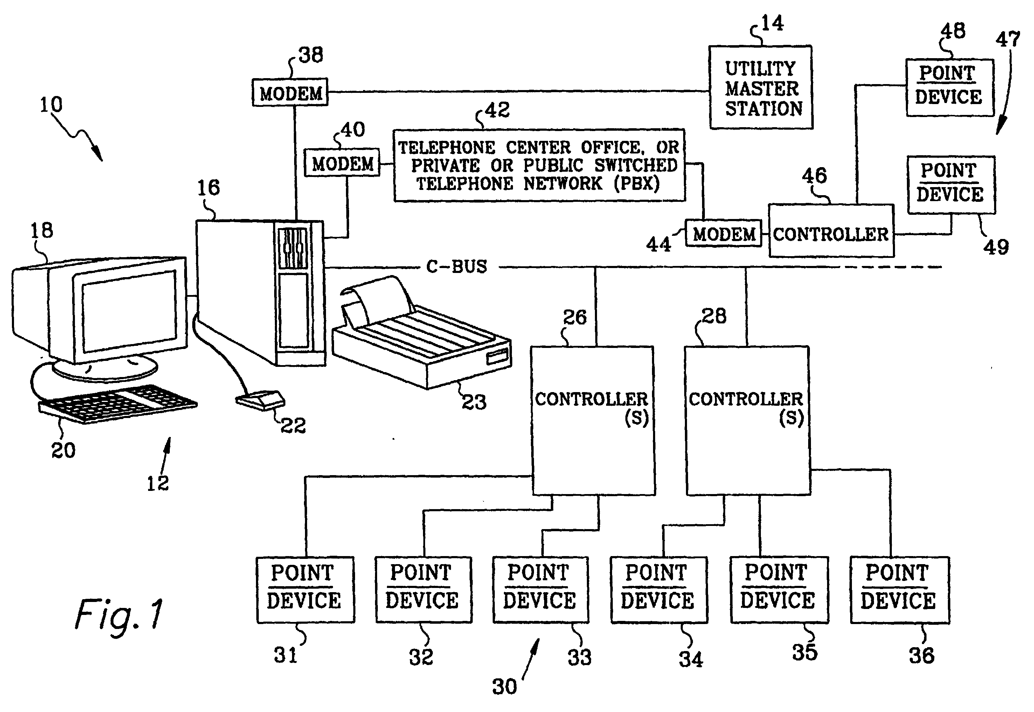

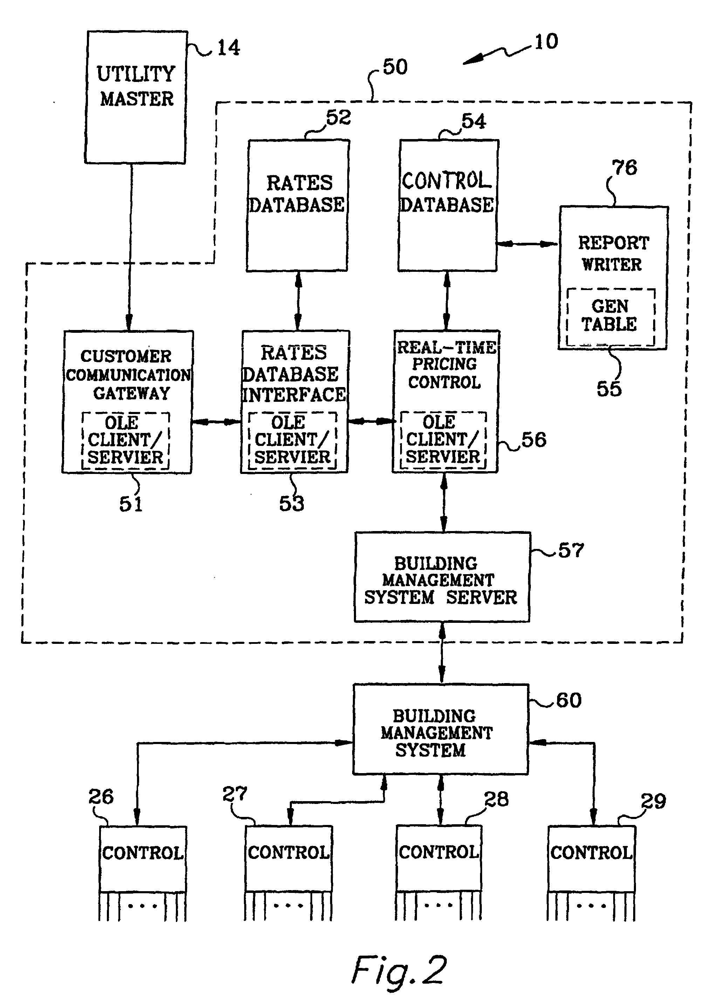

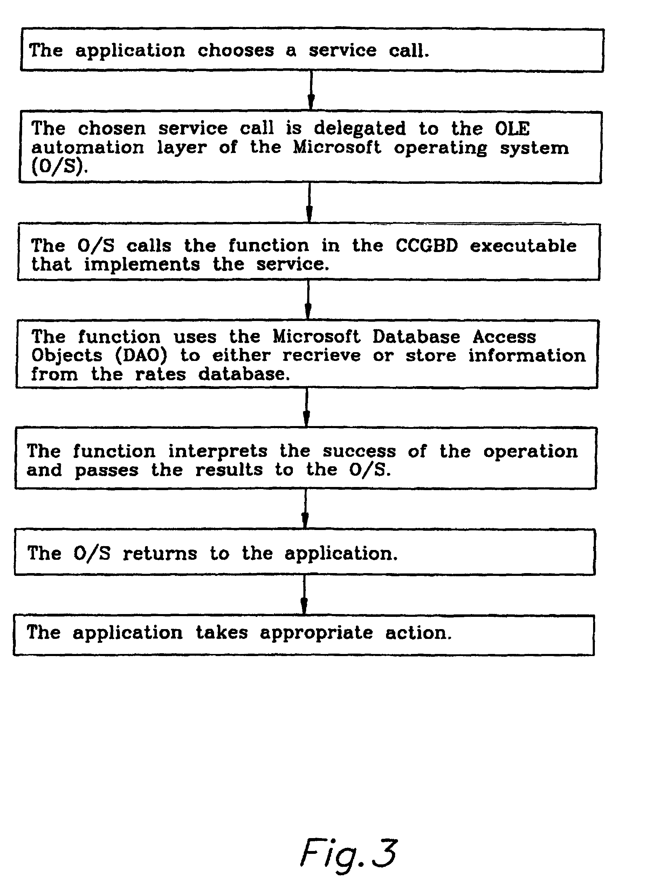

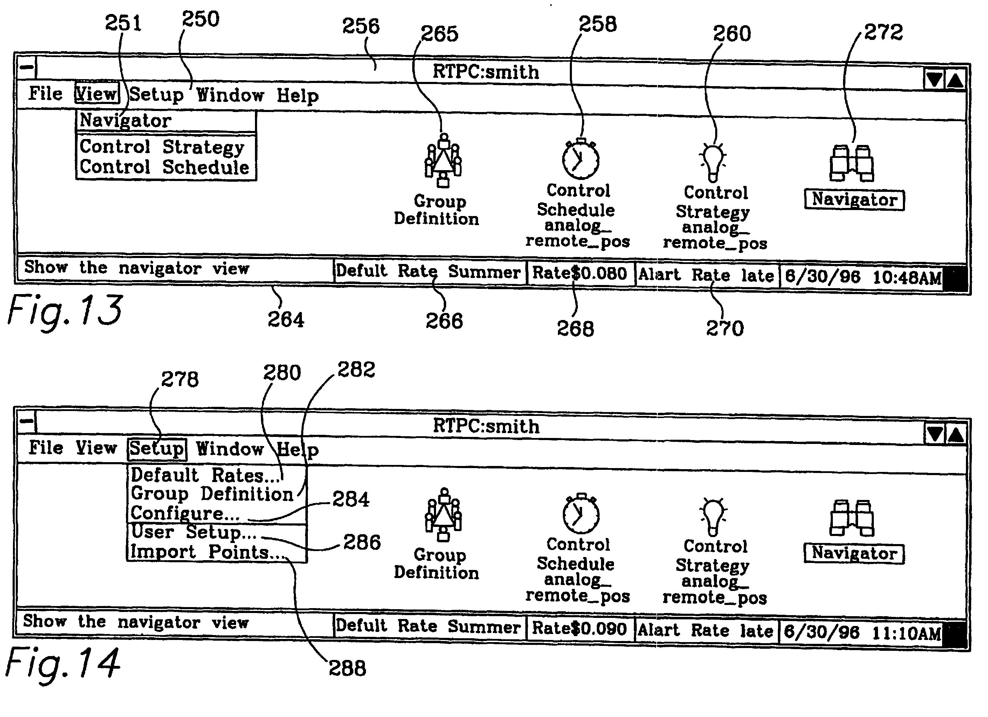

The control system 10 which includes both a building management control system 60 and a real-time pricing control system 50, in accordance with the present invention, is shown in Figures 1 and 2. The real-time pricing control system 50, in accordance with the present invention, shall be described in general with reference to Figures 1 and 2, and then in further detail with reference to Figures 3-12. Thereafter, the real-time pricing control system 50 shall be described with reference to the interface illustrations shown in Figures 13-38.

Generally, the real-time pricing control system 50 automatically receives the latest utility rate data from a utility master station 14. The utility rate data then drives the real-time pricing control software 56 to work with the building management system 60 to automatically control various and numerous points controllable by the building management system 60 to reduce the energy demand requirements for the environment being controlled during times of high utility prices. The system 50 uses the utility rate data from the utility master station 14 to analyze control strategies specified for the various and numerous points to issue a point command for the points controllable by the system 50. The point commands are then sent to the building management system 60 for control of various devices, i.e. points. The real-time pricing control system 50, for example, adjusts lighting, sets ventilation, and controls temperature precisely with respect to time and location and provides cost savings as well as improved control of various environments without sacrificing air quality, comfort, or production goals.

The real-time pricing control system 50, in conjunction with the building management system 60, controls various points; a point being defined as a physical hardware device that monitors or controls a physical system or a software representation of a value maintained or controlled by the building management system 60. Points can be classified as input or output. The control system 50 is capable of controlling both digital points and analog points.

An analog point is defined as a controller input or output with continuous signal characteristics. Analog points have real number values and therefore have an infinite number of possible values. For example, analog points may have values in various units of measurement (e.g., mmHg and Deg F).

A digital point, on the other hand, has a finite number of possible values. Integer values represent these points. The values of digital points typically have descriptors of various discrete states, for example, off, low, and high. A digital point can further be defined as a controller input or output with discrete signal characteristics as opposed to an analog point with continuous signal characteristics. The control system 10 and real-time pricing control system 50 are capable of controlling digital points that have multiple states (i.e., multistage digital points) or two-states, such as, for example, on/off.

Both the digital and analog points can be controlled through command of pseudo points. Pseudo points are software points in the various controllers 26-29 which are representative of the points being addressed. The real-time pricing control system 50 issues commands, via the building management system 60, to the controllers for the pseudo points with the controllers actually performing the control of the devices represented by the pseudo points. For example, a pseudo point may represent a chiller that includes a number of points operable in a number of states. The system 50 can then send an on/off command to the particular controller for the pseudo point to run a program for controlling the various points of the chiller. The pseudo point may be representative of any number of points. Hereinafter, the pseudo point is considered in the same manner as a single digital or analog point

An output point, whether analog or digital, can be illustrated by an actuator. As the final control elements of most process control systems are valves, the valves are driven by actuators. Such an actuator may also control a software-defined system value controlled by the building management system 60. An example of an input point may include that of a sensor that reads a physical characteristic and converts that characteristic into a usable value. A sensor may also read a software-defined system value maintained by the building management system 60.

The building management system 60, by use of controllers (such as controllers 26-29,46), controls the various points. Examples of such points may include, for example, outdoor advertising signs, air handling devices, system fans, variable speed drives for variable air volumes and air handling systems, lighting controls, plant cooling equipment (such as chillers, condenser pumps, chilled water pumps, and cooling towers), fuel switching equipment, pre-cooling devices, thermal energy storage devices, varied motor speeds, standby and co-generation devices, and general load shedding devices. This list is only illustrative of the various and numerous points of which a building management system 60 may control through use of controllers 26-29, 46 and any number of devices may be controlled thereby. Such point/devices are represented in Figure 1 by the point/devices 30, including points 31-36 and point/devices 47, including points 48-49.

As shown in Figure 1, the control system 10 includes a computer system 12, having display 18, keyboard 20, mouse 22, printer 23, and processing unit 16. The real-time pricing control system 50 and the building management system 60 include software that is resident on and executes utilizing processing unit 16. The real-time pricing control system 50 receives utility rates for a certain period of time, for example, 24-hour period, from utility master station 14, located at the utility service utilized. As will be explained further below, the utility rate information is deposited into a database 52 from which the real-time pricing control software 56 can retrieve the utility rate information.

The real-time pricing control software 56 is a software package which reduces the energy demand requirements for the environment being controlled during times of high utility prices. It utilizes a set of algorithms and strategies to perform the reduction of the energy demand. The real-time pricing control software utilizes the real-time utility rate information in performing an analysis of a control strategy that is specified for various points controlled by the building management system 60. Even if the real-time utility rate information does not arrive and is not placed in the database 52 for a particular period of time, for example, the 24-hour period, user created default utility rates are utilized.

The real-time pricing control software 56 operates automatically in performing such analyses in evaluating such control strategies. It does not require operator intervention in order to evaluate appropriate strategies and send the necessary commands to the building management system 60.

The building management system 60 receives such commands from the real-time pricing control software 56 which then sends the commands to the controllers 26-29, 46 for execution of the commands for various points 30, 47. For example, once each cycle (for example, typically every hour), the real-time pricing control software 56, running in conjunction with the building management system software 60, determines which points will be sent commands. Each point controlled by the real-time pricing control system 50 has a control strategy and possibly other conditions that must be satisfied before that point can be commanded by the real-time pricing control software 56. For example, such a control strategy may be based on utility rate limits, occupancy schedules, and point conditions. If the control strategy and any other conditions are satisfied, the appropriate point command is commanded by the real-time pricing control software 56, the point command is received by the building management system 60, a determination of whether the real-time pricing control software 56 point command will be utilized is made as a function of building management system software 60, and then the building management system software 60 commands the controllers, as determined thereby. The building management system software 60, for example, has the ability to utilize the real-time pricing control system software point command for the point being addressed by the system 50, to utilize an automatically generated command within the building management system software 60, or utilize an operator override command.

The utility master station 14 is a software program that resides at the utility service company. The utility provider utilizes the utility master station 14 to send real-time utility rate information to various clientele. Such utility master station software may be any software program utilized by the utility company to provide such real-time utility rate information and is not limiting to the present invention as described in the accompanying claims. For example, such rate information may be utility rate information for the next day on an hourly basis.

The building management system 60 may be any building management system capable of controlling various and numerous points through the use of controllers (such as controllers 26-29, 46). As one illustrative building management system 60, the system may be the building management system available under the trade designation EXCEL 5000 System available from Honeywell, Inc., Minneapolis, Minnesota. Such a building management system includes building supervisor software that provides a graphical and text-based user interface (such as with pull down menus and dialog boxes) to control either local controllers 26-29 and therefore, points 30 or remote controllers such as controller 46, and therefore, remote points 48-49. Such a building management system 60 would provide data to the controllers 26-29 via bus 24. The building management system 60 would also provide such information for controlling remote site points via communication equipment such as modem 40, telephone switching office 42, and modem 44. It should be readily apparent to one skilled in the art that the communication lines or apparatuses utilized for communication of point information, commands, or any other communication information between portions of the systems described herein (such as between the real-time pricing control system 50 and building management system 60, between the building management system 60 and controllers 26-29, between the real-time pricing control system 50 and utility master 14, and between a building management system 60 and remote controllers 46 may be provided in any known matter, such as, for example, fiber optic lines, telephony services, radio frequency techniques, or any other communication media available. The present invention is not to be limited by such communication media, but is limited only in accordance with the limitations as set forth in the accompanying claims.

The real-time pricing control software 56 in accordance with the present invention is particularly configured for use with the EXCEL 5000 System available from Honeywell, Inc.; however, as further described below, the real-time pricing control system 50 may be configured for use with any various building with minimal modifications to the control software 56 (modifications to building management system server 57 would be required). The EXCEL 5000 system is described in further detail in the Honeywell document, EXCEL Building Supervisor Ver. 1.2.2, EXCEL 5000 System Software Release Bulletin (1996) and the Honeywell document, EXCEL Building Supervisor, EXCEL 5000 System, Operator Manual (1996).

Typical building management systems 60 include software for controlling various and numerous points, both for local sites and remote sites. The software includes strategies for efficiently and economically performing the duties necessary for the environment being controlled at the various local and remote sites. Such building management systems 60 typically include a time program, operator interface, occupancy schedules, and trend analysis tools. Further, such software normally includes strategies that automatically perform various switching functions or command functions that control the various points 30 for the environment being controlled. The building management system 60 normally includes some way of prioritizing whether a particular point is controlled automatically via a strategy of the building management system, via an operator override command, or whether the building management system 60 will utilize a command from another source, such as the real-time pricing control software 56, to send to the various applicable controllers 26-29, 46 in order to control the point in question. Such priority level techniques will vary from building management system to building management system.

Further, such building management system 60 provide for measuring or monitoring the various points controllable by the system. Therefore, a building management system 60 has means for communicating information to controllers 26-29, 46 for commanding various points and also includes means for measuring, monitoring, and storing information relative to where such points were previously commanded, where such points are currently commanded, and even where such points may be commanded in the future. Likewise, such building management systems 60 will include files or databases having information with regard to the various points being controlled, such as, for example, a point list.

These functions of the building management system 60 are at least in part, utilized by the real-time pricing control system 50 in order to perform its intended function. It should be readily apparent to one skilled in the art that the building management system 60 may include other functionality not described herein and that other functionality of the building management system may be necessary for the operation of the real-time pricing control system 50 as described in further detail below. However, for simplicity, such information has only been summarized.

The real-time pricing control system 50 shall now be described with particular reference to Figures 2-12. The architecture of the real-time pricing control system 50 is shown in block diagram form in Figure 2. The functionality of the real-time pricing control system 50 includes various functions previously performed in software entitled "EPRI (Electric Power Research Institute) Real-Time Pricing Program," Revision 1 (1993) and described at least in part in Honeywell document entitled "Home and Building Control - DeltaNet Graphic Central Real-Time Pricing - User's Guide," Revision 1, Date: June 17, 1993, and in EPRI Document, EPRI RP 2830-15 entitled "Development and Demonstration of Energy Management Control Strategies for Automated Real-Time Pricing, Interim Technical Report, (Phase I), Tasks 1-3," (May 2, 1994).

The real-time pricing control system 50 includes customer communication gateway (CCG) 51, rates database interface 53, rates database 52, real-time pricing control software 56, real-time pricing control database 54, report writer 55, and building management system server 57. The various portions of the real-time pricing control system 50 are installed on computer system 12 (Figure 1). For example, the computer system 12 may be a Pentium 90 central processing unit with 32 megabytes of random access memory, 500 megabytes of disk space, mouse capabilities, and monitor; running Windows NT 3.51 software.

Generally, utility rate information is deposited in rates database 52 by means of rates database interface 53 and customer communication gateway 51. The real-time pricing control software 56 then can access the data in rates database 52 via the rates database interface 53. The real-time pricing control software 56 then executes its various functions utilizing the information from the rates database 52, information from building management system 60, information from real-time pricing control database 54, and information input by an operator of the system. After commands are generated for various points in the real-time pricing control software 56, they are provided to the building management system 60 by way of building management system server 57. The real-time pricing control database 54 includes initialization data from initialization of the real-time pricing control software 56, historical data based on the real-time pricing control software commands, control strategies utilized thereby, and information from building management system 60 as to what and when the points controlled by the building management system 60 were commanded. For example, whether the building management system 60 utilized the real-time pricing control software command for commanding a particular point or whether the building management system 60 utilized a building management system operator override command, or whether the building management system used an automatically generated point command is stored. Further, the real-time pricing control database 54 includes configuration data for the real-time pricing control software 56. The report writer 55, including Gen Table routines and functions 76, have access to the real-time pricing control database 54 and attach historical data stored therein for use in generating various reports, as will be described in further detail below. The report writer software 55 may be resident on the processing unit 12 or may be utilized on a separate processing unit.

As mentioned previously, the utility master station 14 is a software program that resides at the utility company to send real-time utility rates to clients. The customer communication gateway 51 is a software program that works with the utility master station 14 to provide utility rate information to rates database interface 53. The customer communication gateway is located at the customer site. The rates database interface 53 allows clients thereof (i.e., the utility master 14 or real-time pricing control software 56) to deposit and retrieve rate information when given a particular date and time. The rates database interface 53, rates database 52, customer communication gateway 51, real-time pricing control software 56, real-time pricing control database 54, and building management system server 57, are preferably implemented utilizing Microsoft Access. Although Microsoft Access is utilized in the embodiment described herein, it should be readily apparent that other database management systems software may also be utilized to perform equivalent functionality to that described herein.

Figure 3 shows a general process flow diagram for the rates database interface 53 to allow the deposit of utility rates from the utility master 14 to rates database 52 and to allow the retrieval of utility rate information by the real-time pricing control software 56 from the rates database 52. In general, the services provided by the rates database interface 53 for the real-time pricing control system 50 include storing rate data for a given data and time from the utility master 14, storing the rate data for a given date and time with a specified duration from the utility master 14, and retrieving the rate data for a given date and time for the use in the real-time pricing control software 56. As shown in Figure 3, the application (i.e., utility master 14) or real-time pricing control software 56) chooses a service call. The chosen service call is then delegated to the Microsoft OLE automation layer of the Microsoft operating system (O/S), the Microsoft OLE automation layer is known to those skilled in the art and is described in the articles, "What is OLE?" (1996) available from Microsoft Corporation, and "When to Use Which OLE Technology" OLE Development by Kraig Brockschmidt (February 10, 1995), both of which are available from Microsoft Corp. The O/S calls the function in the rates database interface executable that implements the particular service requested. The function then uses a Microsoft database access object (DAO) to either retrieve or store information from the rates database 52, as applicable. The function interprets the success of the operation and passes the results to the O/S. The O/S returns the results to the application requesting the service, and the application takes appropriate action with respect to the results.

In further detail, to store rate information in the rates database 52, the utility master station 14 brings up the customer communication gateway 51 in order to transfer rate data thereto. The customer communication gateway 51 automatically brings up the rates database interface executable that stores the rates data in the rates database 52. The rates database interface 53 then runs the executable to store information received from the customer communication gateway to the appropriate position in the rates database 52.

Likewise, when the real-time pricing control software 56 requires rate information from rates database 52, the software 56 (i.e., the client), chooses a retrieving rate information service provided by the rates database interface 53, and the O/S calls the executable for retrieving rate data at a given date and time from the rates database 52. The executable interprets whether the retrieval of information was successful and then via the O/S, returns the utility rate data to the real-time pricing control software 56 for use thereby.

The rates database interface 53 provides a means of separating various functions from the real-time pricing control software 56. In this manner, only particular portions of the interface would require modification if information was received from a different utility master station 14 having different functional requirements or if a modified real-time pricing control software was utilized. The rates database interface 53 and the rates database 52 provide current and up-to-date rates information for access by the real-time pricing control software 56.

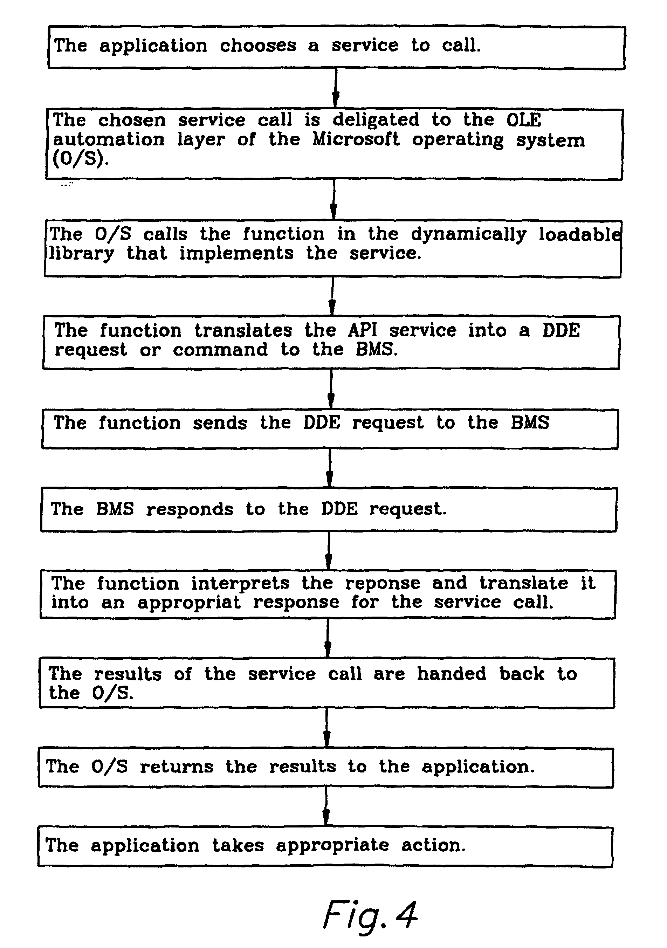

The building management system server 57 for providing communication between real-time pricing control software 56 and the building management system software 60 operates in a somewhat similar fashion to the rates database interface 53. A general process flow diagram for providing one of various services between the real-time pricing control software 56 and building management system software 60 is shown in Figure 4. The services provided by the building management system server 57 include: a check for software security (i.e. the software checks for a software license by making a service call to the building management system which checks a dongle), controlling connection to the building management system by the real-time pricing control software 56, retrieving names and IDs of sites stored in the building management system 60, controlling connection to remote sites utilized by the real-time pricing control software 56, retrieving names of points at particular sites using a wild card search, requesting information about a point that rarely changes (i.e., a static point), requesting information about a point from the building management system that changes frequently (i.e., a dynamic point), sending a point command with command and residual priorities to the building management system 60, writing to a file under control by the building management system 60, and posting alarm messages to the building management system 60. Although these are various illustrative services provided by the building management system server 57, one skilled in the art would readily recognize that additional functions or services between the real-time pricing control software 56 and building management system software 60 would facilitate other functionality and that the present invention is not limited to providing only such services or functions listed utilizing the building management system server 57.

The general process flow for each one of these particular services listed above, and others as recognized by one skilled in the art, includes the application (i.e., the real-time pricing control software 56) choosing a particular service to call. The chosen service call is then delegated to the OLE automation layer of the Microsoft O/S which calls the function in a dynamic reloadable library of the building management system server 57 that implements the particular service. The function translates the chosen service call into a dynamic data exchange (DDE) request or command to the building management system 60. The function then sends the DDE request representative of the service call to the building management system 60 and the building management system 60 responds to the DDE request. The function interprets the response and translates it into an appropriate response to the service call, and the results of the service call are handed back to the O/S which returns the results to the real-time pricing control software 56. The real-time pricing control software 56 then takes the appropriate action with respect to the results.

For example, if the real-time pricing control software 56 wishes to import points from the building management system 60, the real-time pricing control software 56 would choose the service of retrieving names and IDs of particular sites. This service would be delegated to the OLE automation level where the O/S calls the function in the building management system server 57 which implements the particular service. A DDE request is then made to the building management system 60 to send names and IDs to the server 57. The building management system 60 then responds to the DDE request. The building management system server 57 then interprets the names and IDs sent by the building management system 60, puts it in a particular form for response to the service call by the real-time pricing control software 56, and provides the names and IDs back to the O/S. The O/S returns the retrieved names and IDs of particular sites to the real-time pricing control software 56 and then the retrieved names and IDs of the sites are utilized with the import functions of the real-time pricing control software 56.

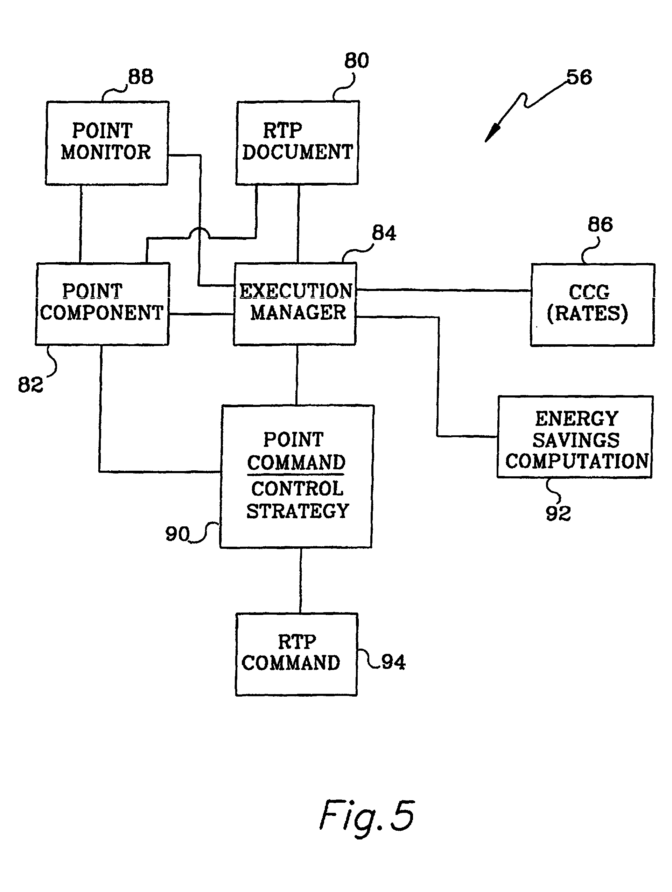

Thus far, the real-time pricing control system 50 has been described with respect to the real-time pricing control software 56, retrieving various types of information from various sources. For example, the real-time pricing control software 56 retrieves information by way of the building management system server 57 from the building management system 60. Further, the real-time pricing control software 56 has been described with respect to issuing a command to get rates by way of the rates database interface 53 from the rates database 52. Such rate retrieval commands to the rates database interface 53 are shown as the CCG (rates) 86 of Figure 5. This CCG (rates) 86 and the remainder of the blocks represent a block diagram of the various software components of the real-time pricing control software 56. Figure 5 is diagramed with a focus toward the execution manager 84 which carries out the execution of various functions to be performed by the real-time pricing control software 56 as further described below.

The real-time pricing control software 56 generally includes real-time pricing control document 80, point component 82, and execution manager 84. Execution manager 84 then controls the execution of commanding a point with use of control strategies as shown by block 90, controls the execution of point monitor 88 which monitors various points, and controls the execution of performing energy savings computations 92. Real-time pricing control software 56 further includes, as a result of generating commands for various points by point command/control strategy 90, real-time pricing control command software (block 94) for determining a real-time pricing software point command to send to building management system 60.

Generally, the real-time pricing control software 56 includes software for generating a command for points controlled by the building management system 60. The building management system 60 generally refers to any associated environment management system, i.e., indoor, outdoor, etc. The point command, for example, may be an Off command, an On command, or a Percentage command such as for analog points. Along with the point command, the software sends priority information.

The real-time pricing control software 56 assumes that every point has a priority. As described previously, the building management system 60 has knowledge of each point's priority. When the real-time pricing control software commands a point, it utilizes two priorities: command priority and residual priority. When the building management system 60 receives the point command with the two priorities, it determines whether the real-time pricing control point command is allowed to command the point being addressed. If the command priority is, for example, greater than or equal to the point's current priority, based on the building management system's 60 knowledge, then the real-time pricing control software 56 is allowed to command the point. If, however, the command priority of the point command is less than the point's current priority, then the building management system 60 does not allow the real-time pricing control software 56 to command the point. If the real-time pricing control software is allowed to command the point, and it is successful at commanding the point, the real-time pricing control software 56, leaves the point priority, as known and recognized by the building management system 60 at a value specified by the residual priority.

As described previously, with respect to the building management system 60, if the real-time pricing control software 56 does not command a point, then the point is most likely commanded by internal controlled algorithms of the building management system 60 or operator override. By setting a residual priority at an intermediate level which is above the priority given to algorithms or strategies used to command points by the building management system 60, the real-time pricing control software prevents such lower priority applications of the building management system 60 from commanding a particular point. However, if the real-time pricing control software 56 sets a residual priority to a very low value, the building management system 60 applications for commanding the particular point will be allowed to command the point and override a real-time pricing control point command. The real-time pricing control software 56 is therefore used in conjunction with the building management system 60 to send commands to control the various points to reduce energy costs; however, the building management system 60 determines when the real-time pricing control software 56 is to be allowed to command points.

Further, in general, with respect to each point in an environment controlled by the building management system 60, the real-time pricing control system 50 allows a user to specify a control strategy therefor. The control strategy, for example, is based on the utility rate ranges, and further may be based upon occupancy schedules, processed values of other points, and other conditions as may be defined therefor. The real-time pricing control software 56 is implemented with a hierarchial structure, such that a control strategy may be defined for a single point or a group of points that are to be controlled using real-time utility rate information. The groups of points are grouped by type, for example, temperature, two-state digital, three-state digital, pressure, etc. Further, such type groups may also be grouped by site. Preferably, all points in a group belong to the same site. For example, temperature and a local site or temperature and a remote site. By providing for the grouping of points and a single control strategy specified for such grouped points, control strategies can be defined more efficiently and economically. From this point on as described herein, a point or group of points shall all be referred to as a point component In other words, a single control strategy is specified for each point component. However, although it is preferable not to have more than one control strategy defined for a point component, it should be readily to one skilled in the art that multiple control strategies could be utilized with selection of the control strategies for particular execution cycles or variations thereof.

In the control strategy specified for each point component, the user or operator can specify utility rate ranges such that the real-time pricing control software 56 can command the points of a point component to different values based on the value of the current real-time utility rate information obtained from the rates database 52. Further, criteria for point components may also be specified by the user to change the commands the real-time pricing control software 56 sends based on only the current real-time utility rate information. In other words, the commands are conditioned on other criteria. For example, such other criteria may include occupancy criteria (i.e., whether a room is occupied or not), values of other points or point components, other scheduling criteria and time programs. Further, for example, the criteria may include the current state of another point being controlled by the real-time pricing control software 56 or may be conditioned upon a sensor which is measured by the building management system 60 and information of which is provided to the real-time pricing control software 56 via server 57.

The real-time pricing control software 56, when in operation, goes through an execution cycle (for example, every hour) in which the real-time pricing software cycles through all the enabled controllable points and groups of points (i.e., point components). The control strategy for each point is evaluated to determine what command to send to the building management system 60. This execution cycle shall be referred to as the controllable point execution cycle. Thereafter, when a point is commanded by the real-time pricing control software 56, the building management system 60 evaluates the priority of the particular command and determines whether the real-time pricing control system is allowed to command that particular point or not.

Further, in general, the real-time pricing control software 56 is able to monitor point components. The real-time pricing control software does not attempt to control such monitored point components, but merely monitors the point components to provide information to an operator or user. Although there are restrictions on the use of putting one point into multiple point components for command purposes, there are no such restrictions on the grouping of monitored points. Further, the real-time pricing control software 56 allows the user to select a particular set of points that are monitored and select cycle time periods such that points monitored can be performed on a more frequent interval, i.e., 1 to 5 minutes, than the normal command execution cycle. This more frequent interval may be referred to as a monitor execution cycle. A certain number of commandable points can also be performed on more frequent intervals. For example, a rapid cycle interval may be utilized for commanding a set of points at an interval of, for example, fifteen or thirty minutes, as opposed to commanding points every hour. It should be readily apparent to one skilled in the art that the system can be configured to perform the monitoring and commanding of points at various time intervals.

The real-time rates provided by the utility companies and utilized by the real-time pricing control software 56 from the rates database 52 are usually set up by the utility companies to provide some flexibility to charging their customers. For example, instead of charging clients the same rate for all hours in the day, the utility companies offer rates that change from day-to-day and hour-to-hour. The real-time pricing control software 56 takes advantage of these real-time rates to reduce energy costs in the environment being controlled by the building management system 60. The user of the software is able to configure the control strategies of the point components so that less energy is used when rates are higher and more energy is used when rates are lower.

The real-time pricing control software 56 further includes the use of default rates which are readily editable and can be specified differently for different periods of the year. For example, different default rates can be specified for winter, spring, summer, and fall.

Further, a user is allowed to specify, using the real-time pricing control software 56, whether a controllable or monitored point is enabled or disabled, such that the real-time pricing control software 56 only evaluates and performs an execution cycle for a control strategy for a point component that is enabled. In addition, the real-time pricing control software 56 allows for the suspension of execution or command of a particular point component (i.e., a point or a group of points) for a particular specific future interval of time.

In addition to the above functions for the real-time pricing control software 56, the software 56 further provides for the computation of energy savings (block 92) for each point being controlled as the command execution cycles are performed. The calculation of such energy savings computation and the result thereof which are utilized by the report writer 55 (Figure 2) provide the user with data concerning the positive or negative performance of the real-time pricing control system 50.

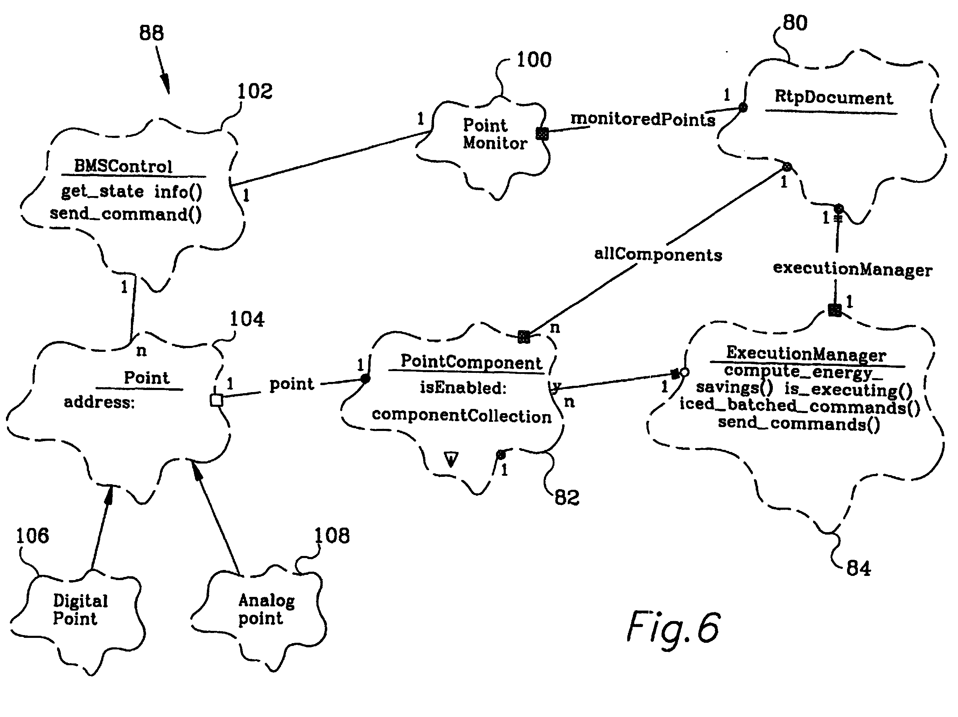

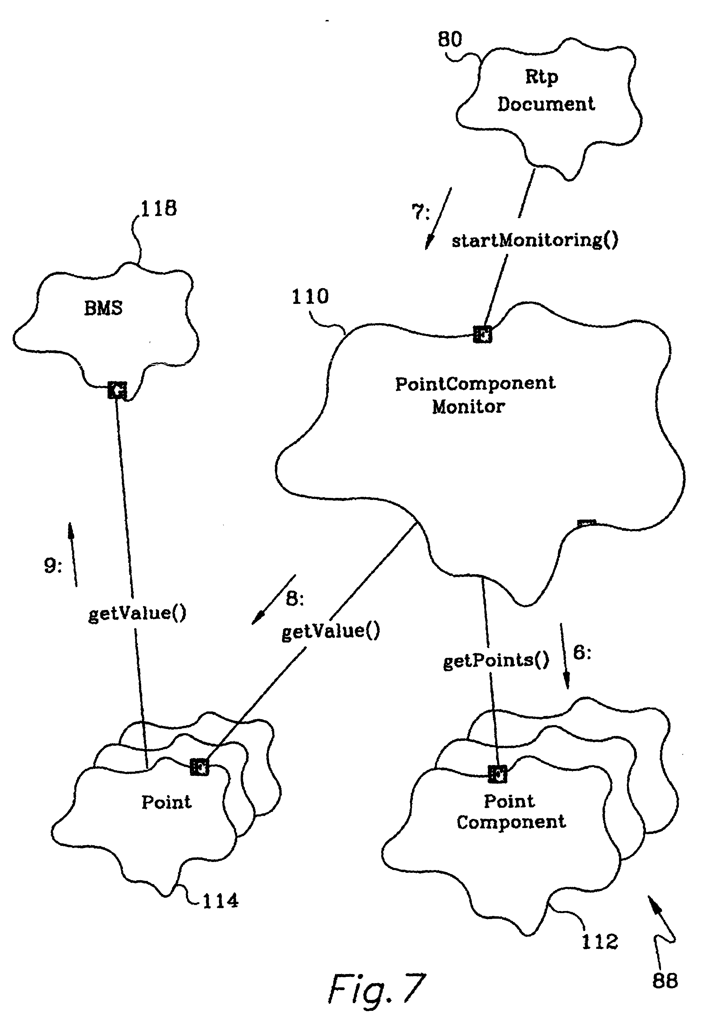

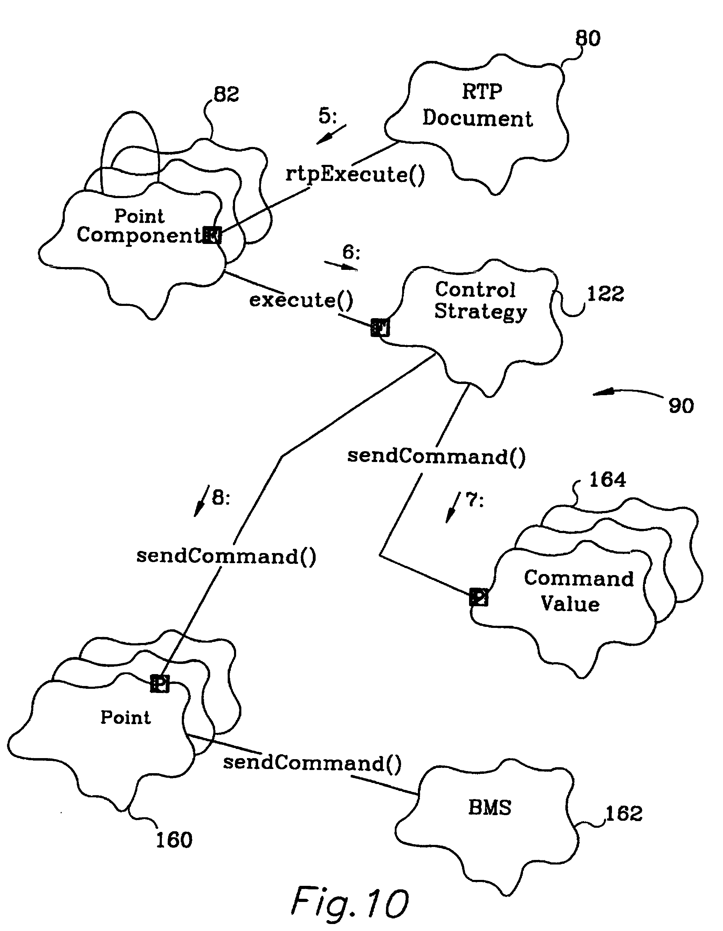

Figures 6 and 8-9 are object-orientated diagrams of the point monitor 88 and point command/control strategy 90 as shown in Figure 5. They are class diagrams generated utilizing Rational Rose 3.0 nomenclature showing the relationship between various objects of the software utilized to provide such functions. Rational Rose 3.0 nomenclature is further described in "Using Rational Rose 3.0 User Guide" (1995). Figures 7 and 10 are object message diagrams for the point monitor 88 and point command/control strategy 90, respectively, also shown utilizing Rational Rose 3.0 nomenclature.

The real-time pricing control document object 80, point component object 82, and execution manager object 84 are shown various times in the object orientated diagrams for simplicity of understanding. The real-time pricing control document object 80 holds all the points that are monitored or commanded to which the real-time pricing control software 56 is applicable, i.e. imported from the building management system 60. The real-time pricing control document 80 controls a timer for controlling various events, such as for monitoring points, for running an execution cycle, etc.

The point component object 82 basically defines whether a point is an independent point or a group of points. The point component object 82 also indicates whether a point is enabled or disabled, and further manages connections of a point to other objects. The relationship of real-time pricing control document object 80 to point component object 82 indicates that point component object 82 has allocated storage for, and has within it, multiple instances, i.e. defined point components, of points in the real-time pricing control document object 80. This relationship also means that the point component 82 has data of the type of the real-time pricing control document object 80 therein rather than a reference or pointer to data whose storage is managed elsewhere.

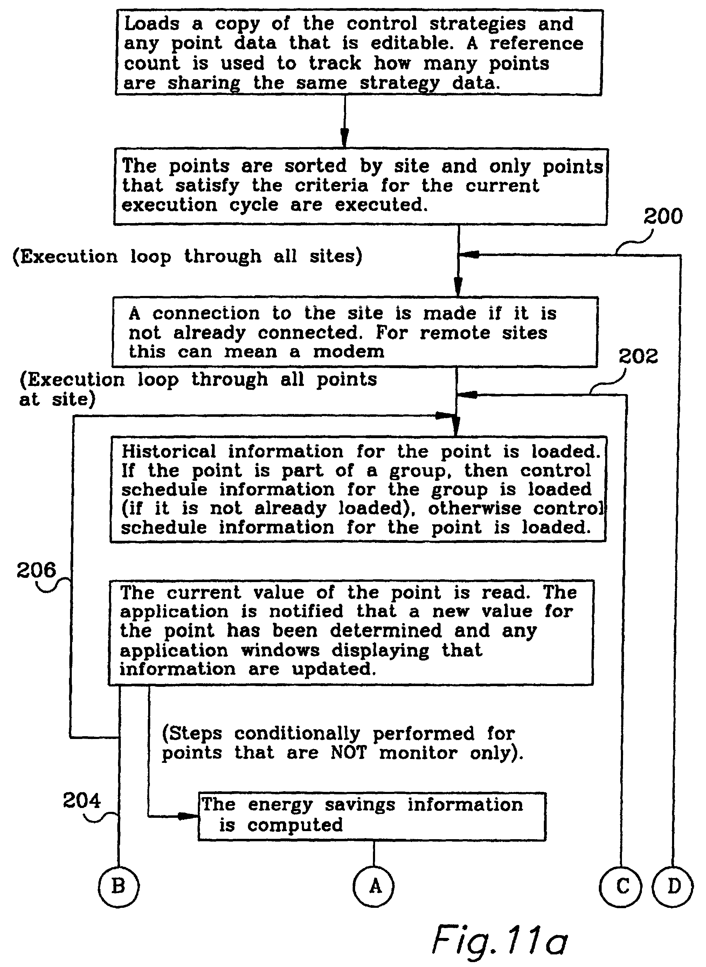

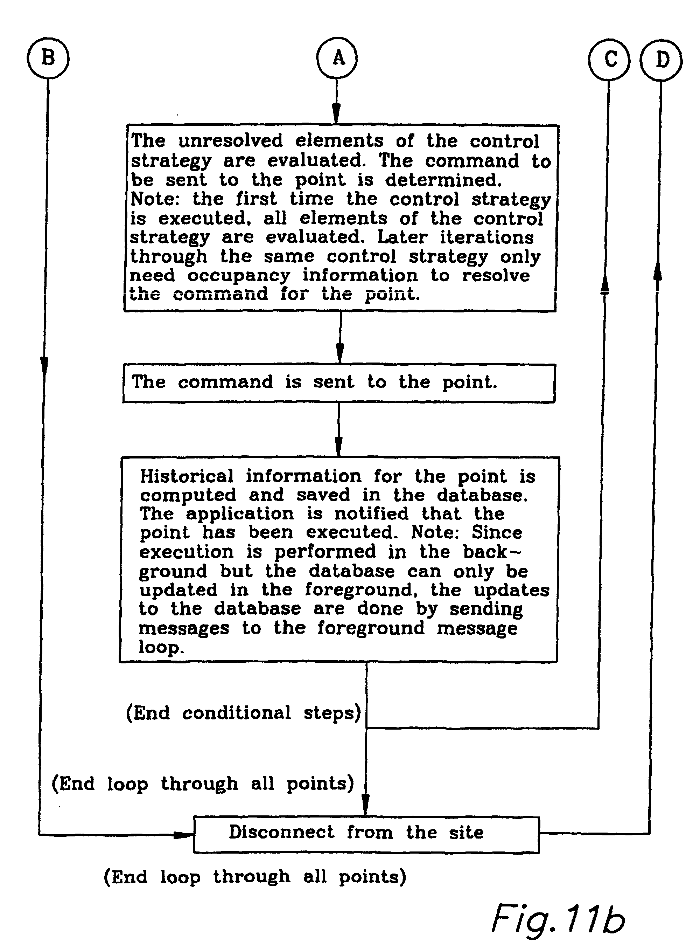

Execution manager object 84 shall be further described below with reference to Figures 11 a-b. Execution manager object 84 performs various functions such as energy savings computation 92, establishing when the system is executing, loads various commands and sends various commands as required in performing the command execution cycle and monitor execution cycle. The execution manager object 84 has a relationship with the real-time pricing control document 80 that the execution manager object 84 has within it an instance of the real-time pricing control document, i.e. point data. The execution manager object 84 also has access to the real-time pricing control document object 80 and also has a relationship with point component object 82 such that execution manager object 84 uses point component object 82 and depends upon point component 82 for services (i.e., defined point components).

With respect to Figure 6, the objects representing point monitoring 88 are shown. Execution manager object 84 performs the execution cycle as timed by the real-time pricing control document 80 and utilizes point component information 82. The point monitor object 100 has a relationship with the real-time pricing control document 80 indicating that point monitor 100 has an instance of real-time pricing control document 80 therein, i.e. a point to monitor. Further, point monitor object 100 has a relationship with building management system control object 102 which is utilized as a wrapper to building management system server 57 (Figure 2) for obtaining such information from building management system 60.

Point component object 82 has a relationship with point object 104 indicating that point object 104 has a pointer or reference within it to an instance of the point component object 82. Such objects like point 104, having a by reference relationship, represent data that can be manipulated by more than one object. The relationship with point object 104 and digital point object 106 and analog point object 108 indicate that digital point object 106 and analog point object 108 share common structure and behavior with point object 104. The point object 104 also has a relationship with building management system control object 102 such that point object 104 has multiple instances of points with respect to building management system control object 102.

As further shown in Figure 7 with regard to monitoring of points, the object message diagram shows the real-time pricing control document object 80 which controls a timer for monitoring points. On each timer event, each monitor point is requested to get the point's value from point object 114. The point component monitor object 110 collects all the points that are going to be monitored and removes any duplicates. The real-time pricing control document 80 acts upon the point component monitor object 110 to start monitoring the collected points. The point component monitor object 110 acts upon point component object 112 which contains the points to be monitored as selected by the user. The point component monitor object 110 gets the points to be monitored from point component object 112. Further, the point component monitor object 110, after it has collected all the points, gets the various point values of the points that are to be monitored from point object 114 which knows how to get the correct type of value using the building management system object 118. The building management system object 118 has a global relationship with the point object 114 as it serves to obtain the values for the particular points being monitored. The point object 114 gets the values via the building management system object 118, which is representative of a wrapper to the building management system server 57, Figure 2.

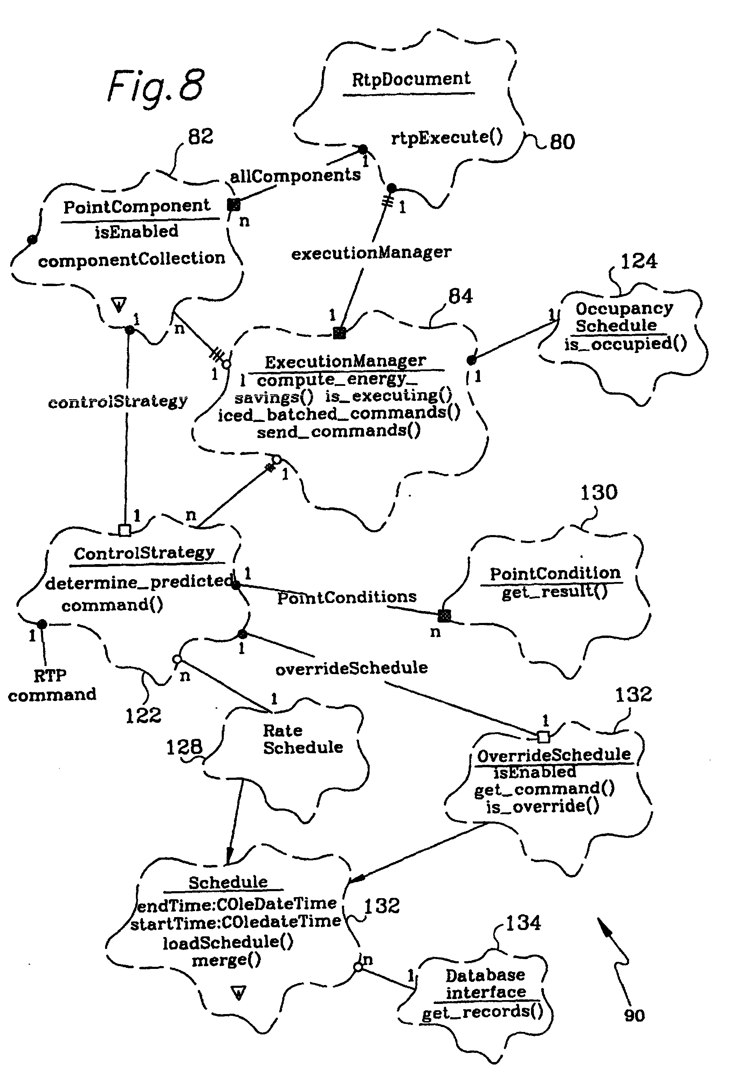

The object orientated diagram of Figure 8 represents the point command/control strategy software 90 which also utilizes real-time pricing document object 80, point component object 82, and execution manager object 84 to perform execution cycles for commandable points. The relationships between real-time pricing document object 80, point component object 82, and execution manager object 84 are substantially the same as those relationships described with regard to Figure 6. The execution manager object 84 further has a relationship with respect to control strategy object 122 which is utilized to determine commands for points of point components. The relationship between the execution manager object 84 and control strategy object 122 is that the execution manager object 84 uses multiple instances of control strategy object 122, i.e. control strategies defined for various point components.

Further, execution manager object 84 is in a has relationship with respect to occupancy schedule object 124; the occupancy schedule indicating whether a point is occupied or not, i.e. a room has people in it. Occupancy schedule object 124 is defined on a one-to-one relationship with the points being controlled using execution manager object 84.

The control strategy object 122 also is in a by-reference relationship with point component 82 which indicates that a control strategy has a pointer or reference within it to an instance of point component object 82. In addition, control strategy object 122 has a relationship with point condition object 126 indicating that various point condition object 126 instances of point conditions are available for control strategy object 122. In addition, control strategy object 122 has a use relationship with rate schedule object 128 indicating that control strategy object 122 utilizes multiple instances of rate schedule object 128 and depends upon rate schedule 128 for its services. In addition, control strategy object 122 is in a by reference relationship with override schedule object 130 indicating that control strategy 122 has a pointer for pointing to the override schedule object 130 which is utilized in determining whether the predicted command is to be commanded or whether the override has been enabled, i.e. commands suspended. The rate schedule object 128 and override schedule object 130 are specializations of schedule object 132 and have the similar structure and behavior of schedule object 132. Schedule object 132 is never instantiated as indicated by the "A" in the triangle of the object, and the schedule object 132 has a use relationship with database interface object 134 which is utilized to get records through, for example, rates interface database 53, Figure 2.

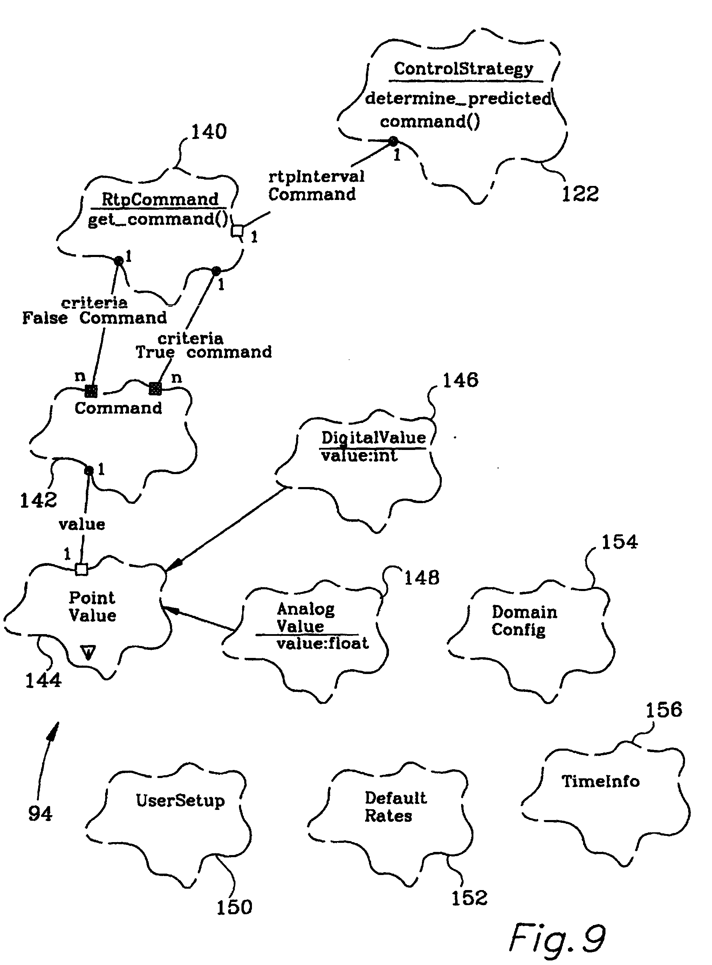

Various objects representative of the real-time pricing command 94 are shown in Figure 9. The control strategy object 122 of Figure 8 has a pointer or reference to the real-time pricing command object 140, i.e., reference to commands defined for multiple rate ranges. The real-time pricing command object 140 has multiple instances of the command object 142 stored therein, i.e. both criteria false commands and criteria true commands, which are communicated therebetween. The command object 142 is in a by reference or pointer relationship with point value object 144 with a reference being made to values of point value object 144. The digital value 146 and analog value 148 being specializations of the point value object 144; sharing the same structure and behavior thereof, i.e. for digital and analog points.

In addition, domain configuration object 154, user setup object 150, default rates object 152, and time information object 156 capture the common structure and behavior of a set of objects. For example, default rates object 152 captures the common structure and common behavior of a set of default rates as will become apparent in description of the interface set forth further below.

The Rational Rose 3.0 object message diagram shown in Figure 10 for commanding points during execution cycles, includes the real-time pricing document 80 that controls a timer for starting execution cycles. On each timer event, depending on the execution cycle interval, all the controlled point component objects 82 are requested to execute, with an execute command being sent to the point component object 82. Point component object 82, as indicated previously, manages connections from point component objects to the control strategy object 122. It passes a point component object as a parameter in the execution cycle to be operated upon by control strategy object 122. Control strategy object 122 evaluates the control strategy for the point components which includes evaluating rate comparisons and true and false criteria of the point component and all of its sub-components (i.e., points) to determine commands therefor. The point object 160 is sent the command by the control strategy object 122. Then the point object 160 determines what command to send to the building management system object 162 which provides the interface to building management system server 57, Figure 2. The building management system object 162 sends a command to the building management system 60 through the building management system server 57. Likewise, if a control strategy is required to obtain point conditions, the point object 160 determines, after receiving a request from control strategy object 122, where to obtain such information from the building management system object 162. The building management system object 162 utilizes the building management system server 57 to obtain the point conditions from the building management system 60 and provide them back to control strategy object 122 via point object 162.

The operation of execution manager 84 shall now be described with reference to the flow diagram of Figures 1 la-b. The execution of real-time pricing control software 56 occurs entirely in the background. Therefore, the software 56 is executing with minimal interruption to interacting with the user interface on the computer system 12, Figure 1. The general process flow for execution manager 84 as shown in Figures 11a-b includes the ability to run execution cycles with different cycle intervals for monitoring points, commanding points, or monitoring and commanding points. Typically for commanding points, the execution cycle is run with a longer execution interval. For example, the execution manager performs the execution steps every hour, although points can be commanded at cycles with intervals such as, for example, fifteen or thirty minutes, i.e. rapid cycle commandable points. On the other hand, monitored points may be monitored more frequently, such as, for example, one to five minutes. Therefore, the steps described herein by the execution manager could be performed, for example, every 5 minutes for monitored points, and every hour for controllable points. Likewise, it is possible that on an hourly execution cycle that both monitored and commanded points go through the same execution cycle as described further below. One skilled in the art will recognize that execution cycle intervals, as described previously, may be specified differently for monitored points and controllable points, and further the same type of points, i.e. monitored points or controllable points, can be executed using different cycle intervals.

For one execution cycle, the execution manager 84 performs the following steps as shown in Figures 1 la-b. The following steps shall be described for a circumstance in which both points to be monitored and commanded are present for the execution cycle. The execution manager 84 loads a copy of all the control strategies for point components to be commanded and any point data that is editable. For example, such editable point data includes priority data, rapid cycle/not rapid cycle, enable/disable, and kilowatt rating data. As the point components may include multiple points, a reference count is used to track how many points are sharing the same control strategy. Therefore, the execution manager 84 can keep track of how many times it must loop through the steps performed with respect to controllable points.

The execution manager 84 then sorts the point components by site (i.e., local and remote) and only points components that satisfy the criteria for the current execution cycle are executed. For example, the criteria, may include override schedule conditions, such as shown in the override schedule object 130 of Figure 8, or any other criteria which may be required of the point for the point to be commanded or monitored, such as being enable. The execution manager 84 then performs the remaining steps for the point components at each site. In other words, the execution manager 84 loops through all the sites, as represented by the loop 200.

The execution manager 84 then makes a connection to the particular site being executed, if it is not already connected. For remote sites that are being looped through this may mean a modem dial-up procedure, as would be readily known to one skilled in the art. After connection is made, an execution loop through all the point components at the particular site being executed is performed. Historical information for each of the points of the point components being executed is loaded. For example, for controllable points, information relating to the previous command sent to the building management system 60 for commanding the point is loaded. If the point is a part of a group, then control schedule information, which will be described in further detail below with respect to the interface description, for the group is loaded; if it is not already loaded. Otherwise, control schedule information for the point being executed is loaded. Further, override information for the various points is also loaded as historical data for the point.

The execution manager 84 then performs a reading of the current value of a point being monitored or commanded. The real-time pricing control software 56 is notified that a new value for a point has been determined and any application interface windows displaying that information are updated. For example, the current value for the monitored or command point is read via the building management system 60.

The updating of related application interface windows by the real-time software 56 may be performed for various application interface windows with respect to various types of events. In the present invention, a globally available update object is utilized with relationships to various application windows such that certain types of changes are accessible by such application interface windows. For example, different application interface windows may want to be advised of and updated with respect to events such as changes in the dynamic state of a point component, changes in the organization of pint components, and changes in login. Further, such application interface windows may be advised of such events prior to their occurrence. The advised interface windows can then accept or reject such potential actions, such as, for example, a change in the configuration of a point component, i.e. normal to rapid cycle time, rapid cycle intervals, deletion of components, renaming of components, change of group membership, and change of enabled state of a point.

By reading the current value of a point as described above, the real-time pricing control software 56 is looking to see if the building management system software 60 allowed the real-time pricing control software 56 to command the particular point or whether the building management system software 60 overrode the real-time pricing control point command. This information is necessary for reports generated by the report writer 76 to evaluate system performance.

With respect to points being monitored, no further steps are performed by the execution manager 84. For example, if the execution cycle was only for monitored points, the execution manager 84 would loop back directly to the point prior to collecting historical information for the point as indicated by loop 206 and perform the loop for all the monitored points at the site. After all the monitored points are read, execution manager would disconnect from the site, as represented by line 204. The execution manager 84 would then loop back via loop 200 to perform execution loops through all the remainder sites.

However, if the execution manager 84 is also executing with respect to controllable points, then the remainder of the steps (i.e. starting with energy savings computation) are performed with respect to the controllable points. With respect to each controllable point, the energy savings information is computed. The real-time pricing control software 56 of the present invention computes energy savings for digital, multistage digital, and analog points as shall be described further below with respect to the interface description.

After the energy savings information is computed for the point, then all the unresolved elements, or unknown elements, of the control strategy are evaluated. For example, calls are made to the occupancy schedule to determine whether the occupancy schedule affects the command to be sent for the particular point, calls are made to determine point conditions which affect the control strategy of a point to be determined, and any other functional calls are made which have effect on the control strategy evaluation. The control strategy then determines the command to be sent to the point. When the command is sent, the command priority and residual priority for the point, as previously described herein, are also sent. The command is sent to the building management system 60 with the command and residual priority via the building management system server 57, Figure 2.

It should be noted that the first time the control strategy is executed for a particular point component including a group of points, all elements of the control strategy are evaluated. Later iterations through the same control strategy for points in the group of the point component only need occupancy information (if utilized) with regard to the additional points of the group to resolve the command for the additional points. As shown in the flow diagram, the command is then sent.

After the command is sent to the point via the building management system 60, historical information for the point is computed and saved in the real-time pricing control database 54. For example, the building management system 60 returns a value to the real-time pricing control system indicating that the real-time pricing control point command was successful or not, i.e., the software 56 is notified that the point commanded has been executed or not. It should be noted that since execution cycles are performed in the background of the system and the database can only be updated in the foreground, the updates to the database 54 are done by sending messages through a foreground message loop.

After one point of the site has been through the execution cycle, the execution manager proceeds or loops through all the points at the particular site, as represented by loop 202. Once all the points at the particular site are executed, then communication with the site is disconnected. As indicated before, the execution loop then proceeds through all the remainder sites, as shown by the loop 200. The cycle then repeats itself, such as, for example, on an hourly basis, or as otherwise determined by the timer of the real-time pricing control document as shown in the object orientated diagrams previously described and as may be specified by the user.

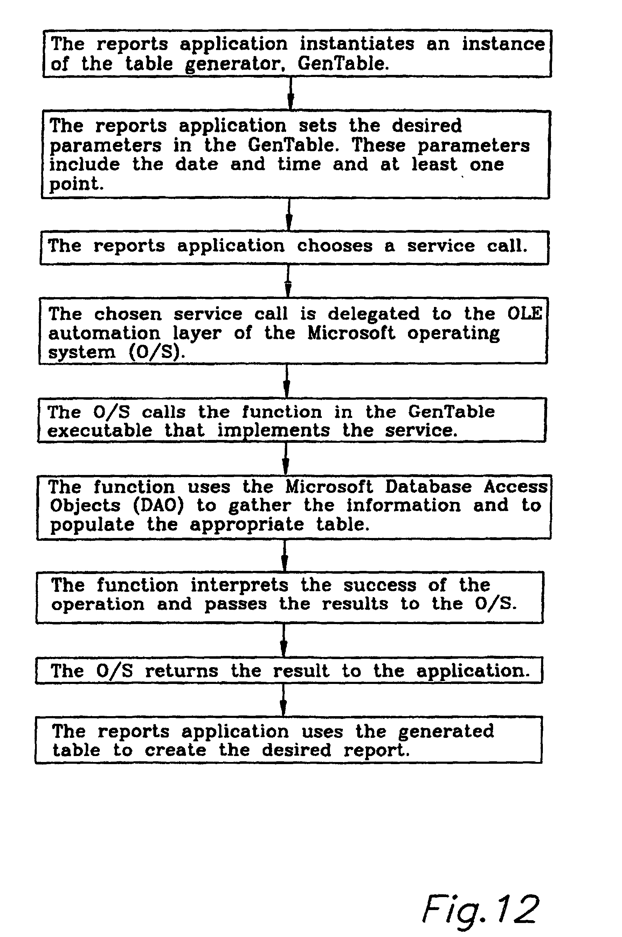

The information stored in the real-time pricing control database 54, including utility rate history, execution history, daily totals for energy savings, control strategies, configuration parameters, user lists, and user privilege levels, can then be utilized by the report writer 55 to generate various reports for utilization by the operator or user, such as in determining the benefits of the real-time pricing control system 50. The report writer 55, Gen Table 76, and the process flow diagram for the Gen Table 76 (Figure 12), shall be described in further detail after description of the real-time pricing control software 56 interface.

The user interface for the real-time pricing control system 50 shall be described with reference to Figures 13-33. The description with respect to the interface describes the use and operation of the real-time pricing control software 56 that provides tools for automatically controlling the environment with use of a building management system 60 to save energy based on real-time utility rates received from utility master 14. The system provides users with the ability to import points from the building management system 60, set real-time pricing control software configuration parameters, define groups for controlling several points using the same control strategy, define control strategies that allow the command of point components depending upon the value of the current real-time utility rate, suspend real-time pricing control for points during some time interval in the future, specify default rates to use in different seasons of the year (the default rates being editable), and define points or groups of points (i.e., point components) that are frequently monitored. Further, the real-time pricing control system 50 allows for modification of control strategies to maximize energy savings. Such modifications of control strategies being, at least in part, based on analysis of the system's 50 performance using reports generated from the report writer 55, Figure 2. Such operation and functionality shall now be described with reference to the interface illustration.

Figure 13 is an interface illustration of the real-time pricing control main application window. The main real-time pricing control application window includes four minimized child windows, including minimized group definition window 265, minimized Control Schedule window 258, minimized Control Strategy window 260, and minimized Navigator window 262. The main window has a title bar 256 explaining the log-in name of the current user and menu bar 250 including pull down menus: File, View, Setup, Window, and Help. The status bar 264 is divided up into five sections. The View pull down menu items include a Navigator selection that allows the user to make the Navigator window the active window. The View pull down menu further includes a Control Strategy selection menu choice, which allows the user to navigate the Control Strategy window for the point or group currently selected in the Navigator to view or edit a control strategy therein. Further, the pull down View menu includes a Control Schedule menu choice, which allows the user to navigate the Control Schedule window for the point or group currently selected in the Navigator. A Control Schedule cannot be accessed until the user has defined a control strategy, and the real-time pricing control software 56 cannot command a point or group until a control strategy for that point or group (i.e., point component) has been defined.

The five sections of the status bar 264 provide status information on the use of real-time and default utility rate information. The alarm status box 220 displays the words "Rate Late" if the utility rates have not arrived by the expected time. The operator specifies on a configuration dialog screen as described further below, the expected time that the real-time pricing control system 50 should receive the utility rates. The alarm status box 220 remains empty as long as the real-time process control software 56 is able to get a real (non-default) utility rate while performing its execution cycle, as previously described. If a real-time rate is not available, the real-time processing control software 56 displays and uses the default rate in the default box 266. If a real-time utility rate is available, the word "Current" is displayed in box 266 and used. Status box 268 displays the utility rate that the real-time processing control software 56 currently uses to evaluate the control strategy. This rate could be either a real-time utility rate or a default rate. Status box 272 displays the current system date and time. The system 50 utilizes the current system date and time to monitor whether utility rates are late or not.

The Setup menu, as shown in the interface illustration of Figure 14, allows the user to make changes to any of the Setup menu choices. The pull down Setup menu includes a Default Rates menu item which when clicked displays the Default Rates dialog, as explained further below, that allows the user to define the default rates. When the real-time pricing control software 56 does not get a current utility rate, it uses a default utility rate. A Group Definition menu choice 282 when clicked displays the Group Definition window, as further described below, that allows the user to create, rename, change the membership of, and remove controllable point groups and monitored point groups. The Configure menu bar choice, when selected, allows the user to view and set the following real-time pricing control software parameters: real-time pricing control cycle intervals, defaults for command and residual priorities, maximum point priorities, monitored point cycle intervals, and normal times for receiving utility rates. The User Setup menu item, when selected, presents a dialog allowing the user to maintain a list of all users of the system and assign privilege levels for each user. Further, the pull down Setup menu includes an Import Points dialog choice which allows the user to import selected points from the building management system 60 to the real-time pricing control system 50 application, as further described below.

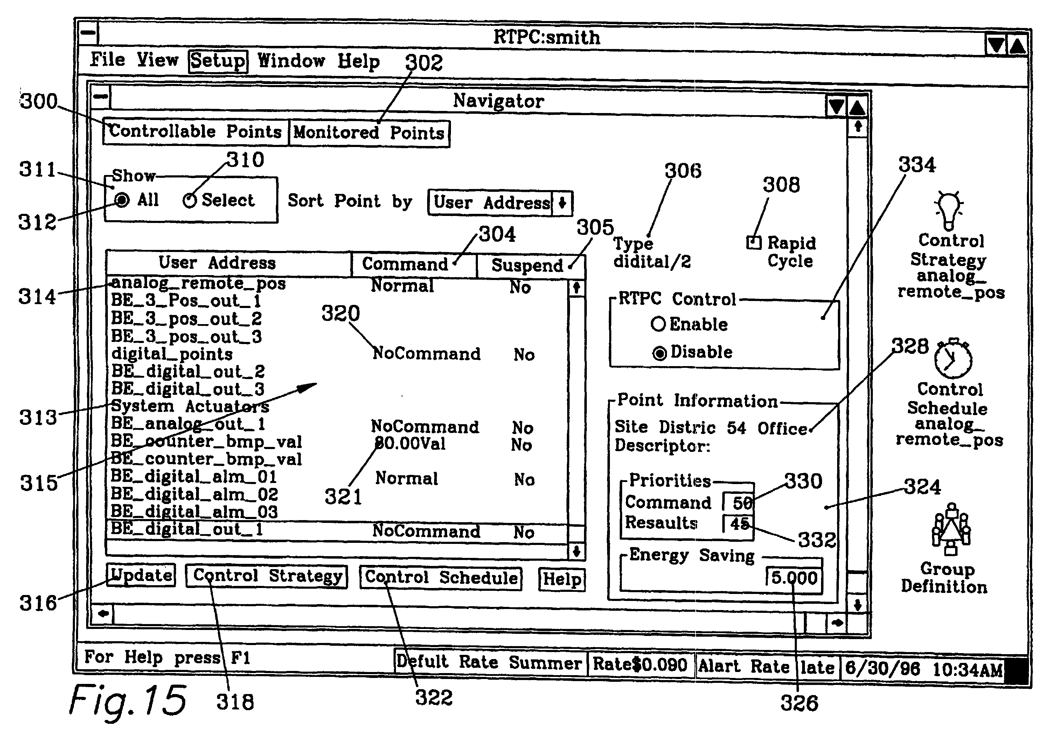

The Navigator window maximized is shown in the interface illustration of Figure 15. When maximized, the Navigator window includes a Controllable Points tab 300 and a Monitored Points tab 302. The Controllable Points tab 300, when selected, shows a list 315 of all points and groups controlled by the real-time pricing control software 56. The real-time pricing control software 56 displays group names in boldface type to distinguish them from single points. A double-click on the group in boldface will expand it, showing all the points contained therein or contract it, hiding the contained points. The real-time pricing command software 56 has a System Actuators group 313 for controllable points. Each point in this group has its own control strategy. A boldface group, i.e. point component, 314 is a group of points defined by the user. It has one control strategy that all points in this group share.

A Command column 304 in the Navigator window shows the last command the real-time pricing control software 56 sent for the points displayed. For example, a "not-available" in the Command column 304 means that the real-time pricing control software 56 was not able to access this point the last time it tried to command the point. Further, a "no command" 320 in the Command column 304 means that the real-time pricing control software 56 was not attempting to command this point at all. Otherwise, the command generated for the point is listed, such as, for example, the 80.00 Val command 321.

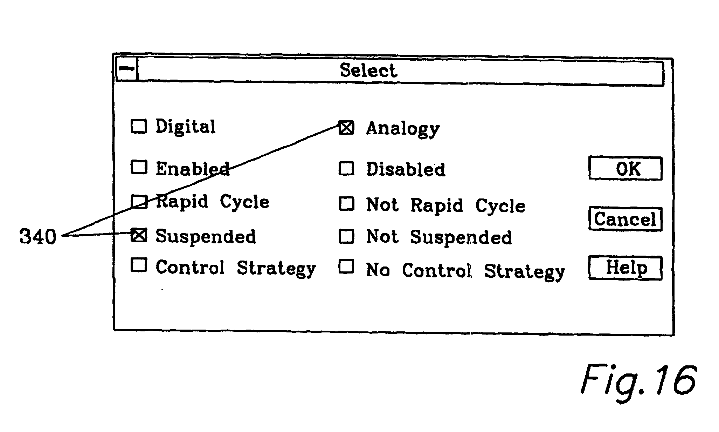

The real-time pricing control software 56 displays a list of points on several windows and dialogs. Above the list 315 is a Show box 311 that allows the user to select one of the following buttons: All 312 or Select 310. If the All button is selected, all the points in the list are shown, and if the Select button 310 is selected, a dialog (Figure 16) is displayed for the user to select attributes of points that determine which points the real-time pricing control software 56 shall display.

As shown in Figure 16, the select dialog allows the user to select the point attributes including: Digital, Enabled, Rapid Cycle, Suspended, Control Strategy, Analog, Disabled, Not Rapid Cycle, Not Suspended, and No Control Strategy. For example, with the two selections shown by reference 340, the real-time pricing control software 56 displays only suspended and analog points.

The Real-Time Pricing Control box 334 displays whether the selected point component in the list 315 is disabled. Real-time pricing control software 56 only attempts to command points or groups of points that are enabled. Also displayed above the real-time pricing control box 334 is the type of the selected point component; for example, digital two-state, digital three-state, or analog. The Rapid Cycle unchecked box 308 indicates that the selected point component in the list 315 is set to normal cycle for execution (i.e., for example, hourly execution cycles). However, point components can be selected and this box 308 set to perform them in rapid cycle.

Before a point in the System Actuators group 313 can be controlled, a control strategy must be defined for the point. All points contained in the System Actuators group, as mentioned previously, must have their own control strategy and therefore be individually controlled. All groups of points must also have a control strategy defined for them before the points of the group can be controlled. Additional point information is available in Point Information box 324 with respect to the selected point component. Such information includes the site of the point and a point descriptor 328, command priority 330, residual priority 332, and a kilowatt rating 326 for use in calculation of energy savings.

The maximized Navigator window shown in Figure 15, further includes a Control Strategy button 318 which, when selected, displays a Control Strategy window, as described further below. The control strategy determines how the real-time pricing control software 56 commands a point component based on the current utility rate information from the rate database 52. The control strategy can be edited or one can be created for the selected point component.

The maximized Navigator window also includes a Control Schedule button 322 which, when clicked, displays a Control Schedule window, as shown in further detail below, which allows the user to suspend real-time pricing control of point components for a specified time interval. A control strategy for a point component must be specified before the Control Schedule button 322 is enabled. The list of point components 315 also includes a Suspend column 305 for indicating whether a point component was suspended for an interval of time, as defined in a Control Schedule.

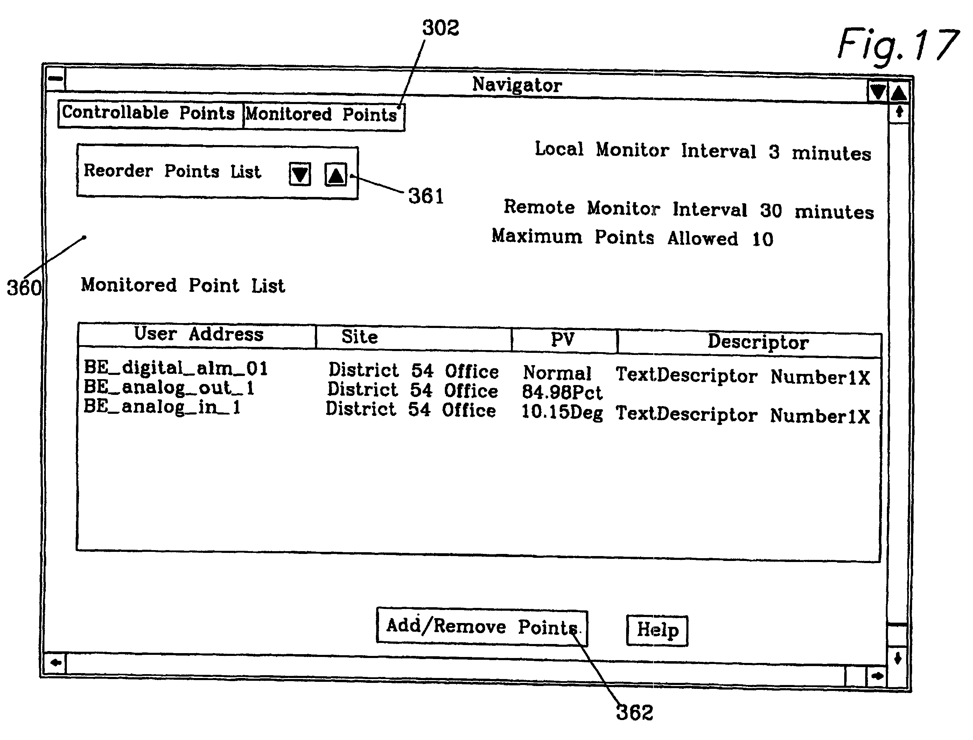

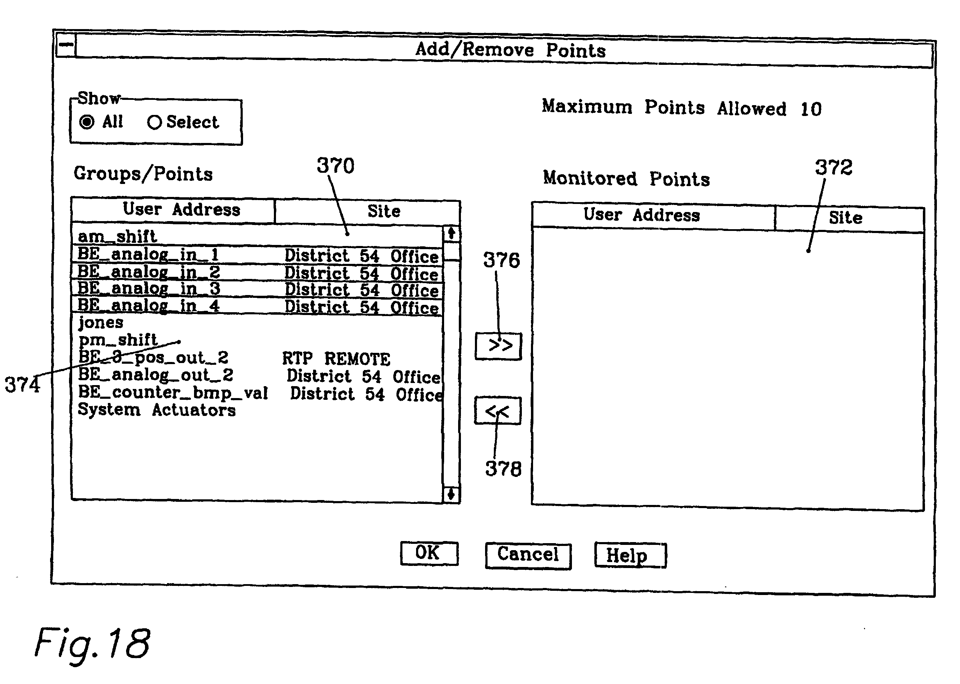

The Monitored Points tab of the maximized Navigator window, when selected, allows the user to monitor process values of a selected set of points, such as sensors to be used as point conditions, other points to be utilized as point conditions or just for user knowledge with regard to such points. When selected, the Monitored Points tab is displayed, as shown in the interface illustration of Figure 17. The interface illustration includes a list 360 of the points that the real-time pricing control software 56 monitors, a box 361 for reordering the points, and information with regard to the points, such as the point or user address, the site, the present commanded value for the point component, the interval utilized for monitoring local points, and the interval utilized for monitoring remote points. Upon selection of the Add/Remove Points button 362, the Add/Remove Points dialog, as shown in the interface illustration of Figure 18, is provided. This Add/Remove Points dialog provides a means for modifying the list of points that the real-time pricing control software 56 monitors. The dialog shows the maximum number of points the user can monitor, as specified in the configuration of the system 50 by the operator or user. All the point components that the real-time pricing control software 56 knows about are listed in the list box 370 with the group names displayed in boldface to distinguish them from point names. Button 376 is utilized to move one or more points from the list in list box 370 to points that are to be monitored, as shown in list box 372, which is currently empty indicating that no points are monitored. Further, button 378 is utilized to remove points from the monitored points list 372.

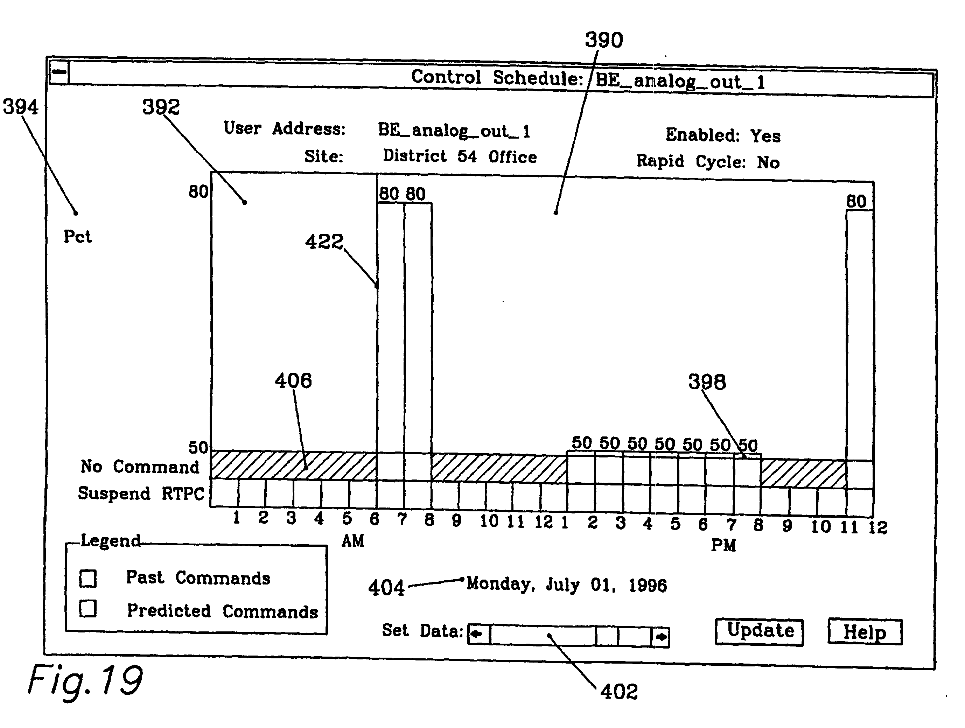

Figure 19 shows an interface illustration of a Control Schedule window for a single analog point. A single analog point was highlighted on the Navigator list 315, Figure 15, and Control Schedule button 322 was activated to make this Control Schedule window accessible. The real-time pricing control software 56 evaluates the control strategy for this point to determine the command value displayed on the schedule. The commands shown here may not be the actual commands sent to the building management system 60, as real-time pricing control software 56 cannot predict the criteria for a particular control strategy. If real-time utility rates are not available, the real-time pricing control software 56 will utilize default rates to generate the commands shown on this window.

The Control Schedule window includes the display of command value units 394, such as, for analog points, percentages of operation. Any commands displayed within the background 392, are commands the real-time pricing control software 56 sent to the building management system 60 in the past. Any commands displayed within the other background 390, are commands real-time pricing control software 56 predicts will be sent in the future. As shown by the blackened block 406, the real-time pricing control software 56 sent a "no command" to the building management system 60 for the five consecutive hours. Bar 398 represents a predicted command of 50%. Bar control 402 allows the user to view the schedule for a different date by scrolling. Further, the Control Schedule window includes a suspend real-time pricing command bar 412.

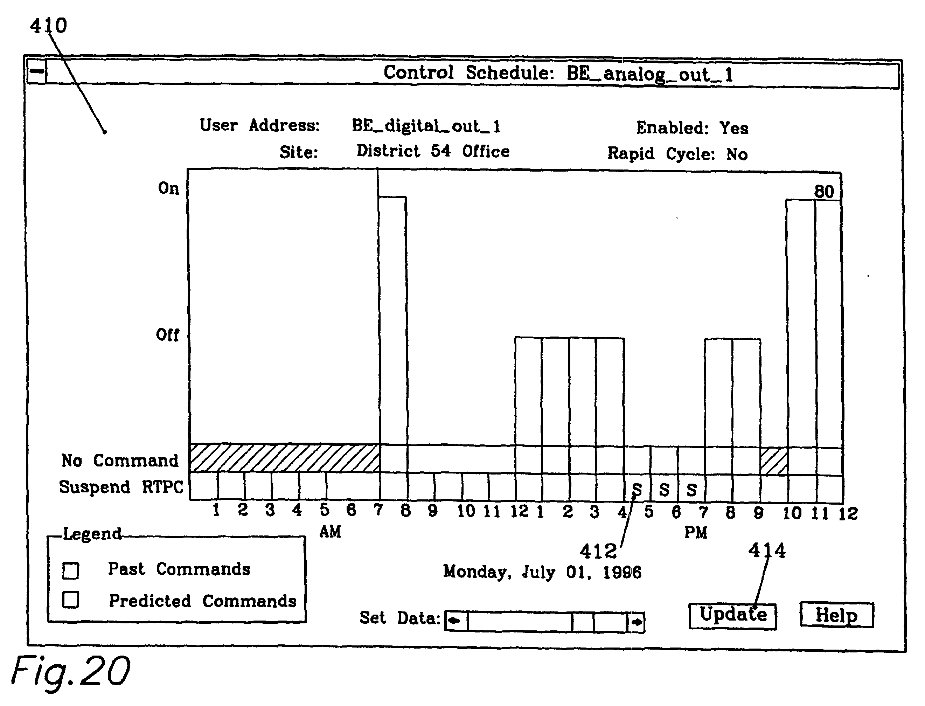

As shown in the interface illustration of Figure 20, which includes a Control Schedule window for a single digital point, the suspend bar 412 can be clicked to suspend or unsuspend the real-time pricing control software 56 with respect to the particular point addressed. The Control Schedule window displays a letter "S" on the button of the bar 412 indicating that real-time pricing control software 56 is to be suspended for this particular point during this particular interval of time, i.e., three hours. The Update button 414 is clicked in order to save any particular suspend commands utilized. Also, as shown in Figure 20, the Control Schedule window includes state descriptors for this particular digital point along the Y axis i.e., a two-state digital point component, of On/Off.

Control Schedule windows are also available for point components that are a group of analog points. Such Control Schedule windows are substantially like the interface illustration of Figure 19, except that the bars would represent the past average values or predicted average values for the points in the group, as opposed to the point values for single points. Further, the screen would list how many of the particular points of the group were enabled. Suspension of a group of points would be performed in the same manner as suspension of one particular point.

Likewise, Control Schedule windows for point components that include a group of digital points are substantially similar to the interface illustration as shown in Figure 20. However, when real-time pricing control software 56 commands points of a group of digital points, each point could have a different command value if the occupancy schedule is used. Rather than display average command values in the Control Schedule window, real-time pricing control displays only the command value of the first point in the group of digital points. The commands for disabled points or points whose commands failed are ignored. Only points that are enabled and for which real-time pricing control software 56 successfully commanded are used for determining the past history. All the actual command values are available for the digital group in a reports application available through the report writer 55.

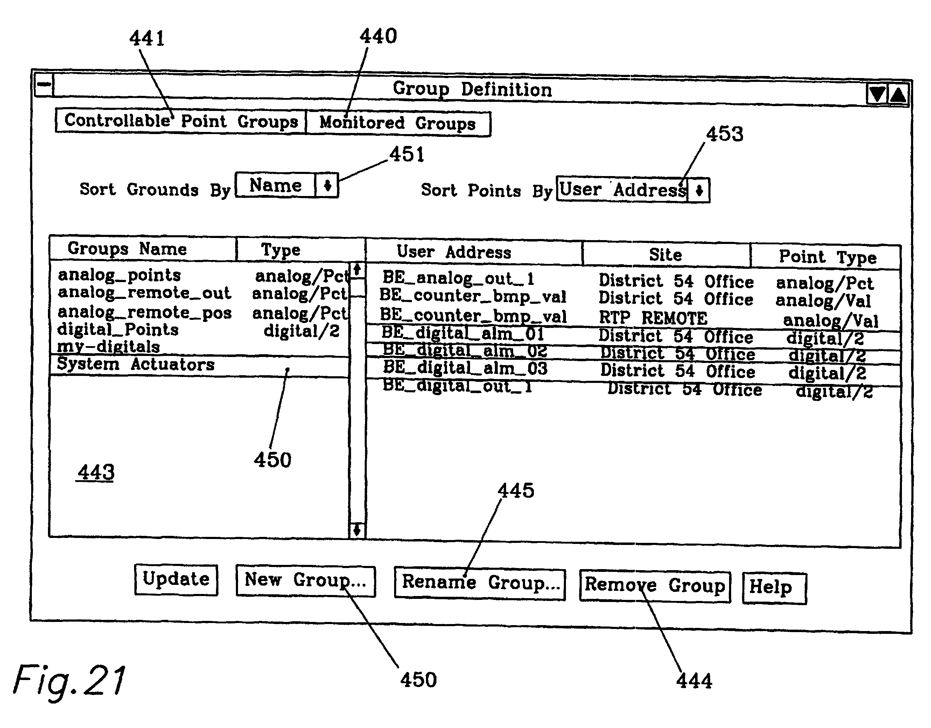

Figure 21 is an illustration for the Group Definition window accessible via the Setup pull down window of Figure 14. The Group Definition window includes a Controllable Point Groups tab 441 and a Monitored Point Groups tab 440. Both these tabs 440, 441 have similar structure and therefore only the Controllable Point Groups tab 441 is illustrated. The Controllable Point Groups tab 441 allows the user to create, rename, change the membership of, and remove controllable groups. By defining a controllable group the user allows the real-time pricing control software 56 to command a set of similar points using only one control strategy. When a group name 450 is clicked, the right-hand side of the list box 443 displays a list of the points in that group. These points can be selected and dragged to other groups. The New Group button 442 allows the user to create a new group. Rename Group button 445 allows the group to be renamed, and Remove Group button 444, when selected, allows a user to remove the selected group.

When a point group is removed, all the points in it are moved into an appropriate system group, such as System Actuators group. The groups may be sorted by various attributes in the Group Definition window using Sort Groups By box 451. The points listed in the list box 443 may be sorted using the Sort Points By box 453. For example, the groups could be sorted by type, and, further, for example, the points could be sorted by user address or site.

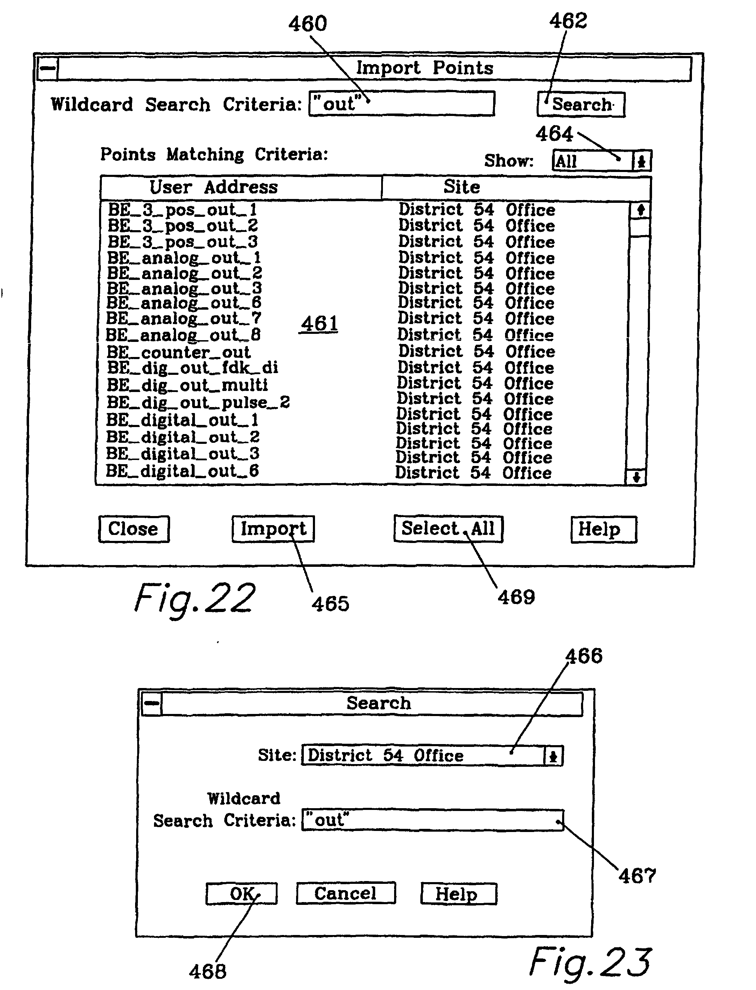

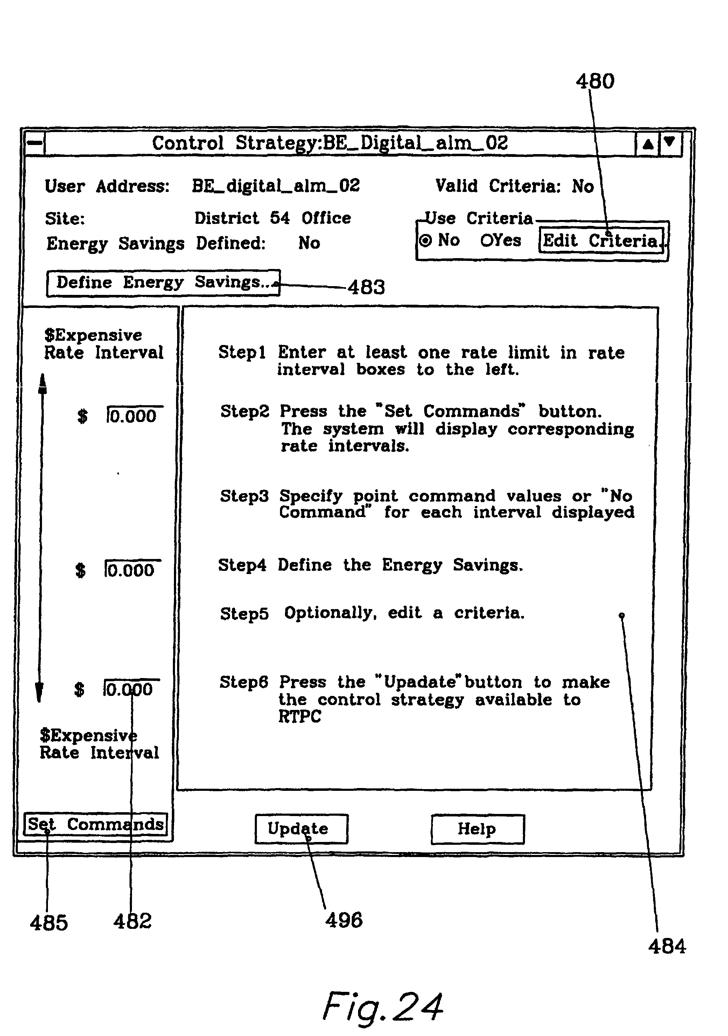

Figure 22 is an interface illustration of an Import Points dialog window. The Import Points dialog window and functionality of the real-time pricing control software allows the user to import selected points from the building management system 60 to the real-time pricing control software application 56. When real-time pricing control software 56 is installed, it does not contain any points. Import of points for real-time pricing control software 56 from the building management system 60 must be performed for the system to function. The Import Points window, as shown in Figure 23, includes a Search button 462 which brings up the Search dialog, as shown in Figure 23. The Search dialog as shown in Figure 23 allows the user to specify a site and a search criteria to retrieve a list of points to import. Such point information is retrieved using the building management system server 57, as previously described. The wildcard search criteria 467 of the Search dialog and site criteria 466, shown in Figure 23, define the search for obtaining the results as displayed in list 461 of Figure 22. The list 461 is updated after the OK button 468 is clicked. In other words, the list 461 of Figure 22 contains all the points that match the search criteria specified in the search dialog of Figure 23. If no points match the criteria of the Search dialog, the real-time pricing control software 56 informs the user with an appropriate message.

With the list 461 displaying all the resulting points of the search criteria, the real-time pricing control software 56 displays the last wildcard search criteria in wildcard search criteria box 460. The list 461 employs two choices in Show drop down list 464; All and Not Imported. By choosing All, all points matching the search criteria are displayed. By choosing Not Imported of the Show drop down list 464, only points that match the criteria that have not yet been imported into the real-time pricing control's software 56 are displayed. The Select All button 469 can be utilized to highlight all points in the list 461 for import via the IMPORT button 465, or otherwise points can be selected by clicking thereon and then selected points will be imported from the building management system 60 to the real-time pricing control software 56 upon clicking of the Import button 465.

Figure 24 shows an interface illustration for a Control Strategy window. Control Strategy windows are accessible by highlighting the point component in the Navigator point component list 315 and then selecting the Control Strategy button 318, as shown in Figure 15. The Control Strategy window of Figure 24 is for a single digital point. Before creating a valid control strategy, energy savings must be defined by selection of Define Energy Savings button 483. Definition of energy savings shall be described further below with reference to several other figures.

As the control strategy is fairly complex to define, a help screen 484 is automatically generated to guide the user through the process. As indicated by the help screen 484, first, at least one rate limit in rate interval boxes 482 is entered. Then, the Set Commands button 485 is clicked and the system displays corresponding rate intervals. Point command values or no command is then specified for each rate interval or range, energy savings is to be specified, criteria is to be defined if desired, and the Update button 496 is selected to make the control strategy for the point component available to the real-time control software 56 for use.

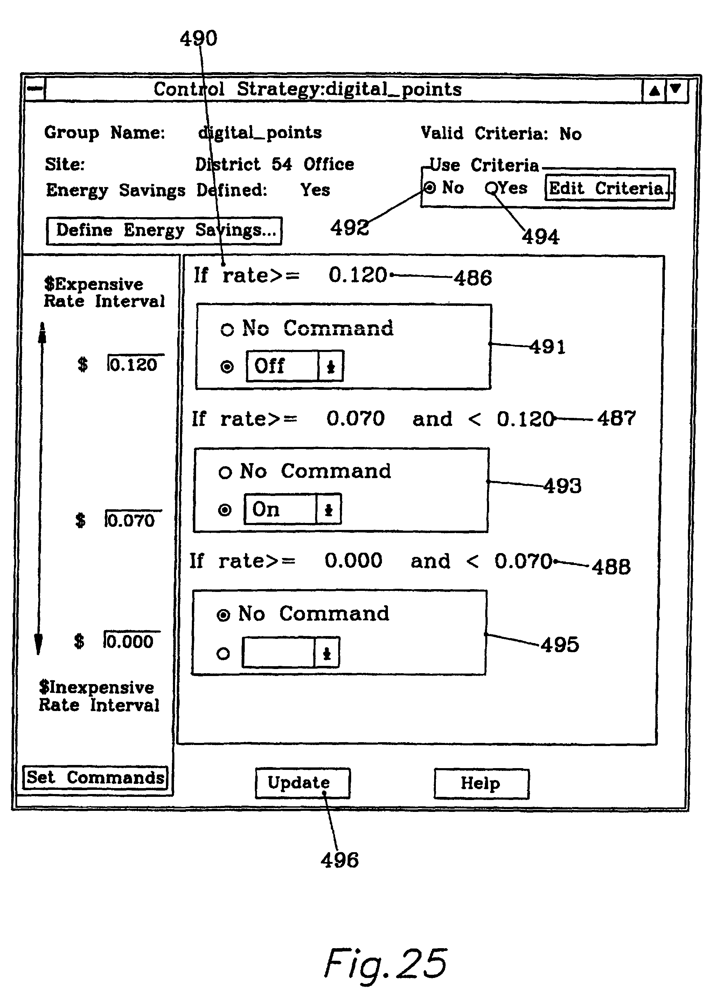

A rate intervals calculation is shown in Figure 25, which shows a Control Strategy window for a group of digital points. The rate intervals calculated, for example, are shown as a rate greater than or equal to a first value (i.e., 0.120). A point command is to be specified in the point command box 491 for this interval. The point command box 491 allows a user to issue no command to the building management system 60 if the utility rate is greater than the rate listed (i.e., 0.120) or allows the user to either select an OFF or ON command for this same interval. Likewise, a point command is specified in point command box 493 for the interval shown at line 487 and a point command is specified in point command box 495 for the interval shown at line 488.

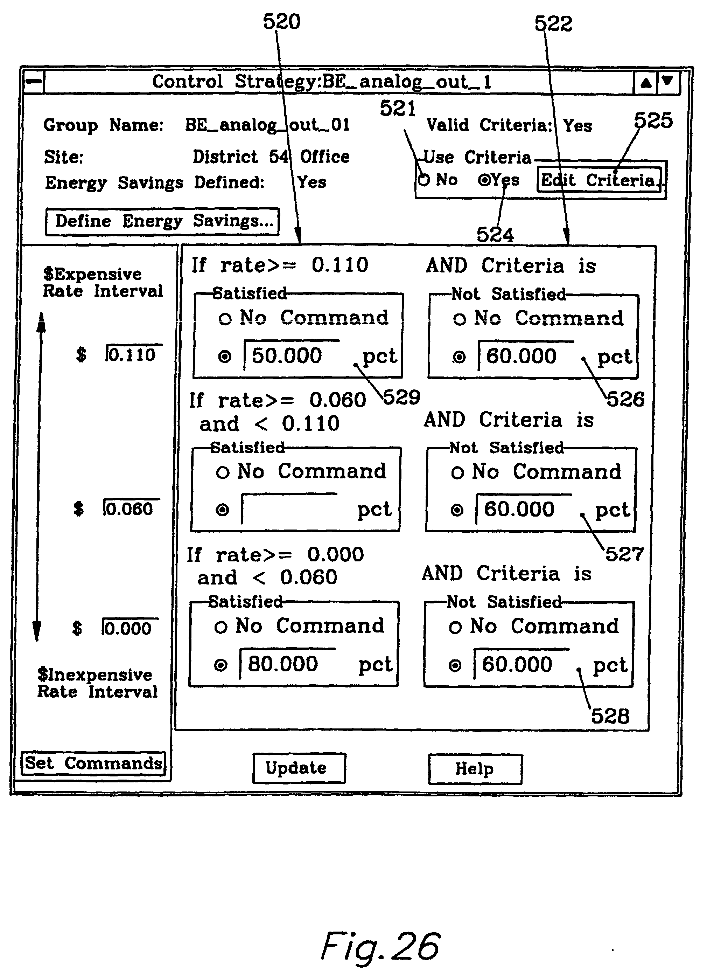

The control strategies shown in Figures 24 and 25 do not utilize criteria, as indicated by Use Criteria block 494 in which the "no" is selected. The Use Criteria box 492 also includes a "yes" selection 494 which, as described further below with reference to Figure 26-28, allows criteria to be utilized with the utility rate intervals in order to further define the control strategy.

Figure 26 shows an interface illustration of a Control Strategy window utilizing both utility rate intervals and criteria for the control strategy. Use of criteria can be specified by choosing the Yes button 524 of the Use Criteria box 521 of Figure 26. The real-time pricing control software 56 then generates two columns of rate intervals. The real-time pricing control software 56 generates a first column 520 for use when the criteria are satisfied and a second column 522 for use when the criteria are not satisfied. Real-time pricing control software 56 evaluates the rate intervals of column 520 when the criteria are satisfied and evaluates the rate intervals of column 522 when the criteria are not satisfied. The use of criteria and satisfied and not satisfied criteria has been shown previously in the object-orientated diagram Figure 9 wherein the relationship between the real-time pricing control object 140 and the command object 142 are connected by criteria false commands and criteria true commands.

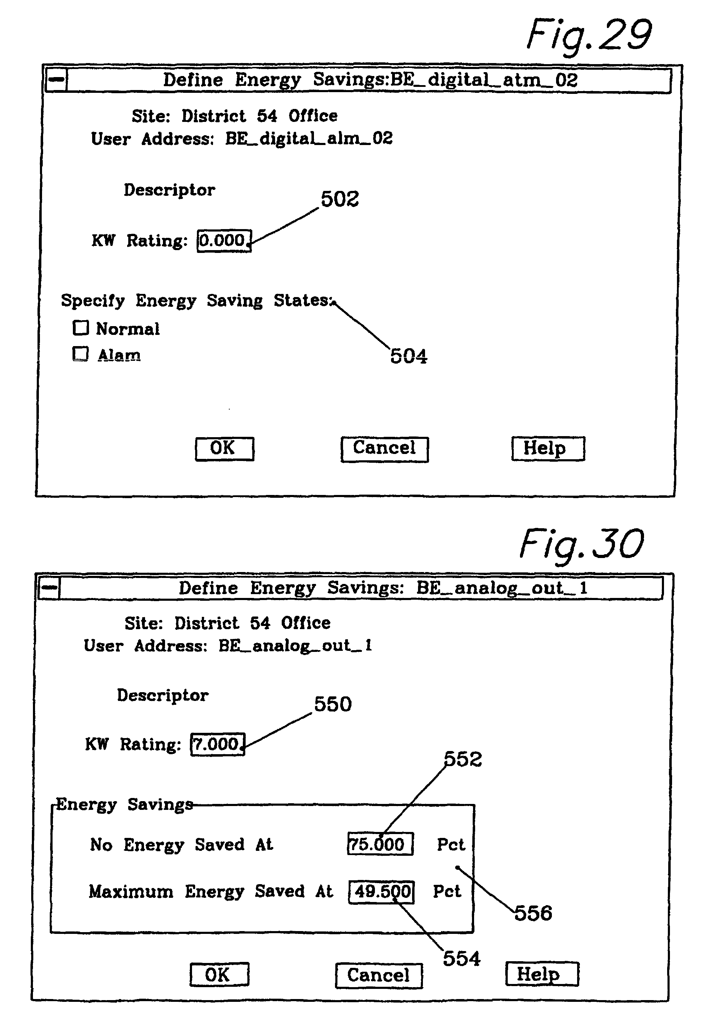

With the use of the criteria, command boxes 526-528 are utilized to specify whether a "no" command is to be performed when the criteria is not satisfied, or whether a percentage command is to be sent (or state command if point is digital). Note that the commands in command boxes 526-528 are percentage commands, as the Control Strategy window shown in Figure 26 is for an analog point. As an illustration of a control strategy utilizing both rate intervals and criteria, Figure 30 is described in further detail. If the rate is greater than or equal to 0.110, and the criteria is satisfied, the point is commanded to 50%. However, if the rate is greater than or equal to 0.110 and the criteria is not satisfied, the real-time pricing control software 56 sends a command of 60% to the building management system 60. Such satisfied and non-satisfied command boxes are defined for each of the rate intervals utilized.

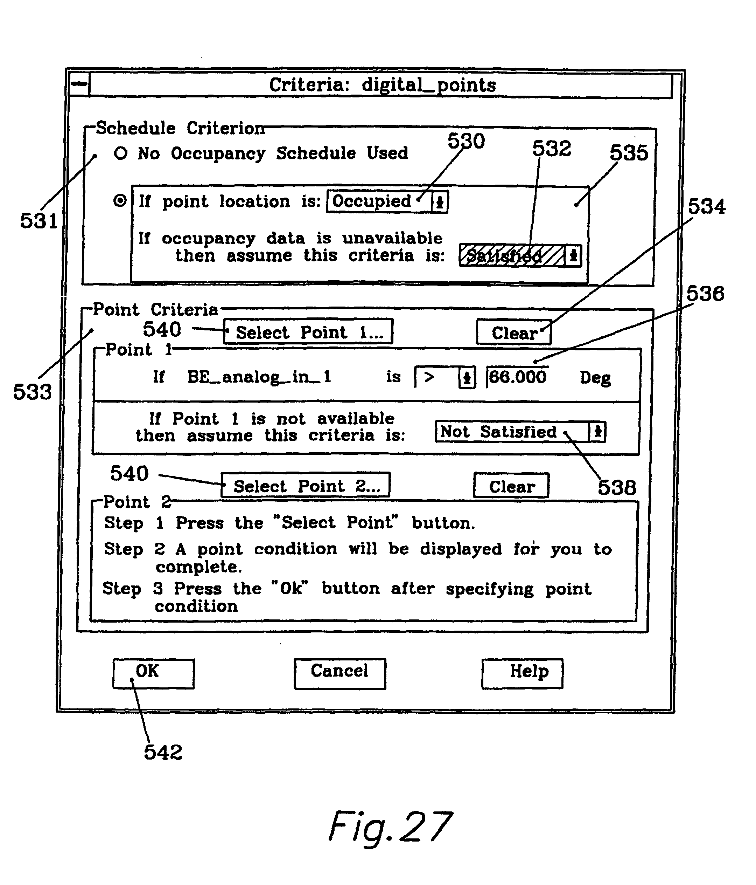

By selecting the Edit Criteria button 525, as shown in Figure 26, a Criteria dialog is accessed as shown in Figure 27. The Criteria dialog includes a Schedule Criterion box 531 for selecting whether an occupancy schedule is to be utilized or not and a Point Criteria box 533 to define point conditions. If an occupancy schedule is to be utilized, then a further dialog box 535 with respect to use of an occupancy schedule is accessed. Criteria is then specified therein. For example, a criteria may be if the point location is occupied or unoccupied 530. Further, the box 535 allows the user to specify whether the criteria is satisfied or unsatisfied 532 if occupancy data is unavailable.

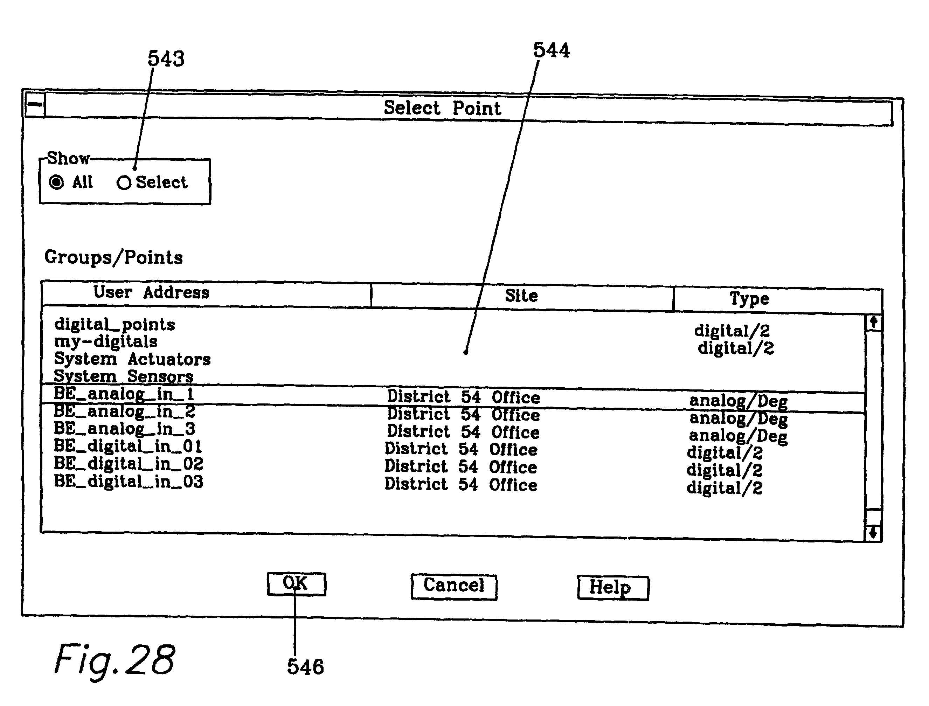

The Point Criteria box 533 allows the control strategy to be defined in terms of another point's condition. For example, in box 536 it can be specified that for the criteria of the control strategy to be satisfied, that a selected point is greater than a particular value, as indicated in box 536. Further, it is to be specified that if such information is not available, that the point criteria is either satisfied or not satisfied as shown by box 538. Further, more than one point may be utilized for point criteria; such point may be a controllable point, a monitored point, or any other point. The Clear button 534 may be utilized to remove the point criteria, and the OK button is utilized to accept the criteria defined. To select the point for the Point Criteria box 533, the user selects button 540 which results in a Select Point dialog, as shown in Figure 28. The Select Point dialog provides a list box 544 that contains the names of points and groups. A point may be selected using Show box 542 and clicking on the particular point in order to select that point for use in Point Criteria box 533. Clicking on the OK button 546 when a point is selected will cause the real-time pricing control software 56 to display that particular point in the point criteria box 533, and the user is then allowed to more specifically define the point criteria and conditions for that particular point

As described with regard to Figures 24-28, a control strategy is defined by the user based on rate intervals and other criteria. The rate interval information for use in the control strategy is required; however, the other criteria (for example, point criteria) is optional. The control strategy specified by the user using this user interface is utilized by the real-time pricing control software 56 during the execution cycle to determine the point command to send to the building management system 60.

As indicated above, prior to the real-time pricing control software 56 using the control strategy, energy savings information for points must be defined. Upon selection of the Define Energy Savings button 483, as shown in Figure 24 a Define Energy Savings dialog is accessed. As shown in Figure 29, Define Energy Savings dialog for a single digital point includes information with regard to the site of the digital point, the user address of the digital point, a descriptor of the digital point, a kilowatt rating box 502 to be completed by the user, and a check box 504 for each possible state for the particular digital point. In this particular example, the digital point has a normal and an alarm state. At least one state where the real-time pricing control software 56 would save energy if it commands a point at this state must be specified in the check box 504. It is unlikely that the user would specify all states as capable of energy savings, as this would mean that the real-time pricing control software 56 is always saving energy, which is unlikely. Further, a non-zero kilowatt rating is specified for the point at box 502.

The Define Energy Savings dialog for defining energy savings for a group of digital points is not shown. However, a kilowatt rating must be specified for each digital point of the group. In addition, at least one state where the real-time pricing control software would save energy, if a point is commanded to this state, must also be specified. However, the state specification is only selected once for the group as the states for all of the digital points in the group are the same. The real-time pricing control software 56 calculates the amount of energy savings by multiplying the kilowatt rating for each point by the number of hours it was commanded to an energy savings state.

Define Energy Savings dialog for an analog point is shown in Figure 30. For an analog point, the user must also enter a kilowatt rating for a point in a kilowatt rating box 550. In addition, an energy savings box 556 must also be completed for the analog point. A percentage must be specified in the box 552 at which the real-time pricing control software 56 saves 0% when it commands the point to the specified percent level. Further, a specified percentage must be defined in box 554. This percentage is the percentage at which maximum energy is saved or the level at which the real-time pricing control software 56 saves 100% when it commands the particular analog point to a value relative to the defined percentage. In other words, a no energy saving command level and a maximum energy savings command level is specified by the user. These two command levels define three ranges of commands: a range where no energy is saved, a range where maximum energy is saved, and a range between the command levels where the amount of energy savings is interpolated. For example, as shown in Figure 30, if the real-time pricing control software 56 commands the analog point to a value between the specified values of 49.5% and 75%, then the software interpolates a percent savings. The real-time pricing control software 56 calculates the amount of energy savings by multiplying the interpolated percent savings times the kilowatt rating for number of hours the point is commanded to this value. As a further illustration, if the kilowatt rating is specified as 7 for the particular analog point, then the real-time pricing control software 56 saves 7 kilowatts for every hour it commands this analog point to a value of 49.5% or less. The percent savings becomes smaller and smaller as the command value increases to 75%, and at 75% or more, the real-time pricing control software 56 records a 0% savings.

Likewise, for a group of analog points, a Define Energy Savings dialog is accessible in which a kilowatt rating can be defined for each and every analog point. An energy savings box substantially the same as energy savings box 556 of Figure 30 is completed in order to calculate the energy savings for each analog point of the group of points.

It should be readily apparent to one skilled in the art that energy savings may be defined by other units, such as, for example, cubic feet per minute for gas or other sources.

Further, a User Setup dialog is accessible via the Setup pull down window 278 of Figure 14 and allows the user to specify a variety of users in addition to giving the particular users different privileges. For example, some users may be allowed to define control strategies as opposed to other users who may be defined as only being allowed to look at reports.

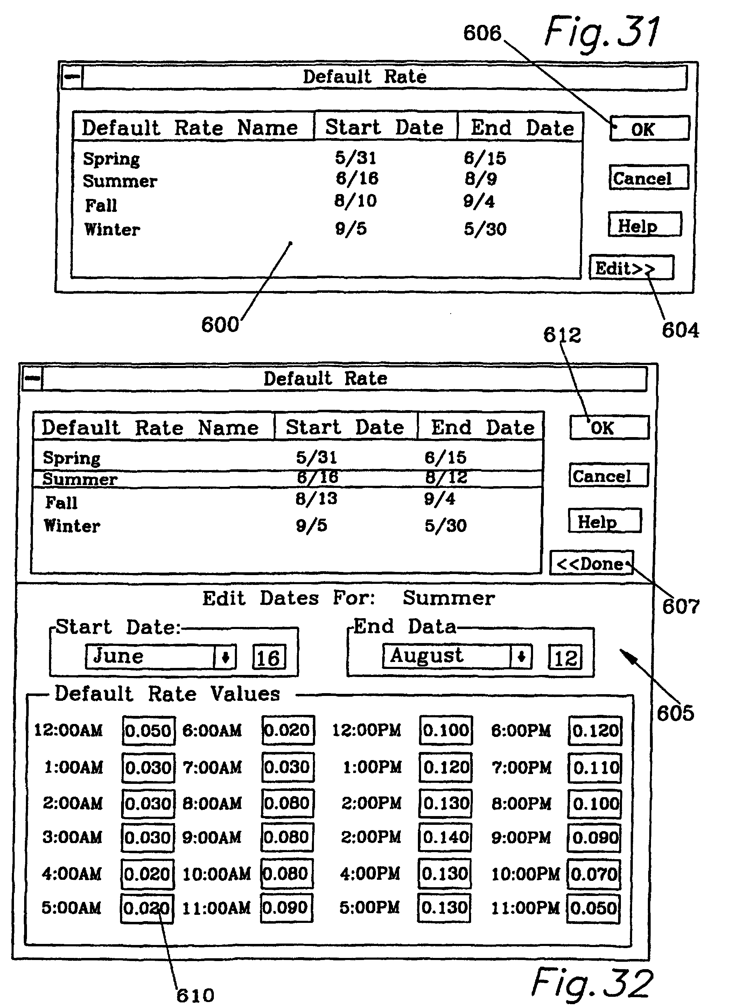

Also accessible via the Setup menu 278 of Figure 14 is a Default Rates dialog, as shown in Figure 31. Real-time pricing control software 56 uses the utility rates from the utility master 14 to evaluate the control strategy for each point component in the real-time pricing control execution cycles. When real-time pricing control software 56 cannot get a current utility rate, it uses a default utility rate defined by way of the Default Rates dialog, as shown in Figures 31-32. A multiple number of default rate periods, such as those displayed in list box 600, may be utilized to provide a set of default rates. For example, the default rates may be specified for spring, summer, fall, and winter with start and end dates as determined by the user. By selecting the Edit button 604 with a default rate period selected in list box 600, a drop-down dialog box 605 allows for editing of the selected default rate values for that particular period selected. For example, as shown in Figure 32, the drop-down dialog 605 is for the selected summer period and the default rate value edit box 610 allows for the user to edit the various rates. After selecting the Edit button 604, real-time pricing control software 56 changes the button label from Edit to Done when the drop down dialog box 605 is provided. When editing a default rate, the user can directly select another default rate period from the list box 600. By selecting the OK button 612, real-time pricing control software 56 closes the edit drop down dialog box 605 and returns the user to the Default Rates dialog, as shown in Figure 31. One skilled in the art will recognize that the present system can be configured to accommodate various and different rate structures and/or intervals other than specifically described herein, both for default rates and any other rate intervals used in the system, i.e. control strategy rate intervals.

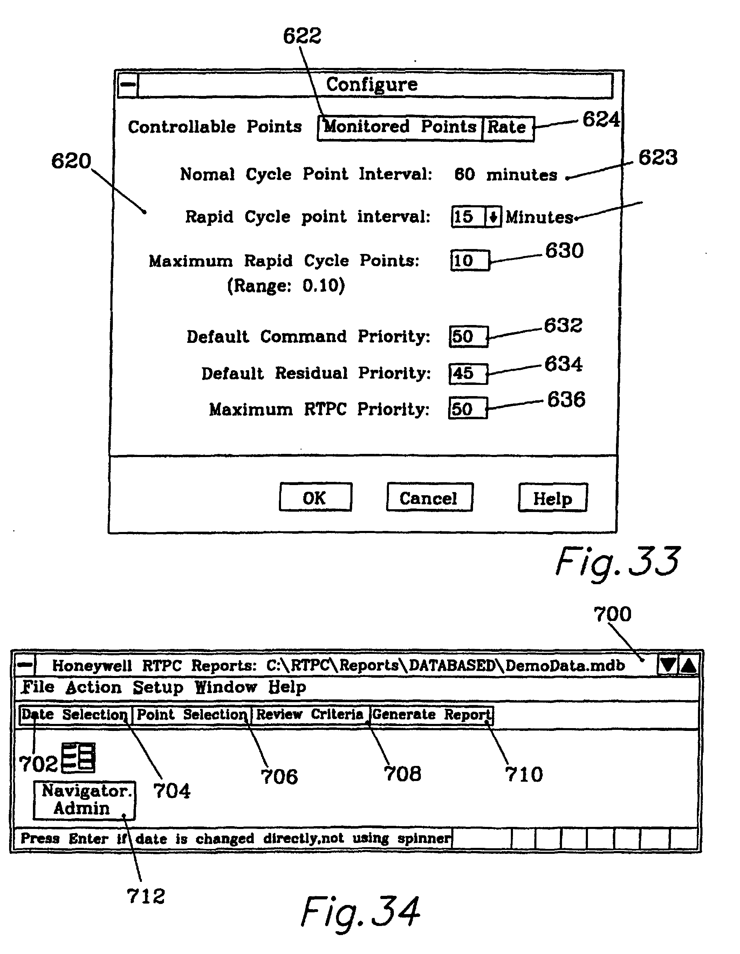

Also accessible from the Setup menu 278 of Figure 14 is a Configure dialog, as shown in Figure 33. The Configure window of Figure 33 includes a Controllable Points tab 620, a Monitor Points tab 622, and a Rates tab 624, all for specifying associated configuration data. In the Controllable Points tab 620, configuration data for parameters related to controllable points are specified. As shown in Figure 33, the normal cycle point interval is shown to the user. The rapid cycle point interval box 628 allows for the commanding of points at a more frequent rate than in the normal cycle point interval. Maximum rapid cycle points box 630 allows only a certain number of points to be selected as rapid cycle points and evaluated at a more frequent interval. Default command priority box 632 allows the user to specify a default command priority for all controllable points and default residual priority box 634 allows the user to specify a default residual priority for all controllable points. Further, a maximum real-time pricing control priority is specified in box 636. Setting the maximum real-time pricing control priority to a reasonable value prevents the user from accidentally setting a points command priority too high. If a user attempts to send a command or residual priority of a point when defining and specifying commandable points, above this maximum priority, real-time pricing control software 56 displays an error message.

The Monitored Points tab 622 allows the user to specify a local point update interval which is the interval at which local points to be monitored are read through the building management system 60. The system may also be allowed to configure a remote site update interval and also a maximum number of points to be monitored. The maximum number of points monitored prevents the user from specifying a number of monitored points greater than this particular value.

The Rates tab 624 allows the user to specify the expected time that real-time pricing control software 56 usually receives utility rates from the utility master 14. If the real-time pricing control software 56 has not yet received the rates by this time, it displays a rate late message in the status bar of the real-time pricing control software main application window, as shown by box 270 in Figure 13. This gives the user that the rates are late.

The real-time pricing control system 50 further includes report writer 55 which provides reports that are based on both current and historical data saved by the real-time pricing control software 56 to real-time pricing control database 54. When the report writer application 55 is started, an interface window appears which asks the user to select, i.e. attach, a historical database for use by the report writer 55. The report writer 55 utilizes a snapshot of the real-time pricing control database 54 when the report writer application is installed on another machine, i.e. the real-time pricing control database 54 is copied to that particular other machine. The report writer 55 is therefore separably operable for generating reports apart from the real-time pricing control software 56.

The report writer 55 generates two basic types of reports. The first type of report is a report that is based on historical data saved in the real-time pricing control database 54. These reports are displayed as a graph that helps analyze how well real-time pricing control software 56 is saving energy. The graphs allow the user to find reasons for periods of low savings and to locate the points whose control strategies may need to be improved. The real-time pricing control report writer 55 uses date, time units, and point information input by the user to determine what data to display on the graphs. The graphs generated by the report writer 55 provide a comparative summary analysis or evaluation of commands, energy usage, and energy savings as opposed to the plotting of historical data. The second type of report is based on non-historical data. The second type of reports are typically on the cunrent configuration of the real-time pricing control system 50.

The report writer 55 provides reports with respect to at least the following: controllable groups, current monitored groups, current real-time pricing control configuration parameters, current users, current default rates, current control strategies, current control strategies that are disabled, history of energy savings, energy usage, real-time utility rates, history of commands sent to the building management system 60, history of command failures, suspends, overrides, no commands sent, history of time and energy savings, historical use of default rates, and historical use of real-time rates.

The report writer 55 is operable on a computing system, such as, for example, a Pentium 90 processing unit with a monitor, having 32 megabytes of RAM memory, 5 megabytes of disk space for installation, and utilizing Windows NT 3.51. The real-time pricing control database 54 is, for example, a Microsoft Access database. When the report writer 55 is installed, run-time versions of Microsoft Access and Microsoft Graph are also installed.

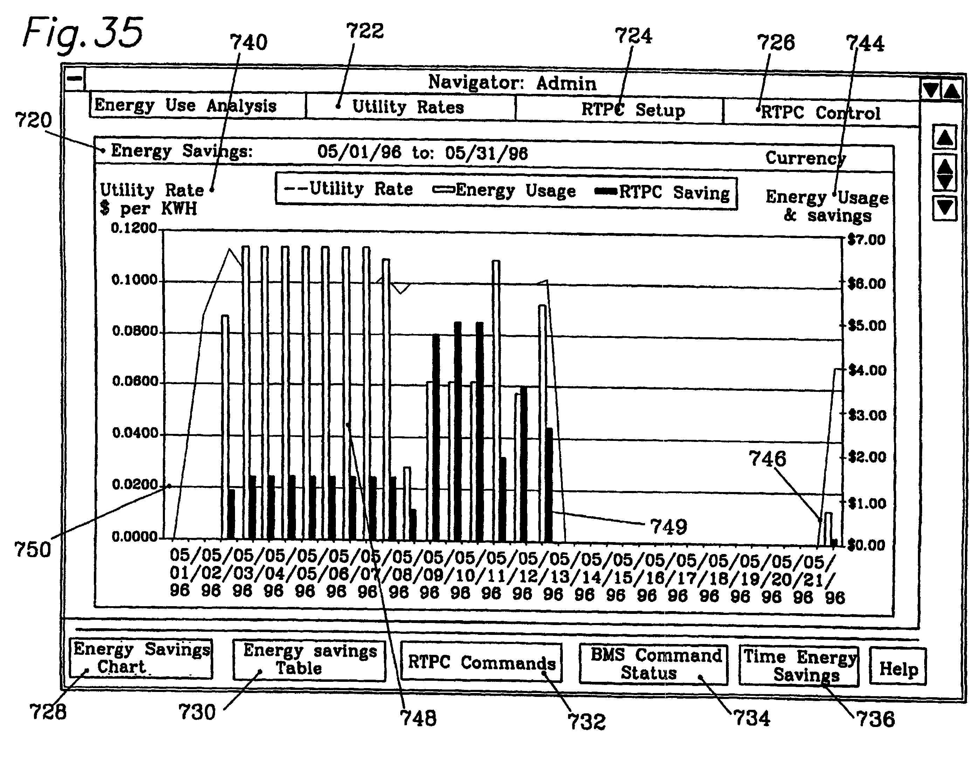

After the report writer 55 has attached to the real-time pricing control database 54 for use in generating the reports, a user may utilize the report writer 55 upon log-in. Report writer 55 has one main window and one child window, as shown in the interface illustration of Figure 34. The child window 712 called the Navigator is shown minimized in Figure 34. The main window has a title bar 700 that displays the directory path for the historical database which is attached. The toolbar 702 of the main window includes a Data Selection button 704, a Point Selection button 706, a Review Criteria button 708, and a Generate Report button 710. The Navigator icon 712, when selected, allows one to navigate to one of four tabs (i.e., categories) of reports as shown in Figure 35. A configure dialog accessible from the Setup menu of the main window, shown in Figure 34, allows the user to select an automatic generate report option which, if selected, will generate a new report using date and point criteria (if applicable) each time the user clicks one of the many reports, e..g. Energy Savings Chart button 728. The user can set such configuration to a manual generate report option, where the reports are not automatically updated. Rather, the existing report is displayed when some report button is clicked. The Generate Report button 710 is used when the user is in manual mode and wants to generate a report using some date and point criteria.

The user input criteria for generating a report using the report writer 55 includes specifying date(s), time units (i.e. hourly), and points. The Date Selection button 204 displays a date selection dialog that allows the user to specify day and time units criteria for historical reports. For example, a date range may be specified or a single day may be specified. Further, time units are also selected. For example, hourly time units may be selected which displays data points on an hourly basis, day time units may be selected which displays data points as daily cumulative totals, and other time units may be selected which displays data points that are monthly cumulative totals or year-to-date cumulative totals.

The Point Selection button 706 displays a dialog that allows the user to specify a list of points for which the report writer 55 will generate reports. For example, various sites may be chosen, groups may be chosen, and commandable points may be selected. Further, energy usage and savings may be selected to be displayed in currency or in kilowatt hours.

The Review Criteria button 708 allows the user to view all the criteria specified by the user to generate the real-time pricing control reports. For example, the criteria may include report type (as will be explained further below), historical database information, date range, time unit specified, and the selected points specified.

As with most typical report writing applications, the report writer 55 includes functions for printing, scrolling through various reports, and may include any other functionality typical of report writing applications. The present invention is not limited to any particular report writer application, but is limited only as described in the accompanying claims.

The maximized Navigator interface illustration, as shown in Figure 35, which allows the user to navigate to one of four tabs of reports, including energy use Analysis tab 720, Utility Rates tab 722, Real-Time Pricing Control Setup tab 724, and Real-Time Pricing Control tab 726. The Energy Use Analysis tab provides reports that allow the user to analyze the savings that real-time pricing control software 56 produces over a specific time period. The Utility Rates tab allows the user to select reports on the use of real-time utility rates and default rates. The Real-Time Pricing Control Setup tab allows the user to display reports describing the basic setup of real-time pricing control software 56 and the Real-Time Pricing Control tab 726 allows the user to select reports related to real-time pricing control strategies for point components. With respect to each of the tabs of the Navigator window, various buttons are available for selecting various points within the category represented by the tabs, i.e. buttons 720, 722, 724, 726. For example, the Energy Use Analysis tab 720 makes available an Energy Savings Chart Report via button 728, Energy Savings Table report via button 730, Real-Time Pricing Control Commands report via button 732, a Building Management System Command Status report via button 734, and a Time In Energy Savings report via button 736.

When generating a report, the report writer 55 utilizes a table generator (Gen Table, 76) to create one or more tables for the report writer application 55 using data from the historical database 54. Such reports are generated for a given or specified date, time unit, and a specified set of points. Generally, the report writer 55 creates the reports utilizing information from one or more tables generated by the Gen Table function 76. In other words, the elements displayed in the various reports are provided by means of the Gen Table 76.

For example, several services are provided by the Gen Table generator 76. Such services include creating a table for energy savings analysis and also creating a table for execution command history; utilizing the real-time pricing control database 54. A general process flow diagram (Figure 12) for providing such services by the table generator 76 is as follows. The report writer 55 instantiates an instance of the table generator, Gen Table 76. The report writer sets the desired parameters for the table to be generated by the Gen Table function 76. Such parameters, for example, include the date and time unit and at least one point. The report writer 55 then chooses a service provided by the table generator 76, such as creating a table for energy savings analysis. That particular chosen service call is then delegated to the OLE automation layer of the Microsoft O/S. The O/S calls the function in the Gen Table executable that implements that particular service (for example, creating a table for energy savings analysis with respect to the date, time unit and at least one point specified by the user using the user interface of the report writer 55. The function for implementing the service then uses a Microsoft database access object (DAO) to gather the information and to populate the appropriate table with respect to the Gen Table executable that implements the service (i.e., creating a table for energy savings analysis). The executable then interprets whether the appropriate table was created (i.e., the success of the operation or executable) and passes the result to the O/S. The O/S returns the result to the report writer 55 and the report writer 55 uses the information in the generated table to create the desired or selected report utilizing the user interface for the report writer 55. By using the Gen Table function 76, the report writer 55 is relieved of performing computations with respect to the historical data of the real-time pricing control database snapshot. Rather, the Gen Table performs such computations and evaluations, such as, for example, evaluating the percent that a particular point was controlled, and provides such information to the report writer 55 for use thereby. The report writer 55 then displays such information in reports; for example, comparative reports as explained further below.

The Energy Savings Chart accessible via button 728 and Energy Use Analysis tab 720, shows the values for energy savings, energy usage, and utility rates for the points selected in the point criteria. For example, in Figure 35, a one-month date range was specified and a day-time unit was specified. This Energy Savings Chart shows how much energy real-time pricing control software 56 saved by using the control strategies defined for the controllable points selected for the report. The Energy Savings Chart 728 displays units for utility rates on side 740 of the Y axis, shows the date range specified, and displays units for energy usage and savings on side 744 of the Y axis. Utility rates are shown by dotted line 750. The bar 748 shows energy usage and the darkened bar 749 shows real-time pricing control energy savings. A utility rate of 0 on this chart means that real-time pricing control software was not running as indicated at 746. The Energy Savings Table accessible via button 730 shows in table format substantially the same information as given in the Energy Savings Chart.

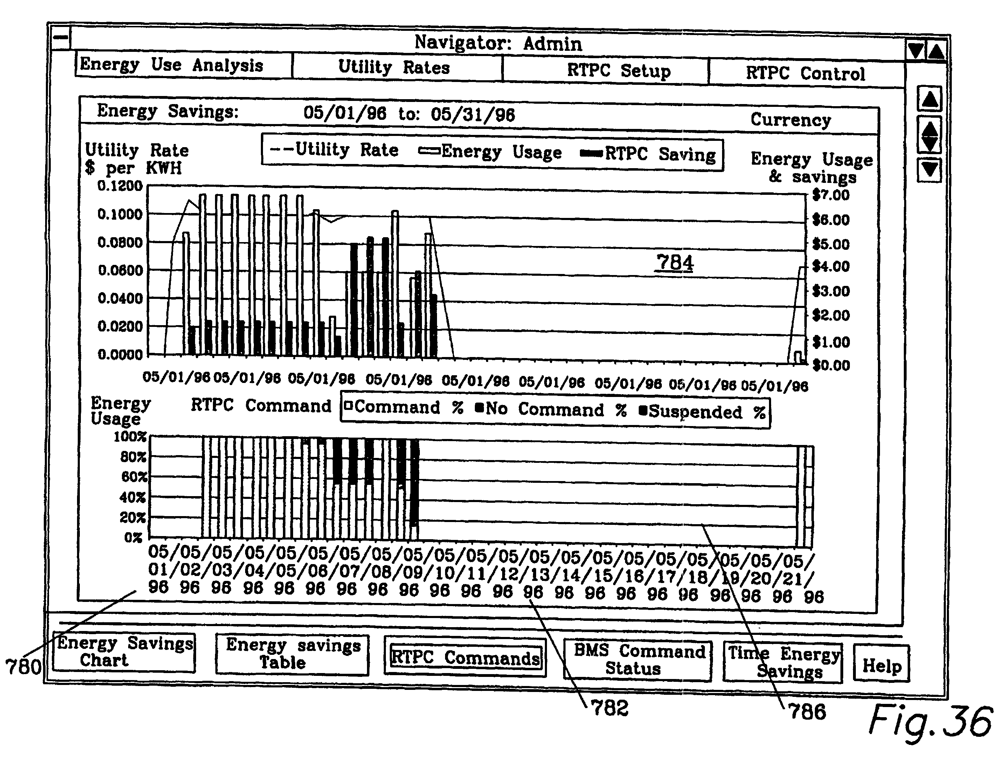

The Real-Time Pricing Control Commands report accessible via button 732 and as shown in the lower portion 780 of Figure 36, is representative of whether the real-time pricing control software 56 was allowed to command the point, whether no commands were sent, or whether the point selected to be reported by the report was suspended. The bottom chart 780 could be empty if no energy was used by any of the points selected for this report. The report writer 55 allows two charts to be shown together such that comparative data is available to the user. In Figure 36, the user can compare energy savings to real-time pricing control commands. Such information is useful in various ways. For example, when the user sees a period where real-time pricing control software 56 was suspended a lot, such as on Day 5/18/96 as represented by 782, or a lot of no commands were sent, then it should be expected that there will be less real-time pricing control savings. Further, for example, the unexpected energy savings level (i.e., zero energy savings) at the end of the top chart 784 can be explained by looking at the bottom chart which indicates that during the interval represented by 786, the real-time pricing control software was not operating. Such comparative data displayed to the user is important in order for the user to achieve maximum energy savings through redefining control strategies based on the comparative reports.

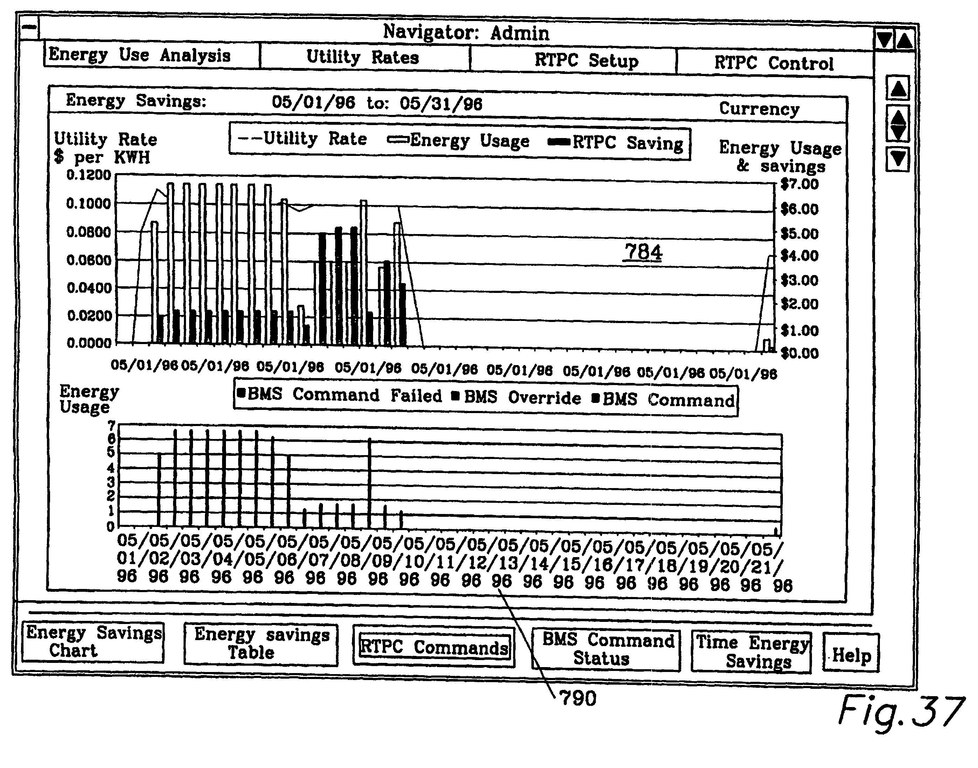

The Building Management System Command Status report accessible via button 734 is shown in the illustration of Figure 37. Again, this diagram includes two charts to give the user comparative information. The Building Management System Command Status report, as shown at the bottom portion 790 of Figure 37, shows whether commands sent to the building management system 60 by the real-time pricing control software 56 failed, whether a command succeeded but the building management system 60 overrode the real-time pricing control software command, or whether the command succeeded and was not overridden by the building management system 60.

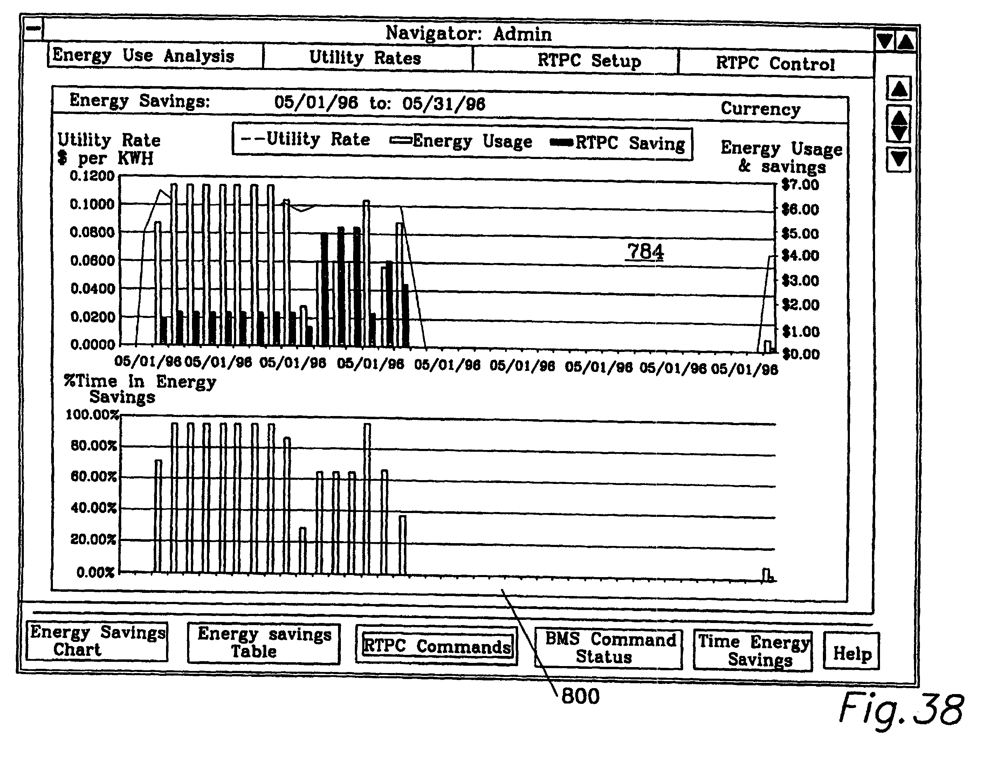

The Time In Energy Savings report accessible via button 736 of the Energy Use Analysis tab 720 is shown in the lower portion 800 of Figure 38. This chart represents the actual state of the points during a time interval. Even if the real-time pricing control software 56 was not commanding any of the points, the Time In Energy Savings may be quite high. The Time In Energy Savings report, as shown in the lower portion 800 of Figure 38, is a good representation of the data computations made by Gen Table function 76, which are utilized by the report writer 55. For example, the Gen Table 76 calculates what percentage of the time the points selected for this particular report were saving energy, and the report writer 55 then utilizes that information to show it in graphical form. Once again, Figure 38 shows comparative data of energy savings, usage and utility rate information to percent time in energy savings allowing the user to control the real-time pricing control system 50 accordingly.

Reports available under the Utility Rates tab 722 include a table listing the default rates as defined by the user, a report showing in tabular form the amount of time such default rates were utilized for a particular date range specified, a utility rate history report that displays in tabular form a daily average utility rate, a rate communication history table report showing the history of utility rates that the real-time pricing control software 56 used for a selected date range, and a rate communication history table showing every time the real-time pricing control software 56 was not able to access real-time utility rates for a date range specified. The Real-Time Pricing Control Setup tab 724 allows the user to access a controlled groups report that shows the various points defined as groups in the real-time pricing control software 56 along with the point's user address and the site for the particular points, and a similar table for monitored groups. Further, the Real-Time Pricing Control Setup tab 724 includes a report that shows the values for all the configuration parameters of the real-time pricing control software 56, such as: normal cycle interval, rapid cycle interval, maximum rapid cycle points, default command priority, default residual priority, maximum priority, local site update interval, remote site update interval, maximum of monitored points, utility rates normally received by time period, use of customer communication gateway, and use of building management system. Further, Real-Time Pricing Control Setup tab 724 displays a report including all the particular users for the system.

The Real-Time Pricing Control tab 726 includes means for accessing reports for displaying the current control strategies for all the controllable points that the real-time pricing control software 56 commands, including the user address of the point, the site name of the point, any use criteria, and the rate limits defined by the user along with the point commands for such rate intervals. Various reports displaying control strategies can be shown with the control strategies sorted by user address or sorted by utility rate. Further, the Real-Time Pricing Control tab 726 allows for access to a command history report for the various points commanded by the real-time pricing control software 56. This report shows the command real-time pricing control software 56 sent to the building management system 60 for each point selected for the report; however, the report does not apply time units, but rather the time units displayed reflect the actual times that the point was commanded. Such command history reports may be utilized for both analog and digital points and, further, a disabled control strategy report is accessible that allows the user to ensure that control strategies are not disabled accidentally.

It should be readily apparent to one skilled in the art that any of the above-mentioned reports may be used in singular graphical form, tabular form, in combination with one another, in comparative use with one another, or as one skilled in the art may determine to be beneficial. In particular, the comparative reports which utilize precalculated data by the Gen Table function 76 and provide comparative evaluation summaries for various points are important for the user to utilize in defining and specifying control strategies for the real-time pricing control system 50.

Although the invention has been described with particular reference to preferred embodiments thereof, variations and modifications of the present invention can be made within a contemplated scope of the following claims as is readily known to one skilled in the art.

## Claims

1. A real time pricing control method for use in controlling one or more points at one or more sites, the method comprising the steps of:
determining if current real time utility rate information is available from the utility rate storage component, and using default rates for generating commands for controlling the one or more points if current real time utility rate data is not available, otherwise receiving current real time utility rate data;
defining at least one point component, the at least one point component including one or more points;
defining an energy savings for each point of the at least one point component,
specifying a control strategy for each point component based on at least two utility rate ranges;
generating a command for each point of the at least one point component as a function of the control strategy specified and the current or default real time utility rate data; and
notifying a user if the real time utility rate data is late.

2. The method according to claim 1, wherein the defining step includes the step of grouping more than one point to form the point component.

3. The method according to claim 2, wherein the grouping step includes forming a group of points of similar type.

4. The method according to claim 2, wherein the grouping step includes forming a group of points at particular site.

5. The method according to claim 1, wherein the points of the at least one point component include one of digital points, multistage digital points, and analog points.

6. The method according to claim 5, wherein the specifying step includes the step of defining an energy savings level for each point of the point component

7. The method according to claim 5 wherein the specifying step includes requiring a user to define an energy savings level for each point of the point component before the control strategy can be used.

8. The method according to claim 1, wherein the defining step includes the step of importing the one or more points from an associated management system operable for controlling a plurality of points.

9. The method according to claim 8, wherein the method further includes the step of searching the plurality of points in the associated management system.

10. The method according to claim 9, wherein the searching step includes maintaining one of a list of points matching a search criteria and a list of points matching the search criteria but which have not been imported from the associated management system.

11. The method according to claim 1, wherein the method further includes monitoring one or more points.

12. The method according to claim 1, wherein the specifying step includes the steps of:
defining a plurality of utility rate ranges for the control strategy; and
specifying a point command for each of the defined plurality of utility rate ranges.

13. The method according to claim 12, wherein the specifying step further includes the step of defining additional criteria for the control strategy, and further wherein the point command specification step includes specifying point commands for each of the defined plurality of utility rate ranges depending upon whether the additional criteria is satisfied or not satisfied.

14. The method according to claim 13, wherein the additional criteria includes one of an occupancy schedule and a point condition.

15. The method according to claim 14, wherein the point condition includes one of a sensor value and a controllable point value.

16. The method according to claim 1, wherein the generating step includes the step of using default rates for generating a command for each point of the at least one point component as a function of the control strategy specified for the at least one point component

17. The method according to claim 16, wherein the default rates are editable default rates.

18. The method according to claim 16, wherein different default rates are definable for each of a plurality of default rate time periods.

19. The method according to claim 1, wherein the generating step for generating command for each point of a point component including a group of points includes the steps of:
executing the control strategy for a first point of the group of points resulting in a command for the first point; and
reiterating the same command for remaining points of the group of points.

20. The method according to Claim 1 comprising the steps of:
receiving real time utility rate data;
defining each at least one point component including one or more points, the one or more points of the point component including one of digital, multistage digital, and analog points;
specifying a control strategy for the at least one point component based on at least two utility rate ranges;
generating a command for each point of the at least one point component as a function of the control strategy specified;
wherein the specifying step includes the step of defining an energy savings level for the at least one point component, the energy savings being. calculated for each point of the point component each time the control strategy for each point is utilized to generate a point command; and
wherein the energy savings level defining step for a point component including at least one analog point includes the steps of specifying an energy savings rating for each point of the point component, and specifying a no energy savings command level and a maximum energy savings command level for defining a range of commands where no energy is saved, a range of commands where maximum energy is saved and a range of commands between the no energy savings command level and maximum energy savings command level where an interpolated energy savings is determined.

21. The method according to claim 20, wherein the specifying step includes requiring a user to define an energy savings level for the at least one point component before the control strategy can be used.

22. The method according to claim 20, wherein the energy savings defining step for a point component including at least one of a digital and multistage digital point includes the steps of:
specifying an energy savings rating for each point of the point component; and
specifying at least one commandable state for the point component where energy is saved.

23. The method according to claim 20, wherein calculating the energy savings for each digital or multistage digital point includes the steps of:
determining whether a point command generated for the point is the at least one commandable state of the point where energy is saved; and
generating an energy savings for the point as a function of the energy savings rating for the point and the time the point is at the at least one commandable state where energy is saved.

24. The method of claim 1, comprising the steps of:
receiving real time utility rate data;
defining each at least one point component including one or more points, the one or more points of the point component including one of digital, multistage digital, and analog points;
specifying a control strategy for the at least one point component based on at least two utility rate ranges;
generating a command for each point of the at least one point component as a function of the control strategy specified;
wherein the specifying step further includes the step of defining an energy savings level for the at least one point component, the energy savings being calculated for each point of the point component each time the control strategy for each point is utilized to generate a point command; and
wherein calculating the energy savings for each analog point includes the steps of determining whether a point command generated for the point is in the range where maximum energy is saved and generating an energy savings for the point as a function of the energy savings rating and the time the point command is in the range where maximum energy is saved, determining whether a point command generated for the point is in the range where no energy is saved and generating a zero energy savings for the point, and interpolating a percent energy savings if the point command falls in the range between the no energy savings command level and the maximum energy savings command level and generating an energy savings as a function of the percent energy savings, the energy savings rating, and the time the point command is between the no energy savings command level and the maximum energy savings command level.

25. The method of Claim 26 comprising the steps of:
receiving real time utility rate data;
specifying a control strategy based on at least two utility rate ranges;
specifying a range of commands where no energy is saved;
specifying a range of commands where maximum energy is saved;
defining a range of commands between a no energy savings level and a maximum energy savings level for which interpolated energy savings are determined;
specifying an energy level for a point; and calculating energy savings when the control strategy is utilized;
generating a control command based on the control strategy.

26. A real time pricing control system (50) for controlling one or more points (26-29, 46) for one or more sites as a function of real time utility rate data from a utility service provider (14), the control system comprising:
- a utility rate storage component (52);
- control means (56) for generating commands for controlling the one or more points as a function of the real time utility data, the control means enabling a user to define utility rate ranges and an energy savings level for the one or more points, further including means for requesting utility rate data from the utility rate storage component (52);
- a utility rate interface (51, 53) for receiving real time utility rate data from the utility service provider (14), the utility rate interface including means for depositing such utility rate data in the utility rate storage component (52) and means (53) for providing utility rate data to the control means (56) upon request thereby,
the control system being further **characterised in that**
- the control means includes means for determining if current real time utility rate data is available from the utility rate storage component (52), and means for using default rates for generating commands for controlling the one or more points if current real time utility rate data is not available; and
- a user interface means is provided being coupled to the utility rate interface, for notifying a user if the real time rate data is late.

27. The system according to claim 26, wherein the control means includes means for importing the one or more points for the one or more sites from an associated management system, the system further including a communications interface for communicating with the associated management system.

28. The system according to claim 27, wherein the communications interface includes:
means for receiving a plurality of service requests from the control means for sending to or requesting information from the associated management system;
means for executing each of the service requests; and
means for providing results from the execution of each service requestto the control means.

29. The system according to claim 26, wherein the communications interface is an OLE interface.

30. The system according to claim 26, wherein the control means further includes:
means for determining if current real time utility rate information is available from the utility rate storage component; and
means for using default rates for generating commands for controlling the one or more points if current real time utility rate data is not available.

31. The system according to Claim 30, further including user interface means for notifying a user if the real time utility rate data is late.

32. The system according to claim 30, further including user interface means for allowing a user to define different default rates for each of a plurality of time periods.

33. The system according to claim 32, wherein the user interface means further includes means for allowing the user to edit the default rate data.

34. The system according to claim 26, wherein the utility rate interface is an OLE interface.

35. The system according to Claim 26 comprising:
control means for generating commands for a plurality of points of at least one point component as a function of a single specified control strategy for each of the at least one point component and current real time utility rate data;
user interface means for allowing a user to define the single control strategy, wherein the user interface means includes:
means for allowing the user to define a plurality of utility rate ranges for the control strategy;
means for allowing the user to define a point command including means for corresponding to each of the utility ranges; and
wherein the control means includes means for comparing the current real time utility rate data to the plurality of utility rate ranges of the control strategy for the point component and for selecting a point command for each point of the point component as a function of such comparison;
wherein the user interface includes means for allowing the user to specify a time limit when real time utility rates are expected from a utility service, the control means including means for notifying the user if such utility rates are late.

36. The system according to claim 35, wherein the user interface includes means for allowing the user to group more than one point to form the point component.

37. The system according to claim 35, wherein the user interface includes means for defining control strategies for at least one point component that includes one of digital points, multi-state digital points, and analog points.

38. The system according to claim 35, wherein the user interface includes means for allowing the user to define an energy savings for each point of the point component

39. The system according to claim 35, wherein the user interface includes means for allowing the user to import the plurality of points from an associated management system operable for controlling a plurality of points.

40. The system according to claim 39, wherein the user interface includes means for searching the plurality of points in the associated management system.

41. The system according to claim 40, wherein the searching means includes means for maintaining one of a list of points matching a search criteria and a fist of points matching the search criteria but which have not been imported from the associated management system.

42. The system according to claim 35, wherein the user interface includes means for allowing the user to select one or more points to monitor.

43. The system according to claim 35, wherein the user interface includes means for allowing the user to define additional criteria for the control strategy and further specify point commands for each of the plurality of utility rate ranges depending upon whether the additional criteria is satisfied or not satisfied.

44. The system according to claim 35, wherein the user interface includes means for allowing the user to specify a time limit when real time utility rates are expected from a utility service, the control means including means for notifying the user if such utility rates are late.

45. The system according to claim 35, wherein the user interface includes means for allowing a user to define default rates for multiple rate time periods.

46. The system according to claim 45, wherein the default rate defining means includes means for editing default rates for each of the multiple time periods.

47. The system according to claim 35, wherein the user interface includes means for automatically displaying user help text for assisting the user when the user has chosen to define a control strategy for a point component.

48. The system according to claim 35, wherein the control system includes means for automatically updating the state of various associated interface components such that current information with respect to such associated component is used by and displayed to the user when the user is using the various associated interface components.

49. The system of Claim 26 comprising:
means for receiving and providing real time utility rate data from a utility service provider;
control means, coupled to receive real time utility rate data from the receiving means, for generating control commands for one or more points as a function of the utility rate data and user defined utility rate ranges;
means for determining if current real time utility rate data is available from the utility service provider; and
a user interface, coupled to the determining means, for alerting the user if the real time utility rate data is late according to a time limit;
means for using default rates for generating commands for controlling the one or more points if current real time utility rate data is not available.

50. A system according to one of claims 26 to 49, comprising a reporting system, having a database for storing information with respect to a real time pricing control system, the control means including means for depositing historical data regarding the operation of the real time pricing control system in the database including at least energy usage data, energy savings data, and utility rate data, and the reporting system further comprising:
means for generating a plurality of reports containing summarized comparative data regarding the generated commands utilizing an instance of the historical data; and
means for displaying one or more of the plurality of reports.

51. The system according to claim 50, wherein the generating means includes a table generator for use by the generating means in generating the plurality of reports, the table generating means including means for performing evaluation of the historical data and depositing desired results in at least one table.

52. The system according to claim 50, wherein the displaying means includes means for displaying at least two reports for viewing by the user.

53. The system according to claim 50, wherein the reports allow the user to graphically compare energy usage data, energy savings data, and utility rate data.

54. The system according to claim 50, wherein the report generated includes data with regard to the percentage of time a point is in an energy savings state.

## Patentansprüche

1. Echtzeit-Preisgebungssteuerverfahren zur Verwendung bei der Steuerung eines oder mehrerer Punkte an einem oder mehreren Standorten, mit den folgenden Schritten:
Bestimmen, ob aktuelle Echtzeit-Versorgungsgebühreninformationen von der Versorgungsgebührenspeicherkomponente verfügbar sind, und Verwenden von Vorgabegebühren zur Erzeugung von Befehlen zur Steuerung des einen bzw. der mehreren Punkte, wenn keine aktuellen Echtzeit-Versorgungsgebührendaten verfügbar sind, und andernfalls Empfangen der aktuellen Echtzeit-Versorgungsgebührendaten;
Definieren mindestens einer Punktkomponente, wobei die mindestens eine Punktkomponente einen oder mehrere Punkte enthält;
Definieren einer Energieersparnis für jeden Punkt der mindestens einen Punktkomponente;
Spezifizieren einer Steuerstrategie für jede Punktkomponente auf der Grundlage von mindestens zwei Versorgungsgebührenbereichen;
Erzeugen eines Befehls für jeden Punkt der mindestens einen Punktkomponente als Funktion der spezifizierten Steuerstrategie und der aktuellen oder Vorgabe-Echtzeit-Versorgungsgebührendaten; und
Benachrichtigen eines Benutzers darüber, ob die Echtzeit-Versorgungsgebührendaten verspätet sind.

2. Verfahren nach Anspruch 1, wobei der Schritt des Definierens den Schritt des Gruppierens von mehr als einem Punkt zur Bildung der Punktkomponente umfaßt.

3. Verfahren nach Anspruch 2, wobei der Schritt des Gruppierens das Bilden einer Gruppe von Punkten ähnlichen Typs umfaßt.

4. Verfahren nach Anspruch 2, wobei der Schritt des Gruppierens das Bilden einer Gruppe von Punkten an einem bestimmten Standort umfaßt.

5. Verfahren nach Anspruch 1, wobei die Punkte der mindestens einen Punktkomponente folgendes enthalten: digitale Punkte, mehrstufige digitale Punkte oder analoge Punkte.

6. Verfahren nach Anspruch 5, wobei der Schritt des Spezifizierens den Schritt des Definierens eines Energieersparnisniveaus für jeden Punkt der Punktkomponente umfaßt.

7. Verfahren nach Anspruch 5, wobei der Schritt des Spezifizierens umfaßt, von dem Benutzer zu fordern, für jeden Punkt der Punktkomponente ein Energieersparnisniveau zu definieren, bevor die Steuerstrategie verwendet werden kann.

8. Verfahren nach Anspruch 1, wobei der Schritt des Definierens den Schritt des Importierens des einen bzw. der mehreren Punkte aus einem zugeordneten Managementsystem, das zur Steuerung mehrerer Punkte betreibbar ist, umfaßt.

9. Verfahren nach Anspruch 8, wobei das Verfahren weiterhin den Schritt des Durchsuchens der mehreren Punkte in dem zugeordneten Managementsystem umfaßt.

10. Verfahren nach Anspruch 9, wobei der Schritt des Durchsuchens das Führen einer Liste von Punkten, die mit einem Suchkriterium übereinstimmen, oder einer Liste von Punkten, die mit dem Suchkriterium übereinstimmen, aber nicht aus dem zugeordneten Managementsystem importiert worden sind, umfaßt.

11. Verfahren nach Anspruch 1, wobei das Verfahren weiterhin das Überwachen eines oder mehrerer Punkte umfaßt.

12. Verfahren nach Anspruch 1, wobei der Schritt des Spezifizierens die folgenden Schritte umfaßt:
Definieren mehrerer Versorgungsgebührenbereiche für die Steuerstrategie; und
Spezifizieren eines Punktbefehls für jeden der definierten mehreren Versorgungsgebührenbereiche.

13. Verfahren nach Anspruch 12, wobei der Schritt des Spezifizierens weiterhin den Schritt des Definierens zusätzlicher Kriterien für die Steuerstrategie umfaßt und wobei weiterhin der Schritt des Spezifizierens der Punktbefehle das Spezifizieren von Punktbefehlen für jeden der definierten mehreren Versorgungsgebührenbereiche abhängig davon, ob die zusätzlichen Kriterien erfüllt sind oder nicht, umfaßt.

14. Verfahren nach Anspruch 13, wobei die zusätzlichen Kriterien einen Belegungsplan oder eine Punktbedingung umfassen.

15. Verfahren nach Anspruch 14, wobei die Punktbedingung einen Sensorwert oder einen steuerbaren Punktwert umfaßt.

16. Verfahren nach Anspruch 1, wobei der Schritt des Erzeugens den Schritt des Verwendens von Vorgabegebühren zur Erzeugung eines Befehls für jeden Punkt der mindestens einen Punktkomponente als Funktion der für die mindestens eine Punktkomponente spezifizierten Steuerstrategie umfaßt.

17. Verfahren nach Anspruch 16, wobei die Vorgabegebühren editierbare Vorgabegebühren sind.

18. Verfahren nach Anspruch 16, wobei für jeden von mehreren Vorgabegebührenzeiträumen verschiedene Vorgabegebühren definierbar sind.

19. Verfahren nach Anspruch 1, wobei der Schritt des Erzeugens eines Befehls für jeden Punkt einer Punktkomponente, die eine Gruppe von Punkten enthält, die folgenden Schritte umfaßt:
Ausführen einer Steuerstrategie für einen ersten Punkt der Gruppe von Punkten, was zu einem Befehl für den ersten Punkt führt; und
Neuiterieren desselben Befehls für verbleibende Punkte der Gruppe von Punkten.

20. Verfahren nach Anspruch 1, mit den folgenden Schritten:
Empfangen von Echtzeit-Versorgungsgebührendaten;
Definieren jeder der mindestens einen Punktkomponente, die einen oder mehrere Punkte enthält, wobei der eine bzw. die mehreren Punkte der Punktkomponente digitale, mehrstufige digitale oder analoge Punkte enthalten;
Spezifizieren einer Steuerstrategie für die mindestens eine Punktkomponente auf der Grundlage von mindestens zwei Versorgungsgebührenbereichen;
Erzeugen eines Befehls für jeden Punkt der mindestens einen Punktkomponente als Funktion der spezifizierten Steuerstrategie;
wobei der Schritt des Spezifizierens den Schritt des Definierens eines Energieersparnisniveaus für die mindestens eine Punktkomponente umfaßt, wobei die Energieersparnis jedesmal dann für jeden Punkt der Punktkomponente berechnet wird, wenn die Steuerstrategie für jeden Punkt zur Erzeugung eines Punktbefehls verwendet wird; und
wobei der Schritt des Definierens eines Energieersparnisniveaus für eine Punktkomponente, die mindestens einen analogen Punkt enthält, die folgenden Schritte umfaßt: Spezifizieren einer Energieersparnisbewertung für jeden Punkt der Punktkomponente und Spezifizieren eines Keine-Energieersparnis-Befehlsniveaus und eines Maximale-Energieersparnis-Befehlsniveaus zum Definieren eines Bereichs von Befehlen, in dem keine Energie gespart wird, eines Bereichs von Befehlen, in dem maximal Energie gespart wird, und eines Bereichs von Befehlen zwischen dem Keine-Energieersparnis-Befehlsniveau und dem Maximale-Energieersparnis-Befehlsniveau, in dem eine interpolierte Energieersparnis bestimmt wird.

21. Verfahren nach Anspruch 20, wobei der Schritt des Spezifizierens umfaßt, von dem Benutzer zu fordern, für die mindestens eine Punktkomponente ein Energieersparnisniveau zu definieren, bevor die Steuerstrategie verwendet werden kann.

22. Verfahren nach Anspruch 20, wobei der Schritt des Definierens eines Energieersparnisniveaus für eine Punktkomponente, die digitale oder mehrstufige digitale Punkte enthält, die folgenden Schritte umfaßt:
Spezifizieren einer Energieersparnisbewertung für jeden Punkt der Punktkomponente; und
Spezifizieren mindestens eines befehlbaren Zustands für die Punktkomponente, worin Energie gespart wird.

23. Verfahren nach Anspruch 20, wobei der Schritt des Berechnens der Energieersparnis für jeden digitalen oder mehrstufigen digitalen Punkt die folgenden Schritte umfaßt:
Bestimmen, ob ein für den Punkt erzeugter Punktbefehl der mindestens eine befehlbare Zustand des Punkts ist, worin Energie gespart wird; und
Erzeugen einer Energieersparnis für den Punkt als Funktion der Energieersparnisbewertung für den Punkt und die Zeit, in der sich der Punkt in dem mindestens einen befehlbaren Zustand befindet, worin Energie gespart wird.

24. Verfahren nach Anspruch 1, mit den folgenden Schritten:
Empfangen von Echtzeit-Versorgungsgebührendaten;
Definieren jeder der mindestens einen Punktkomponente, die einen oder mehrere Punkte enthält, wobei der eine bzw. die mehreren Punkte der Punktkomponente digitale, mehrstufige digitale oder analoge Punkte enthalten;
Spezifizieren einer Steuerstrategie für die mindestens eine Punktkomponente auf der Grundlage von mindestens zwei Versorgungsgebührenbereichen;
Erzeugen eines Befehls für jeden Punkt der mindestens einen Punktkomponente als Funktion der spezifizierten Steuerstrategie;
wobei der Schritt des Spezifizierens den Schritt des Definierens eines Energieersparnisniveaus für die mindestens eine Punktkomponente umfaßt, wobei die Energieersparnis jedesmal dann für jeden Punkt der Punktkomponente berechnet wird, wenn die Steuerstrategie für jeden Punkt zur Erzeugung eines Punktbefehls verwendet wird; und
wobei der Schritt des Berechnens der Energieersparnis für jeden analogen Punkt die folgenden Schritte umfaßt: Bestimmen, ob ein für den Punkt erzeugter Punktbefehl in dem Bereich liegt, in dem maximal Energie gespart wird, und Erzeugen einer Energieersparnis für den Punkt als Funktion der Energieersparnisbewertung und der Zeit, in der sich der Punktbefehl in dem Bereich befindet, in dem maximal Energie gespart wird, Bestimmen, ob ein für den Punkt erzeugter Punktbefehl in dem Bereich liegt, in dem keine Energie gespart wird, und Erzeugen einer Null-Energieersparnis für den Punkt und Interpolieren einer prozentualen Energieersparnis, wenn der Punktbefehl in den Bereich zwischen dem Keine-Energieersparnis-Befehlsniveau und dem Maximale-Energieersparnis-Befehlsniveau fällt, und Erzeugen einer Energieersparnis als Funktion der prozentualen Energieersparnis, der Energieersparnisbewertung und der Zeit, in der sich der Punktbefehl zwischen dem Keine-Energieersparnis-Befehlsniveau und dem Maximale-Energieersparnis-Befehlsniveau befindet.

25. Verfahren nach Anspruch 20, mit den folgenden Schritten:
Empfangen von Echtzeit-Versorgungsgebührendaten;
Spezifizieren einer Steuerstrategie auf der Grundlage von mindestens zwei Versorgungsgebührenbereichen;
Spezifizieren eines Bereichs von Befehlen, in dem keine Energie gespart wird;
Spezifizieren eines Bereichs von Befehlen, in dem maximal Energie gespart wird;
Definieren eines Bereichs von Befehlen zwischen einem Keine-Energieersparnis-Befehlsniveau und einem Maximale-Energieersparnis-Befehlsniveau, für den interpolierte Energieersparnisse bestimmt werden;
Spezifizieren eines Energieniveaus für einen Punkt; und Berechnen von Energieersparnissen, wenn die Steuerstrategie verwendet wird;
Erzeugen eines Steuerbefehls auf der Grundlage der Steuerstrategie.

26. Echtzeit-Preisgebungssteuersystem (50) zur Steuerung eines oder mehrerer Punkte (26-29, 46) für einen oder mehrere Standorte als Funktion von Echtzeit-Versorgungsgebührendaten von einem Versorgungsunternehmen (14), wobei das Steuersystem folgendes umfaßt:
eine Versorgungsgebührenspeicherkomponente (52);
ein Steuermittel (56) zum Erzeugen von Befehlen zur Steuerung des einen bzw. der mehreren Punkte als Funktion der Echtzeit-Versorgungsdaten, wobei das Steuermittel es einem Benutzer ermöglicht, Versorgungsgebührenbereiche und ein Energieersparnisniveau für den einen bzw. die mehreren Punkte zu definieren, weiterhin mit einem Mittel zum Anfordern von Versorgungsgebührendaten von der Versorgungsgebührenspeicherkomponente (52);
eine Versorgungsgebührenschnittstelle (51, 53) zum Empfangen von Echtzeit-Versorgungsgebührendaten von dem Versorgungsunternehmen (14), wobei die Versorgungsgebührenschnittstelle ein Mittel zum Ablegen solcher Versorgungsgebührendaten in der Versorgungsgebührenspeicherkomponente (52) und ein Mittel (53) zum Bereitstellen von Versorgungsgebührendaten für das Steuermittel (56) auf Anforderung durch dieses umfaßt,
wobei das Steuersystem weiterhin **dadurch gekennzeichnet ist, daß**
das Steuermittel folgendes umfaßt: ein Mittel zum Bestimmen, ob aktuelle Echtzeit-Versorgungsgebührendaten von der Versorgungsgebührenspeicherkomponente (52) verfügbar sind, und ein Mittel zum Verwenden von Vorgabegebühren zur Erzeugung von Befehlen zur Steuerung des einen bzw. der mehreren Punkte, wenn keine aktuellen Echtzeit-Versorgungsgebührendaten verfügbar sind; und
ein an die Versorgungsgebührenschnittstelle angekoppeltes Benutzerschnittstellenmittel zum Benachrichtigen eines Benutzers darüber, ob die Echtzeit-Gebührendaten verspätet sind, bereitgestellt ist.

27. System nach Anspruch 26, wobei das Steuermittel ein Mittel zum Importieren des einen bzw. der mehreren Punkte für den einen oder die mehreren Standorte aus einem zugeordneten Managementsystem umfaßt, wobei das System weiterhin eine Kommunikationsschnittstelle zur Kommunikation mit dem zugeordneten Managementsystem umfaßt.

28. System nach Anspruch 27, wobei die Kommunikationsschnittstelle folgendes enthält:
ein Mittel zum Empfangen mehrerer Dienstanforderungen von dem Steuermittel zum Senden von Informationen zu dem zugeordneten Managementsystem oder Empfangen von Informationen von diesem;
ein Mittel zum Ausführen jeder der Dienstanforderungen; und
ein Mittel zum Bereitstellen von Ergebnissen aus der Ausführung jeder Dienstanforderung für das Steuermittel.

29. System nach Anspruch 26, wobei die Kommunikationsschnittstelle eine OLE-Schnittstelle ist.

30. System nach Anspruch 26, wobei das Steuermittel weiterhin folgendes enthält:
ein Mittel zum Bestimmen, ob aktuelle Echtzeit-Versorgungsgebühreninformationen von der Versorgungsgebührenspeicherkomponente verfügbar sind; und
ein Mittel zum Verwenden von Vorgabegebühren zur Erzeugung von Befehlen zur Steuerung des einen bzw. der mehreren Punkte, wenn keine aktuellen Echtzeit-Versorgungsgebührendaten verfügbar sind.

31. System nach Anspruch 30, weiterhin mit einem Benutzerschnittstellenmittel zum Benachrichtigen eines Benutzers darüber, ob die Echtzeit-Versorgungsgebührendaten verspätet sind.

32. System nach Anspruch 30, weiterhin mit einem Benutzerschnittstellenmittel, das es einem Benutzer ermöglicht, für jeden von mehreren Zeiträumen verschiedene Vorgabegebühren zu definieren.

33. System nach Anspruch 32, wobei das Benutzerschnittstellenmittel weiterhin ein Mittel enthält, das es dem Benutzer ermöglicht, die Vorgabegebührendaten zu editieren.

34. System nach Anspruch 26, wobei die Versorgungsgebührenschnittstelle eine OLE-Schnittstelle ist.

35. System nach Anspruch 26, umfassend:
ein Steuermittel zum Erzeugen von Befehlen für mehrere Punkte mindestens einer Punktkomponente als Funktion einer einzigen spezifizierten Steuerstrategie für jede der mindestens einen Punktkomponente und die aktuellen Echtzeit-Versorgungsgebührendaten;
ein Benutzerschnittstellenmittel, das es einem Benutzer ermöglicht, die einzige Steuerstrategie zu definieren, wobei das Benutzerschnittstellenmittel folgendes enthält:
ein Mittel, das es dem Benutzer ermöglicht, mehrere Versorgungsgebührenbereiche für die Steuerstrategie zu definieren;
ein Mittel, das es dem Benutzer ermöglicht, einen Punktbefehl zu definieren, mit einem Mittel zum Korrespondieren mit jedem der Versorgungsbereiche; und
wobei das Steuermittel ein Mittel zum Vergleichen der aktuellen Echtzeit-Versorgungsgebührendaten mit den mehreren Versorgungsgebührenbereichen der Steuerstrategie für die Punktkomponente und zum Auswählen eines Punktbefehls für jeden Punkt der Punktkomponente als Funktion eines solchen Vergleichs umfaßt;
wobei die Benutzerschnittstelle ein Mittel enthält, das es dem Benutzer ermöglicht, eine Zeitgrenze zu spezifizieren, wann Echtzeit-Versorgungsgebühren von einem Versorgungsdienst zu erwarten sind, wobei das Steuermittel ein Mittel zum Benachrichtigen des Benutzers darüber, ob solche Versorgungsgebühren verspätet sind, umfaßt.

36. System nach Anspruch 35, wobei die Benutzerschnittstelle ein Mittel enthält, das es dem Benutzer ermöglicht, mehr als einen Punkt zu gruppieren, um die Punktkomponente zu bilden.

37. System nach Anspruch 35, wobei die Benutzerschnittstelle ein Mittel zum Definieren von Steuerstrategien für mindestens eine Punktkomponente, die digitale Punkte, mehrstufige digitale Punkte oder analoge Punkte enthält, umfaßt.

38. System nach Anspruch 35, wobei die Benutzerschnittstelle ein Mittel enthält, das es dem Benutzer ermöglicht, für jeden Punkt der Punktkomponente eine Energieersparnis zu definieren.

39. System nach Anspruch 35, wobei die Benutzerschnittstelle ein Mittel enthält, das es dem Benutzer ermöglicht, die mehreren Punkte aus einem zugeordneten Managementsystem, das zur Steuerung mehrerer Punkte betreibbar ist, zu importieren.

40. System nach Anspruch 39, wobei die Benutzerschnittstelle ein Mittel zum Durchsuchen der mehreren Punkte in dem zugeordneten Managementsystem umfaßt.

41. System nach Anspruch 40, wobei das Suchmittel ein Mittel zum Führen einer Liste von Punkten, die mit einem Suchkriterium übereinstimmen, oder einer Liste von Punkten, die mit dem Suchkriterium übereinstimmen, aber nicht aus dem zugeordneten Managementsystem importiert worden sind, umfaßt.

42. System nach Anspruch 35, wobei die Benutzerschnittstelle ein Mittel enthält, das es dem Benutzer ermöglicht, einen oder mehrere zu überwachende Punkte zu wählen.

43. System nach Anspruch 35, wobei die Benutzerschnittstelle ein Mittel enthält, das es dem Benutzer ermöglicht, zusätzliche Kriterien für die Steuerstrategie zu definieren und weiterhin für jeden der mehreren Versorgungsgebührenbereiche abhängig davon, ob die zusätzlichen Kriterien erfüllt sind oder nicht, Punktbefehle zu spezifizieren.

44. System nach Anspruch 35, wobei die Benutzerschnittstelle ein Mittel enthält, das es dem Benutzer ermöglicht, eine Zeitgrenze zu spezifizieren, wann Echtzeit-Versorgungsgebühren von einem Versorgungsdienst zu erwarten sind, wobei das Steuermittel ein Mittel zum Benachrichtigen des Benutzers darüber, ob solche Versorgungsgebühren verspätet sind, umfaßt.

45. System nach Anspruch 35, wobei die Benutzerschnittstelle ein Mittel enthält, das es einem Benutzer ermöglicht, für mehrere Gebührenzeiträume Vorgabegebühren zu definieren.

46. System nach Anspruch 45, wobei das Mittel zum Definieren von Vorgabegebühren ein Mittel zum Editieren von Vorgabegebühren für jeden der mehreren Zeiträume enthält.

47. System nach Anspruch 35, wobei die Benutzerschnittstelle ein Mittel zum automatischen Anzeigen von Benutzerhilfetext zur Unterstützung des Benutzers umfaßt, wenn der Benutzer gewählt hat, für eine Punktkomponente eine Steuerstrategie zu definieren.

48. System nach Anspruch 35, wobei das Steuersystem ein Mittel zum automatischen Aktualisieren des Zustands verschiedener zugeordneter Schnittstellenkomponenten derart, daß aktuelle Informationen bezüglich solcher zugeordneter Komponenten von dem Benutzer verwendet und diesem angezeigt werden, wenn der Benutzer die verschiedenen zugeordneten Schnittstellenkomponenten verwendet, umfaßt.

49. System nach Anspruch 26, umfassend:
ein Mittel zum Empfangen und Bereitstellen von Echtzeit-Versorgungsgebührendaten von einem Versorgungsdienstanbieter;
ein zum Empfangen von Echtzeit-Versorgungsgebührendaten aus dem Empfangsmittel geschaltetes Steuermittel zum Erzeugen von Steuerbefehlen für einen oder mehrere Punkte als Funktion der Versorgungsgebührendaten und vom Benutzer definierter Versorgungsgebührenbereiche;
ein Mittel zum Bestimmen, ob Echtzeit-Versorgungsgebührendaten von dem Versorgungsdienstanbieter verfügbar sind; und
eine an das Bestimmungsmittel angekoppelte Benutzerschnittstelle zum Warnen des Benutzers, wenn die Echtzeit-Versorgungsgebührendaten laut einer Zeitgrenze verspätet sind;
ein Mittel zum Verwenden von Vorgabegebühren zur Erzeugung von Befehlen zur Steuerung des einen bzw. der mehreren Punkte, wenn keine aktuellen Echtzeit-Versorgungsgebührendaten verfügbar sind.

50. System nach einem der Ansprüche 26 bis 49, mit einem Berichtssystem, einer Datenbank zum Speichern von Informationen bezüglich eines Echtzeit-Preisgebungssteuersystems, wobei das Steuermittel ein Mittel zum Ablegen von Vorgeschichtedaten bezüglich des Betriebs des Echtzeit-Preisgebungssteuersystems in der Datenbank, einschließlich mindestens Energienutzungsdaten, Energieersparnisdaten und Versorgungsgebührendaten, umfaßt und das Berichtssystem weiterhin folgendes umfaßt:
ein Mittel zum Erzeugen mehrerer Berichte, die zusammengefaßte Vergleichsdaten bezüglich der erzeugten Befehle unter Verwendung einer Instanz der Vorgeschichtedaten enthalten; und
ein Mittel zum Anzeigen eines oder mehrerer der mehreren Berichte.

51. System nach Anspruch 50, wobei das Erzeugungsmittel einen Tabellengenerator enthält, der von dem Erzeugungsmittel beim Erzeugen der mehreren Berichte verwendet werden soll, wobei das Tabellenerzeugungsmittel ein Mittel zum Durchführen einer Auswertung der Vorgeschichtedaten und zum Ablegen gewünschter Ergebnisse in mindestens einer Tabelle enthält.

52. System nach Anspruch 50, wobei das Anzeigemittel ein Mittel zum Anzeigen von mindestens zwei Berichten enthält, die sich der Benutzer anschauen kann.

53. System nach Anspruch 50, wobei die Berichte es dem Benutzer ermöglichen, graphisch Energienutzungsdaten, Energieersparnisdaten und Versorgungsgebührendaten zu vergleichen.

54. System nach Anspruch 50, wobei der erzeugte Bericht Daten in Bezug auf den prozentualen Zeitanteil, für den sich ein Punkt in einem Energieersparniszustand befindet, enthält.

## Revendications

1. Procédé de contrôle de tarification en temps réel destiné à être utilisé dans la commande d'un ou de plusieurs points à un ou plusieurs sites, le procédé comprenant les étapes de :
détermination si des informations de tarifs d'électricité en temps réel courantes sont disponibles à partir du composant de mémorisation de tarifs d'électricité, et utilisation de tarifs par défaut pour générer des commandes pour contrôler le ou les plusieurs points si des données de tarifs d'électricité en temps réel courantes ne sont pas disponibles, recevant autrement des données de tarifs d'électricité en temps réel courantes ;
définition d'au moins un composant ponctuel, l'au moins un composant ponctuel comportant un ou plusieurs points ;
définition d'économies d'énergie pour chaque point de l'au moins un composant ponctuel ;
spécification d'une stratégie de contrôle pour chaque composant ponctuel basée sur au moins deux échelles de tarifs d'électricité ;
génération d'une commande pour chaque point de l'au moins un composant ponctuel en fonction de la stratégie de contrôle spécifiée et des données de tarifs d'électricité en temps réel courantes ou par défaut ; et
notification d'un utilisateur si les données de tarifs d'électricité en temps réel sont en retard.

2. Procédé selon la revendication 1, dans lequel l'étape de définition comporte l'étape de groupement de plus d'un point afin de former le composant ponctuel.

3. Procédé selon la revendication 2, dans lequel l'étape de groupement comporte la formation d'un groupe de points de type semblable.

4. Procédé selon la revendication 2, dans lequel l'étape de groupement comporte la formation d'un groupe de points à un site particulier.

5. Procédé selon la revendication 1, dans lequel les points de l'au moins un composant ponctuel comportent l'un de points numériques, de points numériques multi-étages et de points analogiques.

6. Procédé selon la revendication 5, dans lequel l'étape de spécification comporte l'étape de définition d'un niveau d'économies d'énergie pour chaque point du composant ponctuel.

7. Procédé selon la revendication 5, dans lequel l'étape de spécification comporte la définition par l'utilisateur d'un niveau d'économies d'énergie pour chaque point du composant ponctuel avant que la stratégie de contrôle puisse être utilisée.

8. Procédé selon la revendication 1, dans lequel l'étape de définition comporte l'étape d'importation d'un ou de plusieurs points depuis un système de gestion associé exploitable pour contrôler une pluralité de points.

9. Procédé selon la revendication 8, dans lequel le procédé comporte en outre l'étape de recherche de la pluralité de points dans le système de gestion associé.

10. Procédé selon la revendication 9, dans lequel l'étape de recherche comporte la tenue à jour d'un point d'une liste de points correspondant à un critère de recherche et d'une liste de points correspondant aux critères de recherche mais qui n'ont pas été importés depuis le système de gestion associé.

11. Procédé selon la revendication 1, dans lequel le procédé comporte en outre la surveillance d'un ou de plusieurs points.

12. Procédé selon la revendication 1, dans lequel l'étape de spécification comporte les étapes de :
définition d'une pluralité d'échelles de tarifs d'électricité pour la stratégie de contrôle ; et
spécification d'une commande ponctuelle pour chacune de la pluralité définie d'échelles de tarifs d'électricité.

13. Procédé selon la revendication 12, dans lequel l'étape de spécification comporte en outre l'étape de définition de critères supplémentaires pour la stratégie de contrôle, et dans lequel en outre l'étape de spécification de commande ponctuelle comporte la spécification de commandes ponctuelles pour chacune de la pluralité définie d'échelles de tarifs d'électricité selon que les critères supplémentaires sont satisfaits ou non.

14. Procédé selon la revendication 13, dans lequel les critères supplémentaires comportent l'un d'un programme d'occupation et d'une condition ponctuelle.

15. Procédé selon la revendication 14, dans lequel la condition ponctuelle comporte l'une d'une valeur de capteur et d'une valeur ponctuelle contrôlable.

16. Procédé selon la revendication 1, dans lequel l'étape de génération comporte l'étape d'utilisation de tarifs par défaut pour générer une commande pour chaque point de l'au moins un composant ponctuel en fonction de la stratégie de contrôle spécifiée pour l'au moins un composant ponctuel.

17. Procédé selon la revendication 16, dans lequel les tarifs par défaut sont des tarifs par défaut modifiables.

18. Procédé selon la revendication 16, dans lequel différents tarifs par défaut peuvent être définis pour chacune d'une pluralité de périodes de temps de tarifs par défaut.

19. Procédé selon la revendication 1, dans lequel l'étape de génération pour générer une commande pour chaque point d'un composant ponctuel comportant un groupe de points comporte les étapes de :
exécution de la stratégie de contrôle pour un premier point du groupe de points produisant une commande pour le premier point ; et
réitération de la même commande pour les points restants du groupe de points.

20. Procédé selon la revendication 1, comprenant les étapes de :
réception de données de tarifs d'électricité en temps réel ;
définition de chaque au moins un composant ponctuel comportant un ou plusieurs points, les un ou plusieurs points du composant ponctuel comportant l'un de points numériques, de points numériques multi-étages et de points analogiques ;
spécification d'une stratégie de contrôle pour l'au moins un composant ponctuel basée sur au moins deux échelles de tarifs d'électricité ;
génération d'une commande pour chaque point de l'au moins un composant ponctuel en fonction de la stratégie de contrôle spécifiée ;
dans lequel l'étape de spécification comporte l'étape de définition d'un niveau d'économies d'énergie pour l'au moins un composant ponctuel, les économies d'énergie étant calculées pour chaque point du composant ponctuel chaque fois que la stratégie de contrôle de chaque point est utilisée afin de créer une commande ponctuelle ; et
dans lequel l'étape de définition du niveau d'économies d'énergie pour un composant ponctuel comportant au moins un point analogique comporte les étapes de spécification d'un tarif d'économies d'énergie pour chaque point du composant ponctuel, et de spécification d'un niveau de commande d'absence d'économies d'énergie et d'un niveau de commande d'économies d'énergie maximales pour définir une gamme de commandes où aucune énergie n'est économisée, une gamme de commandes où une énergie maximale est économisée et une gamme de commandes entre le niveau de commande d'absence d'économies d'énergie et le niveau de commande d'économies d'énergie maximales où des économies d'énergie interpolées sont déterminées.

21. Procédé selon la revendication 20, dans lequel l'étape de spécification comporte la définition par un utilisateur d'un niveau d'économies d'énergie pour l'au moins un composant ponctuel avant que la stratégie de contrôle puisse être utilisée.

22. Procédé selon la revendication 20, dans lequel l'étape de définition d'économies d'énergie pour un composant ponctuel comportant au moins l'un d'un point numérique et d'un point numérique multi-étages comporte les étapes de :
spécification d'une valeur d'économies d'énergie pour chaque point du composant ponctuel ; et
spécification d'au moins un état pouvant être commandé pour le composant ponctuel où de l'énergie est économisée.

23. Procédé selon la revendication 20, dans lequel le calcul des économies d'énergie pour chaque point numérique ou point numérique multi-étages comporte les étapes de :
détermination si une commande ponctuelle générée pour le point est à l'au moins un état pouvant être commandé du point où de l'énergie est économisée ; et
génération d'économies d'énergie pour le point en fonction de la valeur d'économies d'énergie pour le point et de l'heure où le point est à l'au moins un état pouvant être commandé où de l'énergie est économisée.

24. Procédé selon la revendication 1, comprenant les étapes de :
réception de données de tarifs d'électricité en temps réel ;
définition d'au moins un composant ponctuel comportant un ou plusieurs points, les un ou plusieurs points du composant ponctuel comportant l'un de points numériques, de points numériques multi-étages ou de points analogiques ;
spécification d'une stratégie de contrôle pour l'au moins un composant ponctuel basée sur au moins deux échelles de tarifs d'électricité ;
génération d'une commande pour chaque point de l'au moins un composant ponctuel en fonction de la stratégie de contrôle spécifiée ;
dans lequel ladite étape de spécification comporte en outre l'étape de définition d'un niveau d'économies d'énergie pour l'au moins un composant ponctuel, les économies d'énergie étant calculées pour chaque point du composant ponctuel chaque fois que la stratégie de contrôle de chaque point est utilisée afin de créer une commande ponctuelle ; et
dans lequel le calcul des économies d'énergie pour chaque point analogique comporte les étapes de détermination si une commande ponctuelle générée pour le point se trouve dans la gamme où une énergie maximale est économisée et de génération d'économies d'énergie pour le point en fonction de la valeur d'économies d'énergie et de l'heure où la commande ponctuelle se trouve dans la gamme où une énergie maximale est économisée, de détermination si une commande ponctuelle générée pour le point se trouve dans la gamme où aucune énergie n'est économisée et générant des économies d'énergie nulles pour le point, et d'interpolation d'un pourcentage d'économies d'énergie si la commande ponctuelle tombe dans la gamme entre le niveau de commande d'absence d'économies d'énergie et le niveau de commande d'économies d'énergie maximales et de génération d'économies d'énergie en fonction du pourcentage d'économies d'énergie, de la valeur d'économies d'énergie et de l'heure à laquelle la commande ponctuelle se trouve entre le niveau de commande d'absence d'économies d'énergie et le niveau de commande d'économies d'énergie maximales.

25. Procédé selon la revendication 20, comprenant les étapes de :
réception de données de tarifs d'électricité en temps réel ;
spécification d'une stratégie de contrôle basée sur au moins deux échelles de tarifs d'électricité ;
spécification d'une gamme de commandes dans laquelle aucune énergie n'est économisée ;
spécification d'une gamme de commandes dans laquelle une énergie maximale est économisée ;
définition d'une gamme de commandes entre un niveau d'absence d'économies d'énergie et un niveau d'économies d'énergie maximales pour laquelle des économies d'énergie interpolées sont déterminées ;
spécification d'un niveau d'énergie pour un point ; et calcul d'économies d'énergie quand la stratégie de contrôle est utilisée ;
génération d'une commande de contrôle basée sur la stratégie de contrôle.

26. Système de contrôle de tarification en temps réel. (50) pour commander un ou plusieurs points (26 à 29, 46) d'un ou de plusieurs sites en fonction de données de tarifs d'électricité en temps réel fournies par un compagnie d'électricité (14), le système de contrôle comprenant :
- un composant de mémorisation de tarifs d'électricité (52) ;
- un moyen de contrôle (56) pour générer des commandes pour contrôler le ou les plusieurs points en fonction des données d'électricité en temps réel, le moyen de contrôle permettant à un utilisateur de définir des échelles de tarifs d'électricité et un niveau d'économies d'énergie pour le ou les plusieurs points, comportant en outre un moyen pour demander des données de tarifs d'électricité à partir du composant de mémorisation de tarifs d'électricité (52) ;
- une interface de tarifs d'électricité (51, 53) pour recevoir des données de tarifs d'électricité en temps réel depuis la compagnie d'électricité (14), l'interface de tarifs d'électricité comportant un moyen pour déposer de telles données de tarifs d'électricité dans le composant de mémorisation de tarifs d'électricité (52) et un moyen (53) pour fournir des données de tarifs d'électricité au moyen de contrôle (56) à la demande de celui-ci,
le système de contrôle étant en outre **caractérisé en ce que**
- le moyen de contrôle comporte un moyen pour déterminer si des données de tarifs d'électricité en temps réel courantes sont disponibles à partir du composant de mémorisation de tarifs d'électricité (52), et un moyen pour utiliser des tarifs par défaut pour générer des commandes de contrôle du ou des plusieurs points si des données de tarifs d'électricité en temps réel courantes ne sont pas disponibles ; et
- un moyen d'interface d'utilisateur est fourni, couplé à l'interface de tarifs d'électricité, pour aviser un utilisateur si les données de tarifs en temps réel sont en retard.

27. Système selon la revendication 26, dans lequel le moyen de contrôle comporte un moyen pour importer le ou les plusieurs points du ou des plusieurs sites à partir d'un système de gestion associé, le système comportant en outre une interface de communications pour communiquer avec le système de gestion associé.

28. Système selon la revendication 27, dans lequel l'interface de communications comporte :
un moyen pour recevoir une pluralité de demandes de service depuis le moyen de contrôle pour envoyer ou demander des informations au système de gestion associé ;
un moyen pour exécuter chacune des demandes de service ; et
un moyen pour fournir des résultats de l'exécution de chaque demande de service au moyen de contrôle.

29. Système selon la revendication 26, dans lequel l'interface de communications est une interface OLE.

30. Système selon la revendication 26, dans lequel le moyen de contrôle comporte en outre :
un moyen pour déterminer si des informations de tarifs d'électricité en temps réel courantes sont disponibles depuis le composant de mémorisation de tarifs d'électricité ; et
un moyen pour utiliser des tarifs par défaut pour générer des commandes pour contrôler le ou les plusieurs points si des données de tarifs d'électricité en temps réel courantes ne sont pas disponibles.

31. Système selon la revendication 30, comportant en outre un moyen d'interface d'utilisateur pour notifier un utilisateur que les données de tarifs d'électricité en temps réel sont en retard.

32. Système selon la revendication 30, comportant en outre un moyen d'interface d'utilisateur pour permettre à un utilisateur de définir différents tarifs par défaut pour chacune d'une pluralité de périodes de temps.

33. Système selon la revendication 32, dans lequel le moyen d'interface d'utilisateur comporte en outre un moyen pour permettre à l'utilisateur d'éditer les données de tarifs par défaut.

34. Système selon la revendication 26, dans lequel l'interface de tarifs d'électricité est une interface OLE.

35. Système selon la revendication 26, comprenant :
un moyen de contrôle pour générer des commandes pour une pluralité de points d'au moins un composant ponctuel en fonction d'une stratégie de contrôle spécifiée unique pour chacun de l'au moins un composant ponctuel et de données de tarifs d'électricité en temps réel courantes;
un moyen d'interface d'utilisateur pour permettre à un utilisateur de définir la stratégie de contrôle unique, dans lequel le moyen d'interface d'utilisateur comporte :
un moyen pour permettre à l'utilisateur de définir une pluralité d'échelles de tarifs d'électricité pour la stratégie de contrôle ;
un moyen pour permettre à l'utilisateur de définir une commande ponctuelle correspondant à chacune des échelles d'électricité ; et
dans lequel le moyen de contrôle comporte un moyen pour comparer les données de tarifs d'électricité en temps réel courantes à la pluralité d'échelles de tarifs d'électricité de la stratégie de contrôle pour le composant ponctuel et pour sélectionner une commande ponctuelle pour chaque point du composant ponctuel en fonction d'une telle comparaison ;
dans lequel l'interface d'utilisateur comporte un moyen pour permettre à l'utilisateur de spécifier une limite de temps quand des tarifs d'électricité en temps réel sont attendus d'un service d'électricité, le moyen de contrôle comportant un moyen pour notifier l'utilisateur si de tels tarifs d'électricité sont en retard.

36. Système selon la revendication 35, dans lequel l'interface d'utilisateur comporte un moyen pour permettre à l'utilisateur de grouper plus d'un point en vue de former le composant ponctuel.

37. Système selon la revendication 35, dans lequel l'interface d'utilisateur comporte un moyen pour définir des stratégies de contrôle pour au moins un composant ponctuel qui comporte l'un de points numériques, de points numériques multi-étages et de points analogiques.

38. Système selon la revendication 35, dans lequel l'interface d'utilisateur comporte un moyen pour permettre à l'utilisateur de définir des économies d'énergie pour chaque point du composant ponctuel.

39. Système selon la revendication 35, dans lequel l'interface d'utilisateur comporte un moyen pour permettre à l'utilisateur d'importer la pluralité de points depuis un système de gestion associé exploitable pour commander une pluralité de points.

40. Système selon la revendication 39, dans lequel l'interface d'utilisateur comporte un moyen pour rechercher la pluralité de points dans le système de gestion associé.

41. Système selon la revendication 40, dans lequel le moyen de recherche comporte un moyen pour tenir à jour un point d'une liste de points correspondant à un critère de recherche et une liste de points correspondant aux critères de recherche mais qui n'ont pas été importés depuis le système de gestion associé.

42. Système selon la revendication 35, dans lequel l'interface d'utilisateur comporte un moyen pour permettre à l'utilisateur de sélectionner un ou plusieurs points à surveiller.

43. Système selon la revendication 35, dans lequel l'interface d'utilisateur comporte un moyen pour permettre à l'utilisateur de définir des critères supplémentaires pour la stratégie de contrôle, et spécifier en outre des commandes ponctuelles pour chacune de la pluralité d'échelles de tarifs d'électricité selon que les critères supplémentaires sont satisfaits ou non.

44. Système selon la revendication 35, dans lequel l'interface d'utilisateur comporte un moyen pour permettre à l'utilisateur de spécifier une limite de temps quand des tarifs d'électricité en temps réel sont attendus d'un service, d'électricité, le moyen de contrôle comportant un moyen pour notifier l'utilisateur si de tels tarifs d'électricité sont en retard.

45. Système selon la revendication 35, dans lequel l'interface d'utilisateur comporte un moyen pour permettre à un utilisateur de définir des tarifs par défaut pour des périodes de temps à tarifs multiples.

46. Système selon la revendication 45, dans lequel le moyen de définition de tarifs par défaut comporte un moyen pour éditer les tarifs par défaut pour chacune des multiples périodes de temps.

47. Système selon la revendication 35, dans lequel l'interface d'utilisateur comporte un moyen pour afficher automatiquement un texte d'aide d'utilisateur pour aider l'utilisateur quand ce dernier a choisi de définir une stratégie de contrôle pour un composant ponctuel.

48. Système selon la revendication 35, dans lequel le système de contrôle comporte un moyen pour mettre à jour automatiquement l'état de divers composants d'interface associés de telle sorte que des informations courantes relativement à un tel composant associé soient utilisées par et affichées à l'utilisateur quand l'utilisateur utilise les divers composants d'interface associés.

49. Système selon la revendication 26, comprenant :
un moyen pour recevoir et fournir des données de tarifs d'électricité en temps réel depuis une compagnie d'électricité ;
un moyen de contrôle, couplé en vue de recevoir des données de tarifs d'électricité en temps réel depuis le moyen de réception, pour générer des commandes de contrôle pour un ou plusieurs points en fonction des données de tarifs d'électricité et d'échelles de tarifs d'électricité définies par l'utilisateur ;
un moyen pour déterminer si les données de tarifs d'électricité en temps réel courantes sont disponibles depuis la compagnie d'électricité ; et
une interface d'utilisateur, couplée au moyen de détermination, pour avertir l'utilisateur si les données de tarifs d'électricité en temps réel sont en retard par rapport à une limite de temps ;
un moyen pour utiliser des tarifs par défaut pour générer des commandes pour contrôler les un ou plusieurs points si des données de tarifs d'électricité en temps réel courantes ne sont pas disponibles.

50. Système selon l'une quelconque des revendications 26 à 49, comprenant un système de compte-rendu, ayant une base de données pour mémoriser des informations relatives à un système de contrôle de tarification en temps réel, le moyen de contrôle comportant un moyen pour déposer des données historiques concernant le fonctionnement du système de contrôle de tarification en temps réel dans la base de données comportant au moins des données d'utilisation d'énergie, des données d'économies d'énergie, et des données de tarifs d'électricité, et le système de compte-rendu comprenant en outre :
un moyen pour générer une pluralité de rapports contenant des données comparatives résumées concernant les commandes générées utilisant un cas des données historiques ; et
un moyen pour afficher un ou plusieurs de la pluralité de rapports.

51. Système selon la revendication 50, dans lequel le moyen de génération comporte un générateur de tables destinées à être utilisées par le moyen de génération pour générer la pluralité de rapports, le moyen de génération de tables comportant un moyen pour effectuer l'évaluation des données historiques et déposer les résultats désirés dans au moins une table.

52. Système selon la revendication 50, dans lequel le moyen d'affichage comporte un moyen pour afficher au moins deux rapports destinés à être visualisés par l'utilisateur.

53. Système selon la revendication 50, dans lequel les rapports permettent à l'utilisateur de comparer graphiquement les données d'utilisation d'énergie, les données d'économies d'énergie et les données de tarifs d'électricité.

54. Système selon la revendication 50, dans lequel le rapport généré comporte des données concernant le pourcentage de temps durant lequel un point se trouve en état d'économies d'énergie.
